# EUROPÄISCHE PATENTSCHRIFT

(11) **EP 1 958 999 B1**
(45) Veröffentlichungstag und Bekanntmachung des Hinweises auf die Patenterteilung: **11.07.2012**
(21) Anmeldenummer: 07023045.3
(22) Anmeldetag: 28.11.2007
(51) Int. Cl.: C09K 19/12, C09K 19/30, C09K 19/32, C09K 19/42

(54) **Flüssigkristallines Medium**
Liquid crystalline medium
Milieu cristallin liquide

(30) Priorität: 13.02.2007 DE 102007007609
(43) Veröffentlichungstag der Anmeldung: 20.08.2008
(73) Patentinhaber: Merck Patent GmbH, 64293 Darmstadt (DE)
(72) Erfinder: Klasen-Memmer, Melanie, Dr., 67259 Heuchelheim (DE); Bremer, Matthias, Dr., 64295 Darmstadt (DE)

(56) Entgegenhaltungen:
- EP-A- 0 969 071
- EP-A- 1 876 214
- WO-A-03/010120
- WO-A-2008/009417
- DE-A1- 3 906 040
- DE-A1- 19 927 627
- JP-A- 2005 298 733
- US-A1- 2006 118 764
- US-A1- 2006 198 967
- US-A1- 2006 198 968

## Beschreibung

Die Erfindung betrifft ein flüssigkristallines Medium mit negativer dielektrischer Anisotropie auf der Basis eines Gemisches von polaren Verbindungen, welches mindestens eine Verbindung der Formel IA, 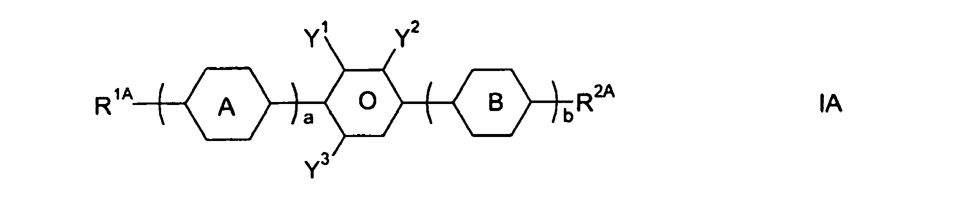 wobei der Anteil an Verbindungen der Formel IA im Gesamtgemisch ≥ 15 Gew.% beträgt,
und mindestens eine Verbindung ausgewählt aus der Gruppe der Verbindungen der Formeln IB, IC und ID, 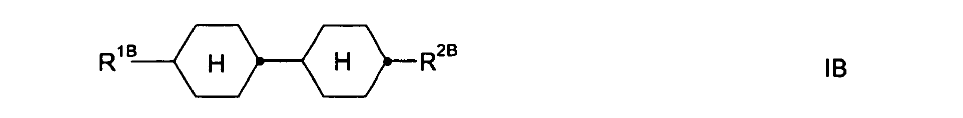 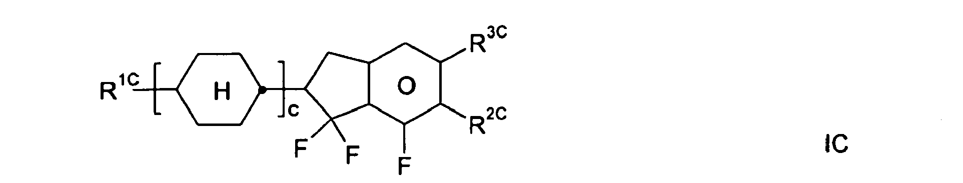 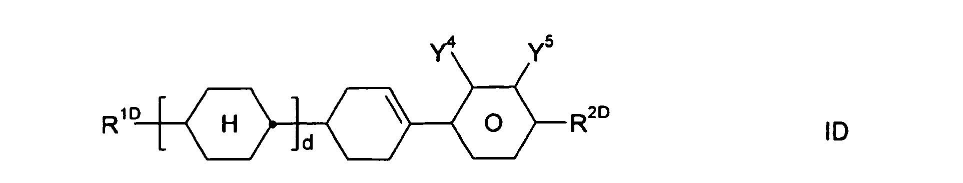 worin
- R^{1A}: CH₃CH=CH, C₂H₅CH=CH, C₃H₇CH=CH, CH₂=CHC₂H₄, CH₃CH=CHC₂H₄, CH₂=CHCH₂, CH₃CH=CHCH₂ oder C₂H₅CH=CHCH₂,
- R^{1B}: jeweils unabhängig voneinander einen unsubstituierten, einen einfach durch CN oder CF₃ oder mindestens einfach durch Halogen substituierten Alkenylrest mit bis zu 6 C-Atomen, wobei in diesen Resten auch eine oder mehrere CH₂-Gruppen durch -O-, -S-, 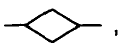 -C≡C-, -CF₂O-, -OCF₂-, -OC-O- oder -O-CO- so ersetzt sein können, dass O-Atome nicht direkt miteinander verknüpft sind,
- R^{2A}, R^{2B}, R^{1C}, R^{1D} und R^{2D}: jeweils unabhängig voneinander einen unsubstituierten, einen einfach durch CN oder CF₃ oder mindestens einfach durch Halogen substituierten Alkyl- oder Alkenylrest mit bis zu 6 C-Atomen, wobei in diesen Resten auch eine oder mehrere CH₂-Gruppen durch -O-, -S-, 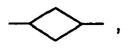 -C≡C-, -CF₂O-, -OCF₂-, -OC-O- oder -O-CO- so ersetzt sein können, dass O-Atome nicht direkt miteinander verknüpft sind, 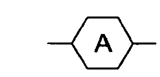 und 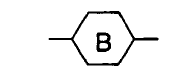 jeweils unabhängig voneinander 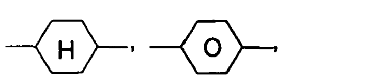 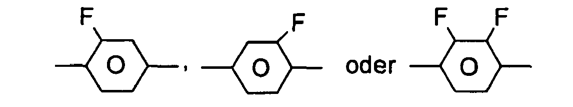
- Y¹, Y², Y⁴ und Y⁵: jeweils unabhängig voneinander F, Cl, CF₃, CHF₂, CH₂F, OCF₃, OCH₂F, OCHF₂ oder CN,
- Y³: H oder CH₃,
- R^{2C}: H oder F,
- R^{3C}: H, CH₃, C₂H₅ oder n-C₃H₇,
- a und b: jeweils unabhängig voneinander 0, 1 oder 2, wobei a+b ≥ 1 ist,
- c: 1 oder 2, und
- d: 0 oder 1
bedeuten,
enthält.

Derartige Medien sind insbesondere für elektrooptische Anzeigen mit einer Aktivmatrix-Adressierung basierend auf dem ECB-Effekt sowie für IPS-Anzeigen (In plane switching) oder FFS-Anzeigen (Fringe Field Switching) zu verwenden. Vorzugsweise besitzt das erfindungsgemäße Medium eine negative dielektrische Anisotropie.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homeotrope Randorientierung auf (VA-Technologie = Vertical Aligned). Auch bei Anzeigen, die den sogenannten IPS- oder FFS-Effekt verwenden, können dielektrisch negative Flüssigkristallmedien zum Einsatz kommen.

Anzeigen, die den ECB-Effekt verwenden, haben sich als sogenannte VAN- (Vertically Aligned Nematic) Anzeigen beispielsweise in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS (In Plane Switching) (z.B.: Yeo, S.D., Vortrag 15.3: "A LC Display for the TV Application", SID 2004 International Symposium, Digest of Technical Papers, XXXV, Buch II, S. 758 & 759) den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, lan, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitem wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher bekannten TFT-Anzeigen arbeiten üblicherweise als TN-Zellen mit gekreuzten Polaristoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil-oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der

Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen. Derartige Anzeigen enthalten beispielsweise nematische Flüssigkristallmischungen, wie sie in JP 2005-298733 A, US 2006/198967 A1, EP-A-1 876 214, WO 2008/009417 A, US 2006/118764 A1 und US 2006/198968 A1 beschrieben sind.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Der Erfindung liegt die Aufgabe zugrunde MFK-Anzeigen, insbesondere für Monitor- und TV-Anwendungen, welche auf dem ECB- oder auf dem IPS-Effekt beruhen, bereitzustellen, die die oben angegebenen Nachteile nicht oder nur in geringerem Maße und gleichzeitig sehr hohe spezifische Widerstände aufweisen. Insbesondere muss für Monitore und Fernseher gewährleistet sein, dass diese auch bei extrem hohen und extrem niedrigen Temperaturen arbeiten.

Überraschenderweise wurde nun gefunden, dass diese Aufgabe gelöst werden kann, wenn man in diesen Anzeigeelementen nematische Flüssigkristallmischungen verwendet, die mindestens eine Verbindung der Formel IA und mindestens eine Verbindung aus der Gruppe der Verbindungen der Formeln IB, IC und ID enthalten. Verbindungen der Formel IA sind beispielsweise bekannt aus EP 0 969 071 B1, EP 1 362 839 A2, DE 199 27 627 A1, DE 101 57 674 A1. Verbindungen der Formel IB sind beispielsweise bekannt aus der EP 0 168 683 B1 und EP 0 122 389 B1. Die Verbindungen der Formeln IC sind beispielsweise bekannt aus der WO 03/010120. Die Verbindungen der Formel ID sind beispielsweise bekannt aus der DE 10 204 236 und DE 39 06 040.

Gegenstand der Erfindung ist somit ein flüssigkristallines Medium auf der Basis eines Gemisches von polaren Verbindungen, welches mindestens eine Verbindung der Formel IA und mindestens eine Verbindung ausgewählt aus der Gruppe der Verbindungen der Formeln IB, IC und ID enthält.

Die erfindungsgemäßen Mischungen zeigen sehr breite nematische Phasenbereiche mit Klärpunkten ≥ 70 °C, sehr günstige Werte für die kapazitive Schwelle, relativ hohe Werte für die Holding Ratio und gleichzeitig sehr gute Tieftemperaturstabilitäten bei -30 °C und -40 °C sowie sehr geringe Rotationsviskositäten und niedrige Schaltzeiten. Die erfindungsgemäßen Mischungen zeichnen sich weiterhin dadurch aus, dass zusätzlich zur Verbesserung der Rotationsviskosität γ₁ eine Erhöhung der elastischen Konstanten K₃₃ zur Verbesserung der Schaltzeiten zu beobachten ist.

Einige bevorzugte Ausführungsformen der erfindungsgemäßen Mischungen werden im folgenden genannt:
a) R^{1B} in der Formel IB bedeutet vorzugsweise Alkenyl, insbesondere Vinyl 1, E-Alkenyl oder 3E-Alkenyl, und ganz besonders bevorzugt CH₂=CH, CH₃CH=CH, C₂H₅CH=CH, C₃H₇CH=CH, CH₂=CHC₂H₄, CH₃CH=CHC₂H₄, CH₂=CHCH₂, CH₃CH=CHCH₂, C₂H₅CH=CHCH₂,
   R^{1B} bedeutet insbesondere CH₃CH=CH oder CH₂=CH.
   R^{1C}, R^{1D} und R^{2D} bedeuten vorzugsweise geradkettiges Alkyl, insbesondere CH₃, C₂H₅, n-C₃H₇, n-C₄H₉, n-C₅H₁₁, ferner n-C₆H₁₃, n-C₇H₁₅.
b) Flüssigkristallines Medium, welches ein, zwei, drei, vier oder mehr, vorzugsweise ein, zwei oder drei Verbindungen der Formel IA enthält,
c) Der Anteil an Verbindungen der Formel IB im Gesamtgemisch, sofern vorhanden, beträgt vorzugsweise ≥ 5 Gew.%, insbesondere ≥ 10 Gew.%, ganz besonders bevorzugt ≥ 20 Gew.%.
   Der Anteil an Verbindungen der Formel IC im Gesamtgemisch, sofern vorhanden, beträgt vorzugsweise ≥ 2 Gew.%, insbesondere ≥ 4 Gew.%, ganz besonders bevorzugt ≥ 5 Gew.%.
   Der Anteil an Verbindungen der Formel ID im Gesamtgemisch, sofern vorhanden, beträgt vorzugsweise ≥ 4 Gew.%, insbesondere ≥ 8 Gew.%, ganz besonders bevorzugt ≥ 10 Gew.%.
   Der Gesamtanteil der Verbindungen der Formeln IB, IC und/oder ID in der erfindungsgemäßen Mischung beträgt vorzugsweise ≥ 5 Gew.%, insbesondere ≥ 10 Gew.% und ganz besonders bevorzugt ≥ 15 Gew.%.
d) Bevorzugte Verbindungen der Formel IA sind die Verbindungen der Formeln IA-3 bis IA-10, IA-13 bis IA-20, IA-23 bis IA-30, IA-33 bis IA-42, IA-45 bis IA-54.
   Bevorzugte erfindungsgemäße Mischungen enthalten zusätzlich eine oder mehrere Verbindungen der Formeln IA-1*, IA-2*, IA-11*, IA-12*, IA-21*, IA-22*, IA-31*, IA-32*, IA-43* und IA-44*.

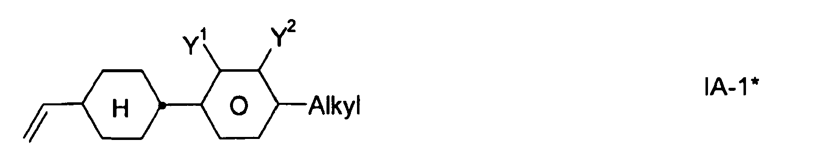

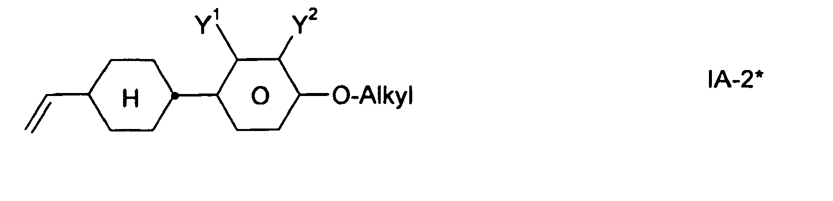

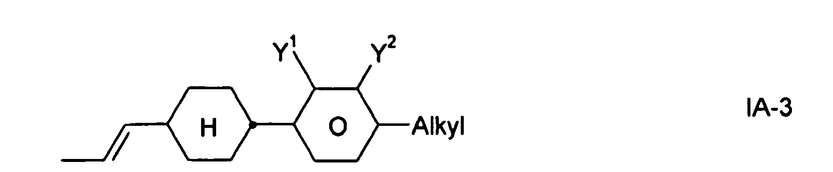

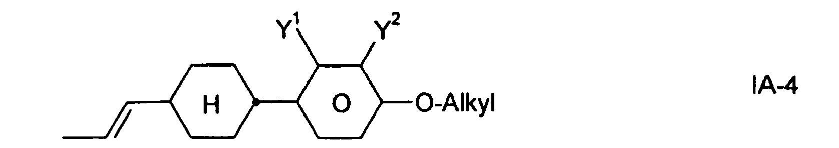

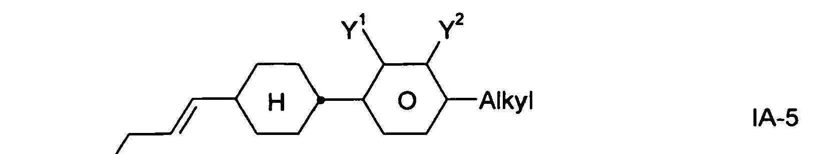

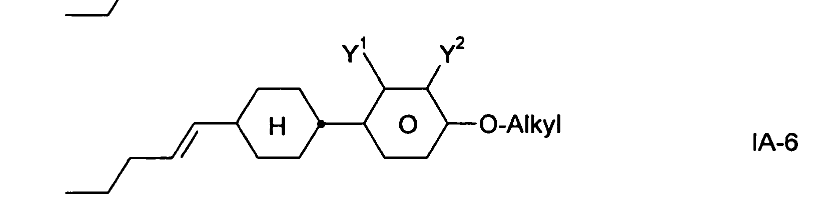

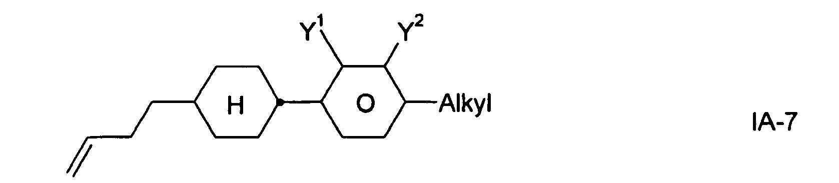

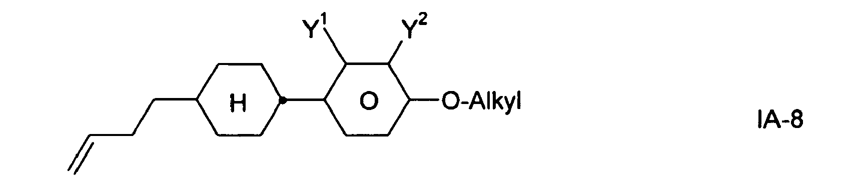

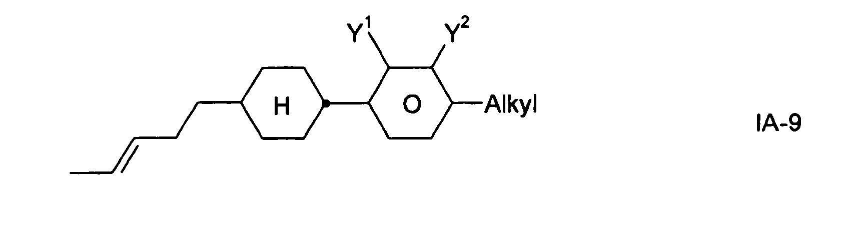

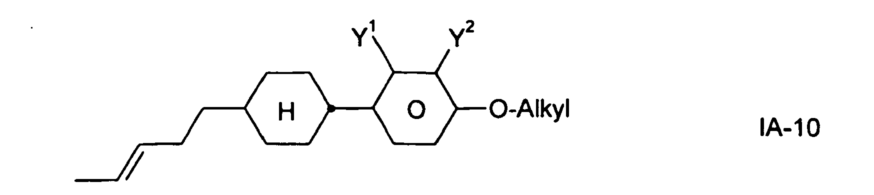

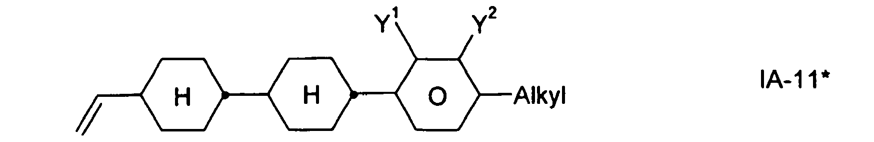

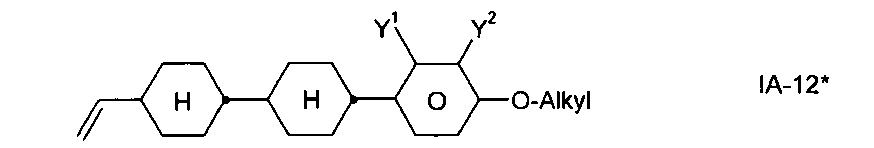

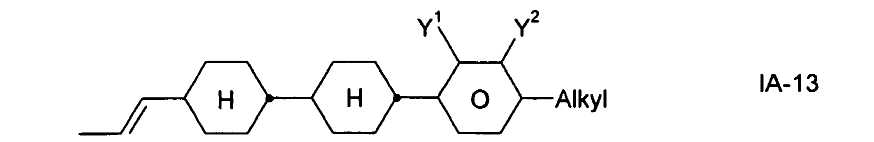

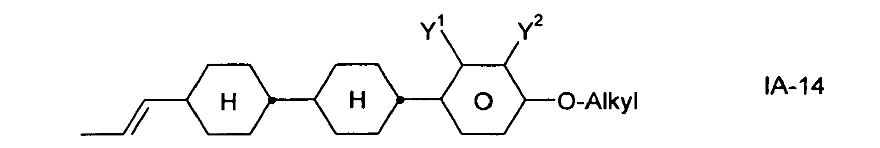

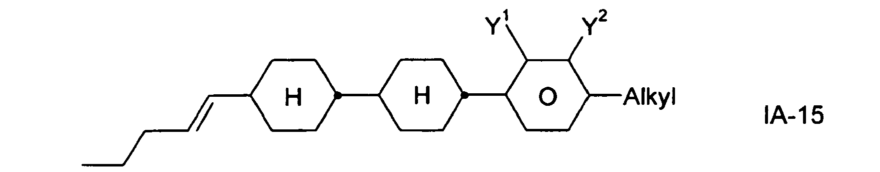

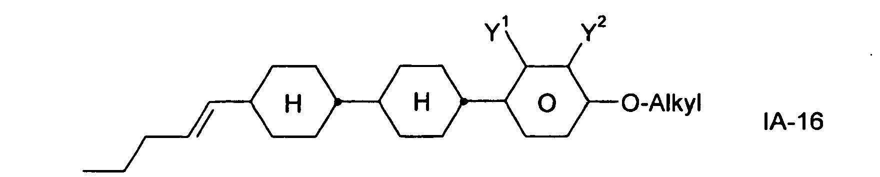

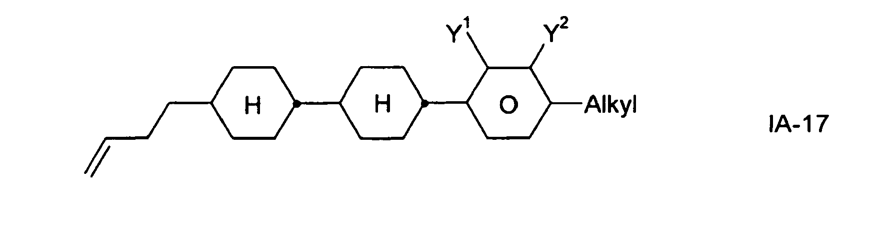

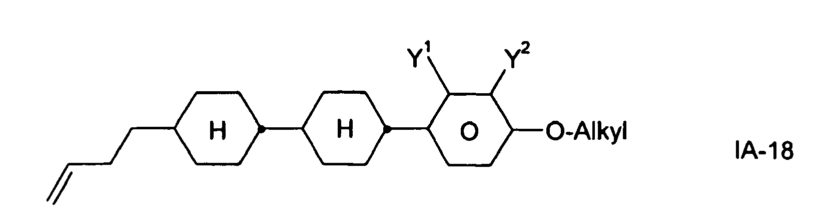

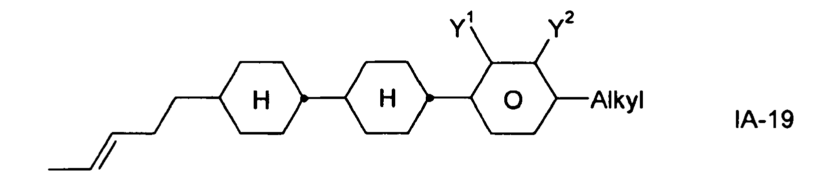

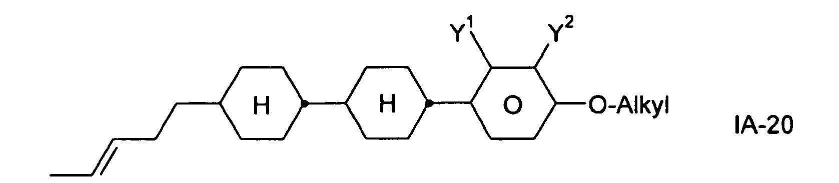

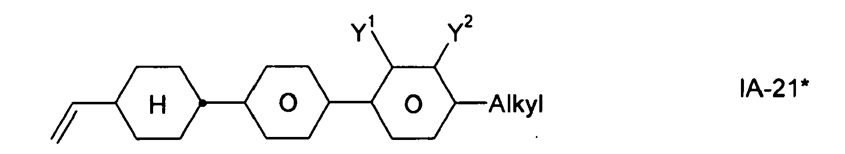

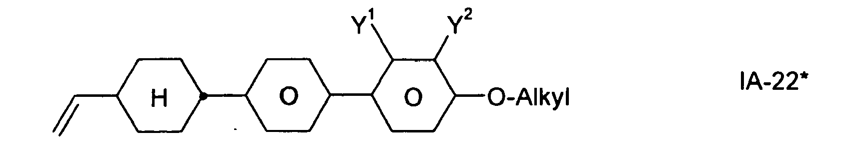

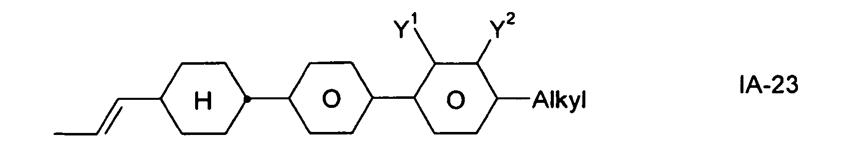

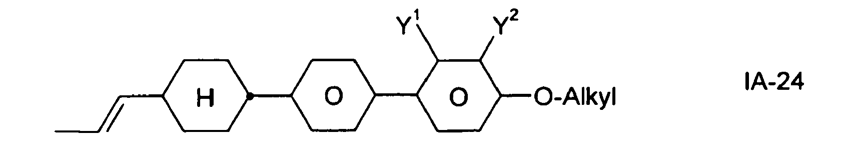

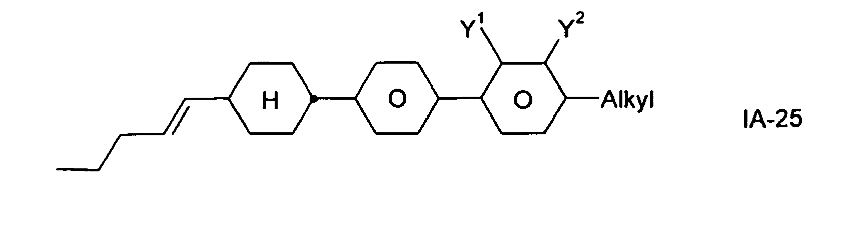

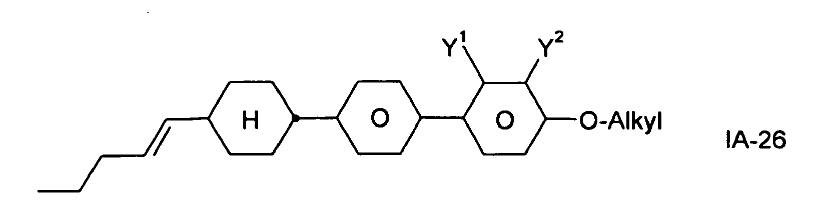

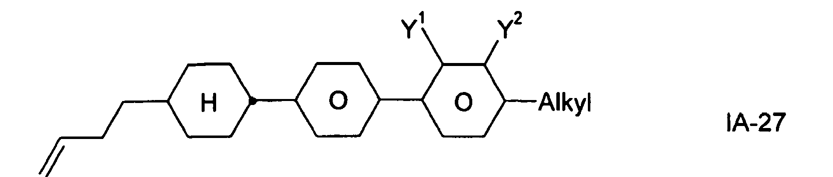

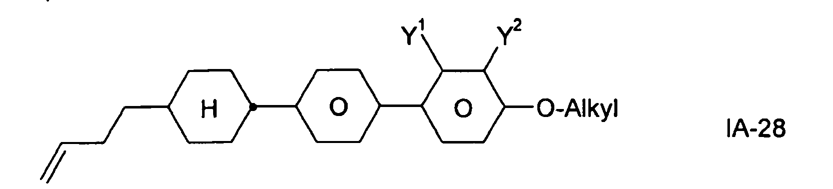

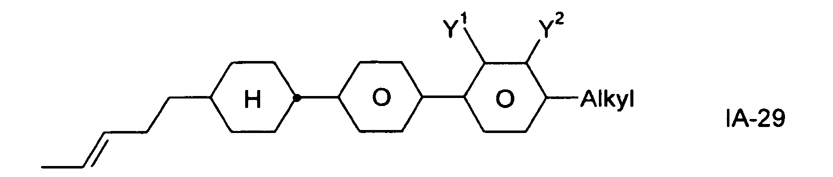

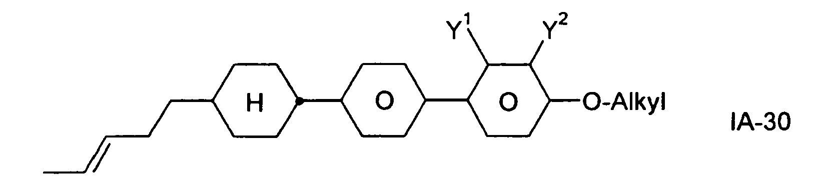

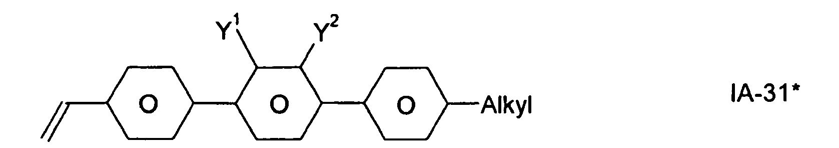

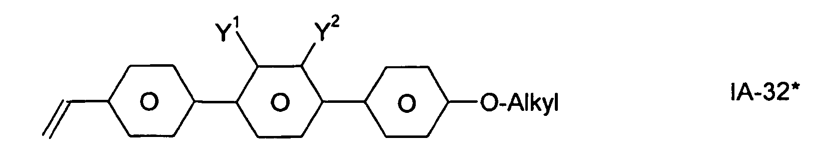

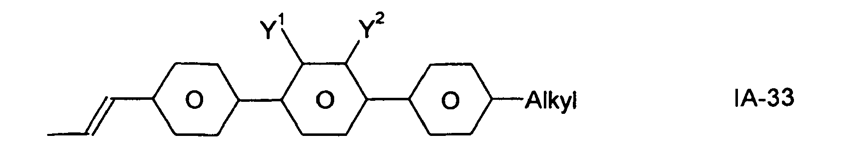

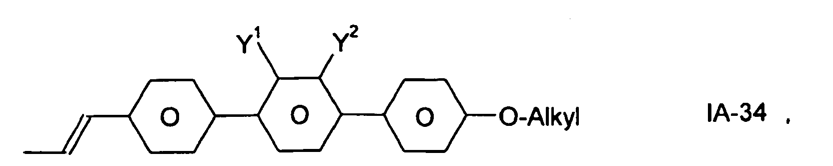

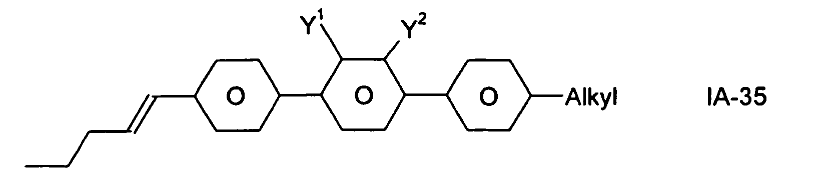

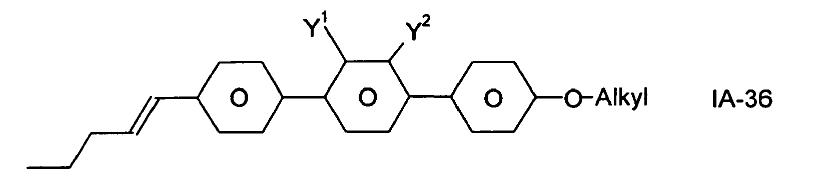

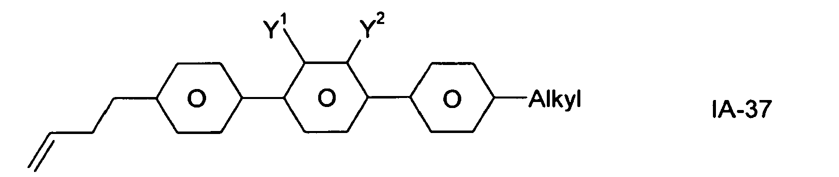

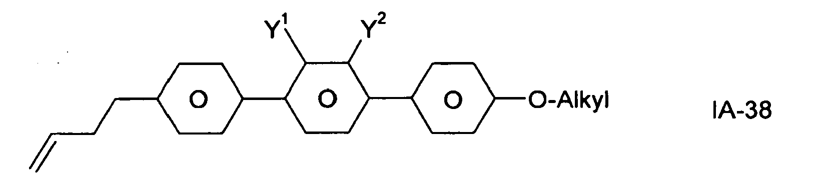

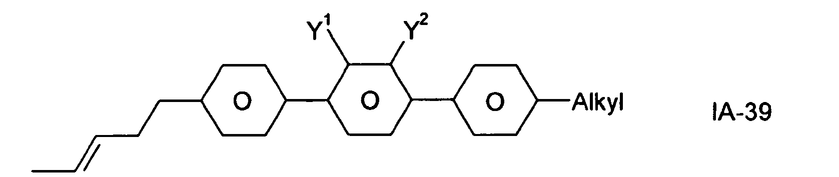

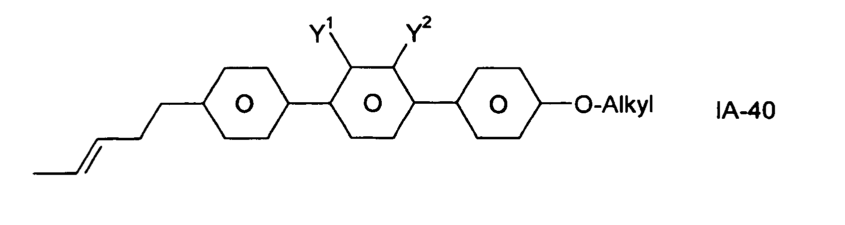

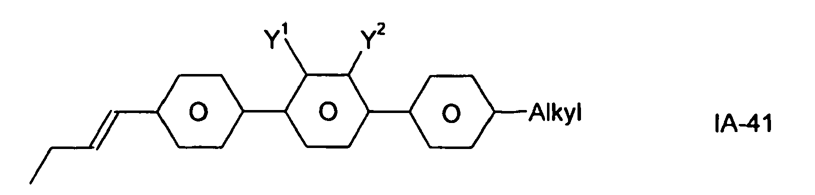

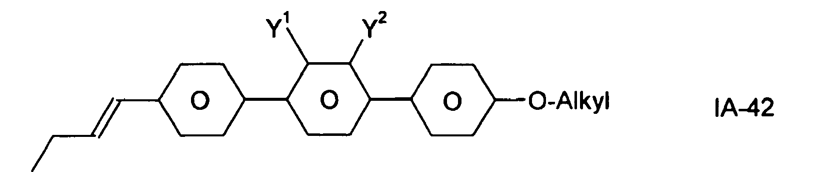

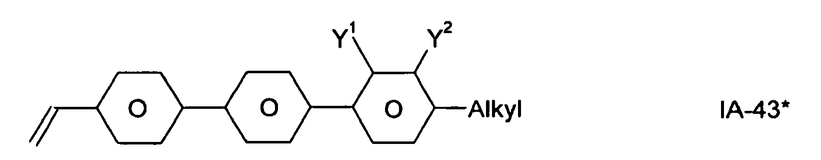

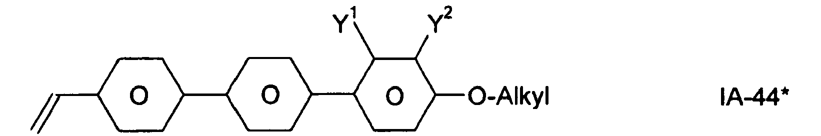

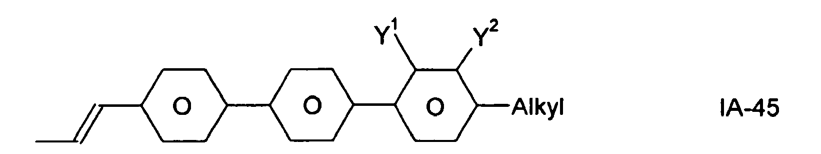

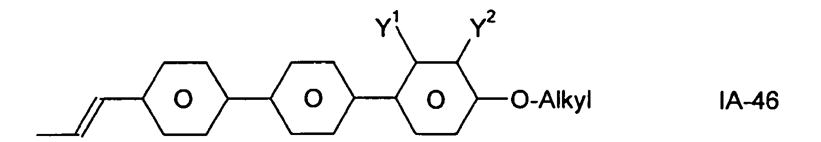

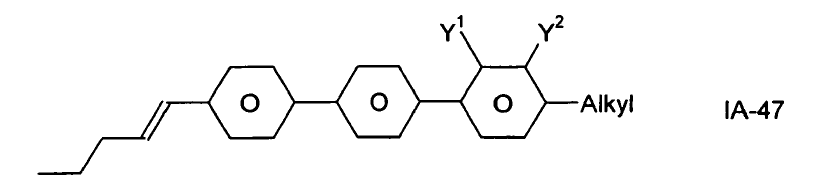

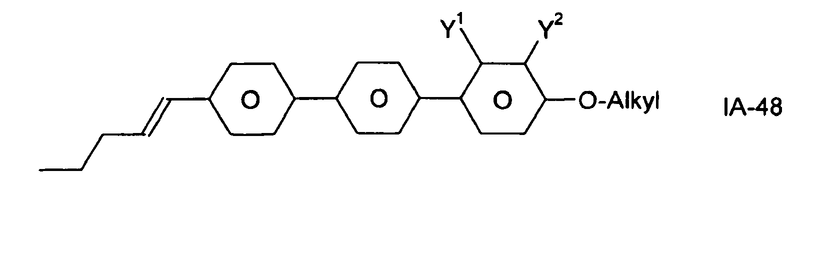

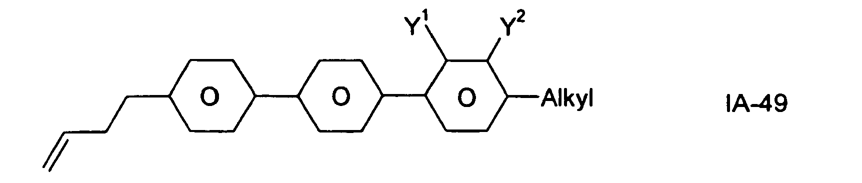

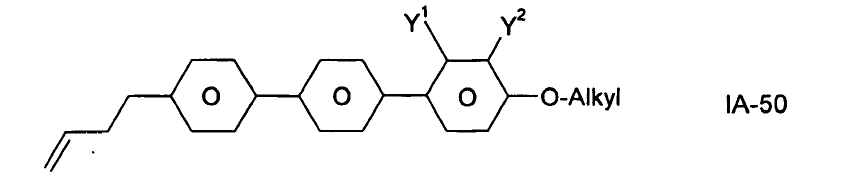

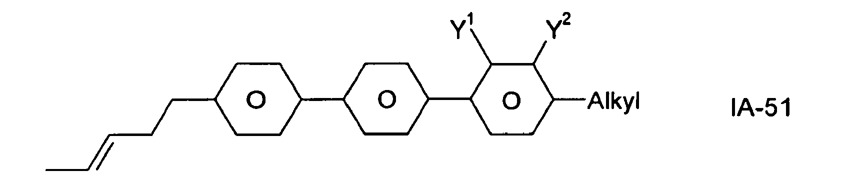

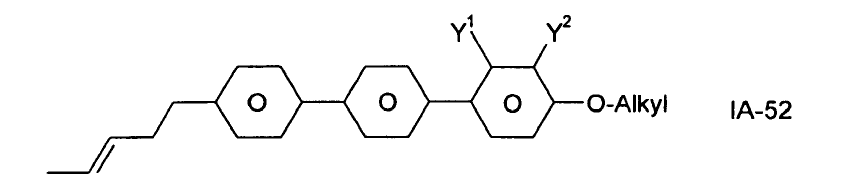

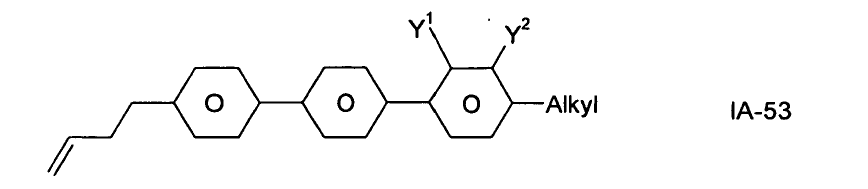

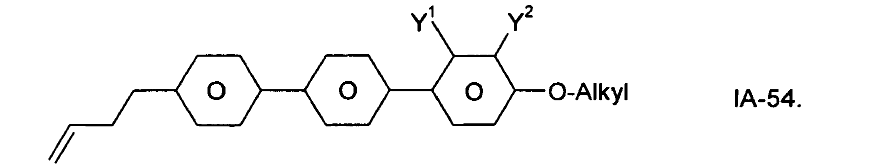

Alkyl bedeutet einen geradkettigen Alkylrest mit 1-6 C-Atomen.

Besonders bevorzugt sind die Verbindungen der Formeln IA-1*, IA-2*, IA-3, IA-4, IA-11*, IA-12*, IA-13 und IA-14.

In den Verbindungen der Formel IA und den Unterformeln der Formeln IA bedeuten Y¹ und Y² vorzugsweise beide Fluor und Y³=H.

Weiterhin bevorzugt sind die folgenden Kombinationen:
Y¹=F, Y²=Cl und Y³=H
Y¹=Cl, Y²=F und Y³=H

Bevorzugte Verbindungen der Formel IB sind die Verbindungen der Formeln IB-1 bis IB-16:

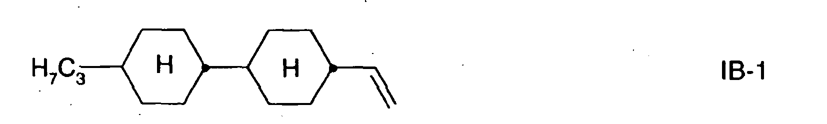

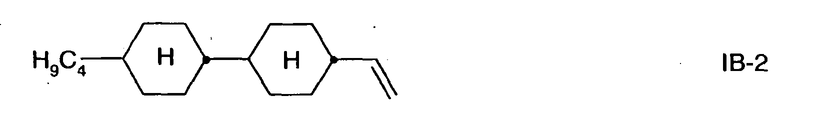

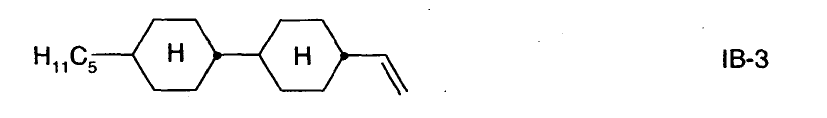

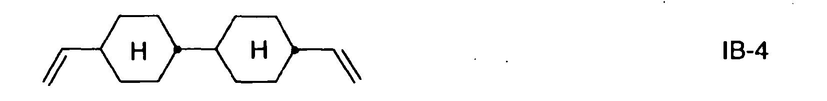

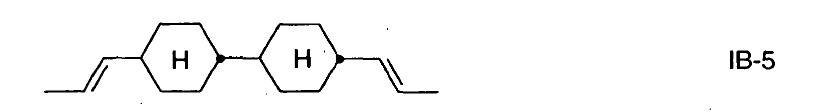

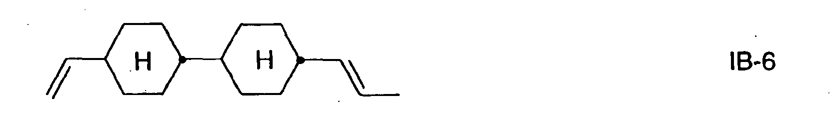

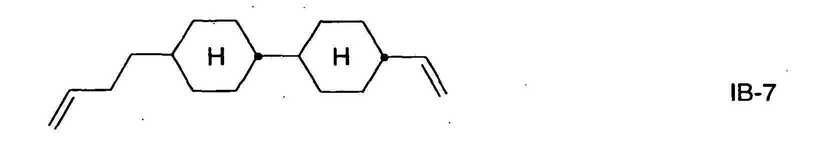

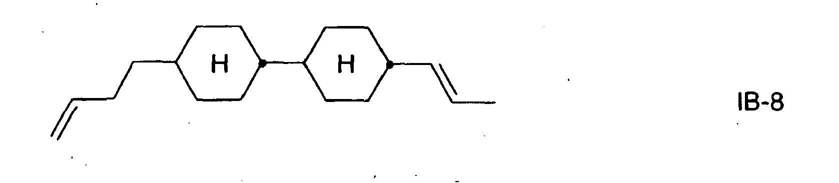

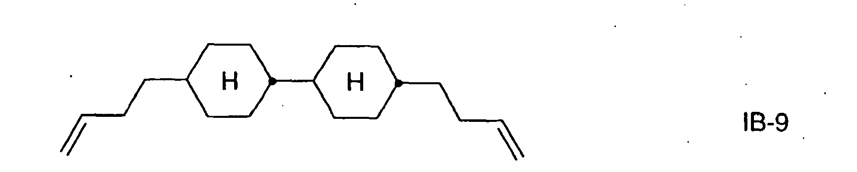

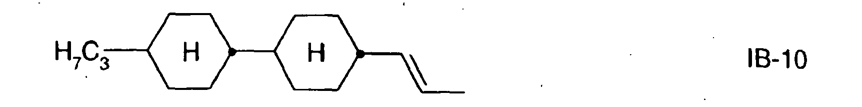

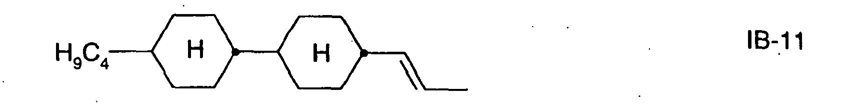

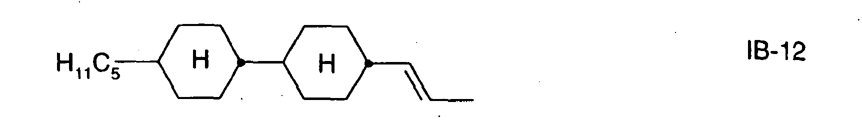

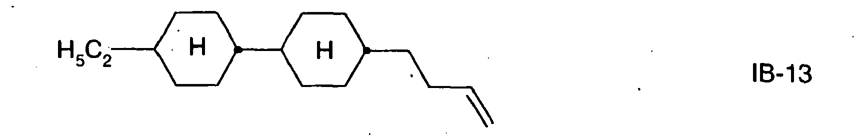

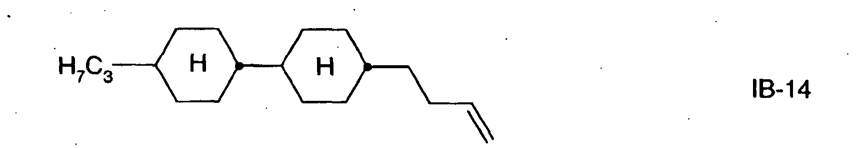

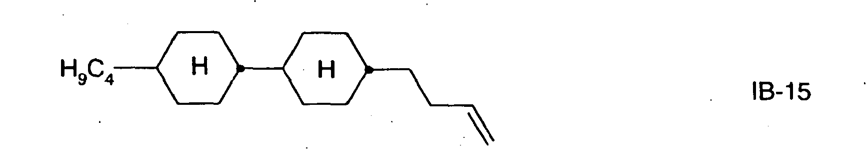

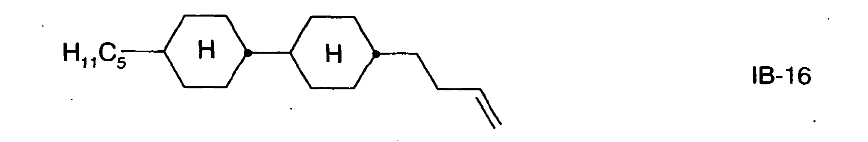

Bevorzugte Verbindungen der Formeln IC sind die Verbindungen der Formeln IC-1 bis IC-16: 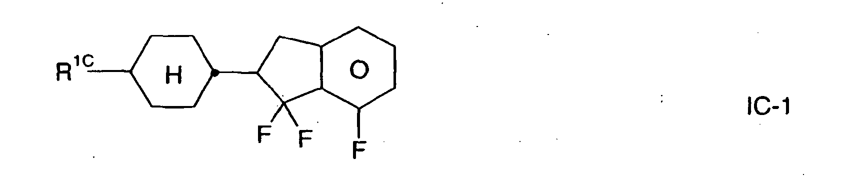 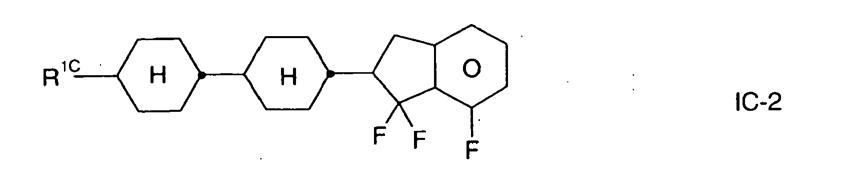 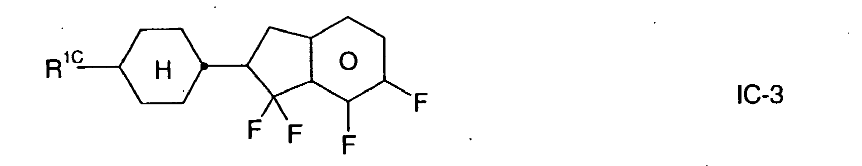 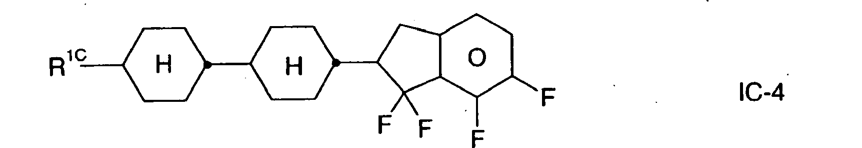 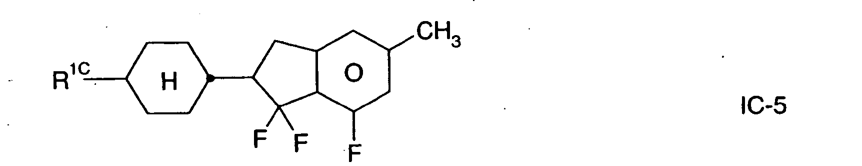 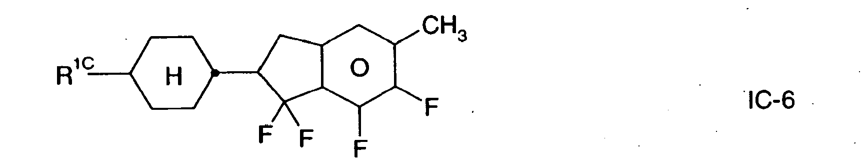 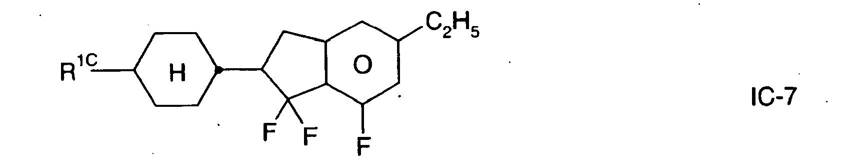 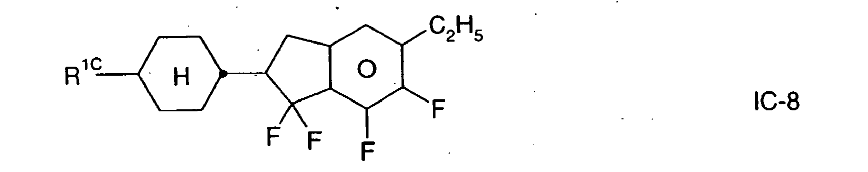 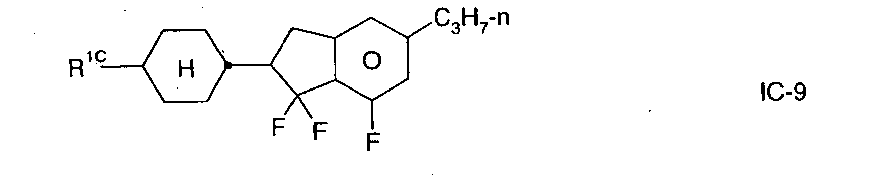 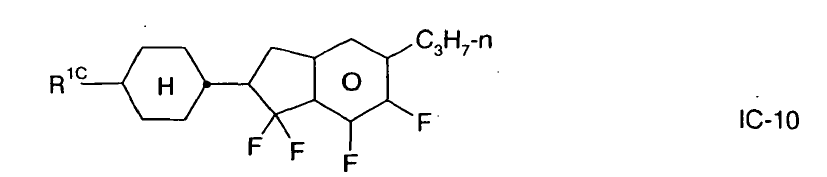 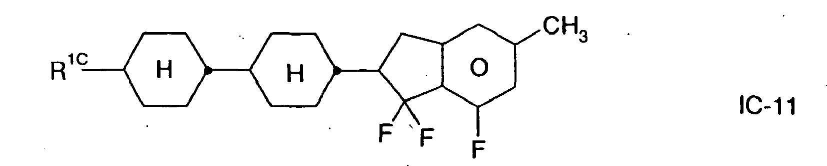 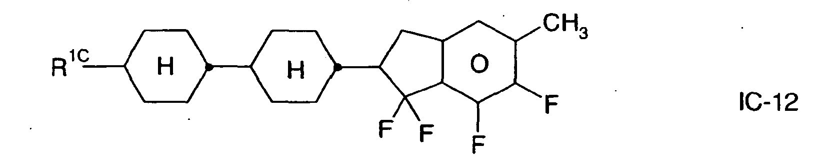 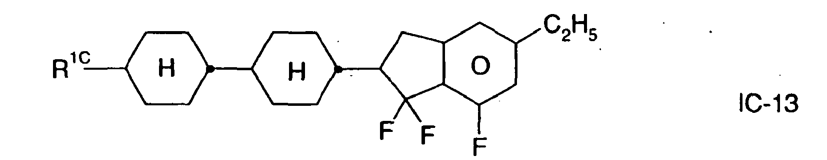 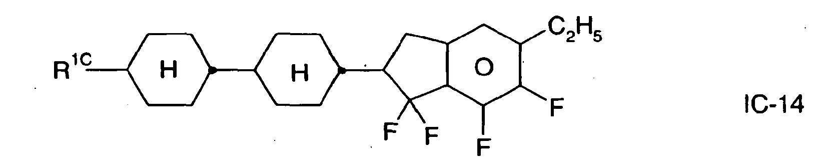 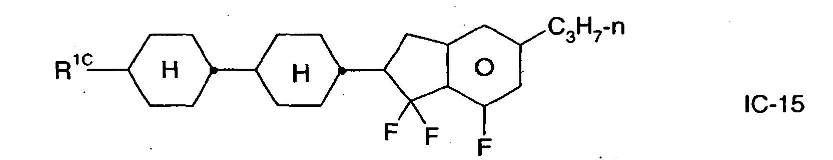 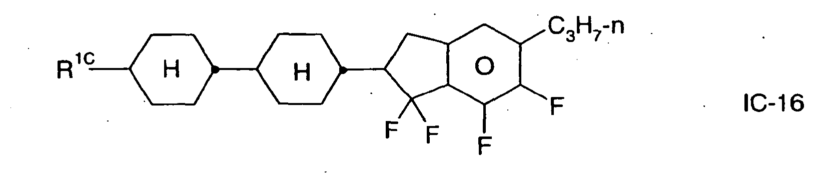 worin R^{1C} vorzugsweise geradkettiges Alkyl bedeutet. Besonders bevorzugt ist die Verbindung der Formel IC-3, ferner IC-1 und IC-4.

Bevorzugte Verbindungen der Formeln ID sind die Verbindungen der Formeln ID-1 bis ID-6: 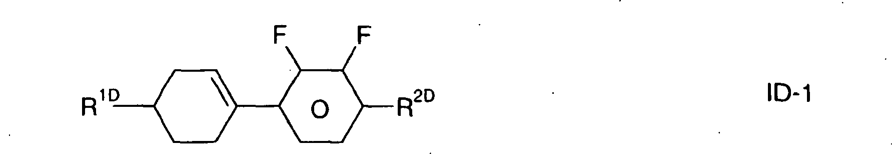 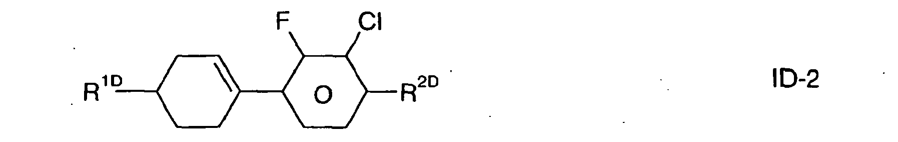 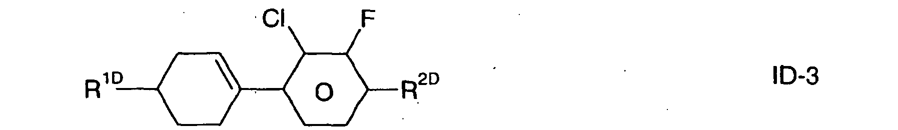 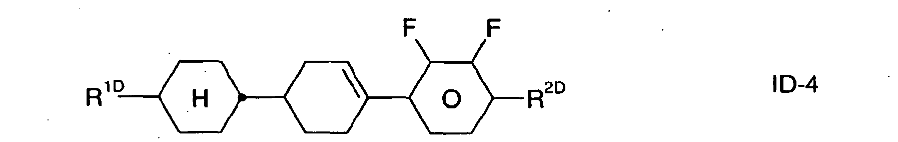 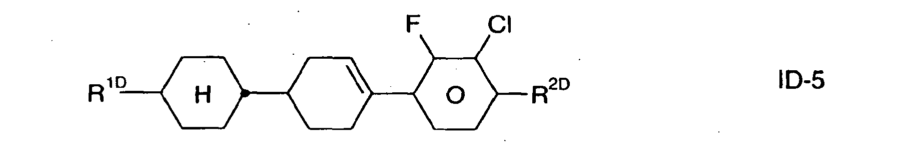 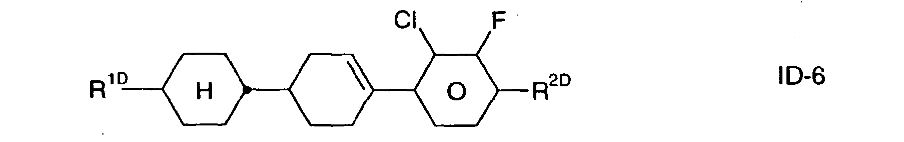 worin R^{1D} vorzugsweise geradkettiges Alkyl mit 1-7 C-Atomen und R^{2D} vorzugsweise geradkettiges Alkyl oder Alkoxy mit 1-7 C-Atomen bedeutet. Insbesondere bevorzugt sind die Verbindungen der Formeln ID-1 und ID-4.
e) Flüssigkristallines Medium, welches zusätzlich eine oder mehrere Verbindungen der Formeln IIA und/oder IIB enthält, 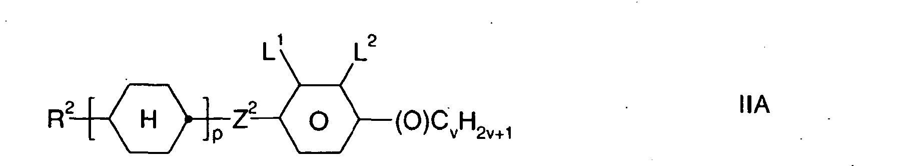 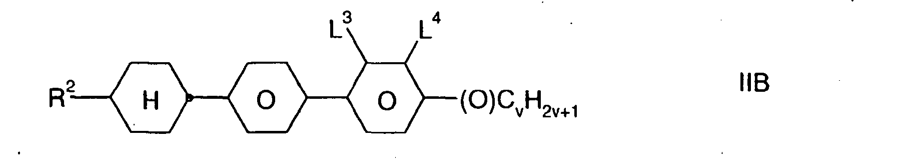 worin
   - R²: H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 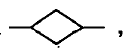 -C≡C-, -CF₂O-, -OCF₂-, -OC-O- oder -O-CO- so ersetzt sein können, dass O-Atome nicht direkt miteinander verknüpft sind,
   - L¹⁻⁴: jeweils unabhängig voneinander F oder Cl,
   - Z²: Einfachbindung, -CH₂CH₂-, -CH=CH-, -CF₂O-, -OCF₂-, -CH₂O-, -OCH₂-, -COO-, -OCO-, -C₂F₄-, -CF=CF-
   - p: 1 oder 2, und
   - v: 1 bis 6
   bedeuten.

Bevorzugte Verbindungen der Formeln IIA und IIB werden nachfolgend genannt.

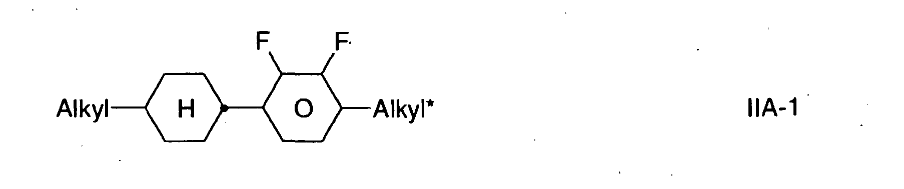

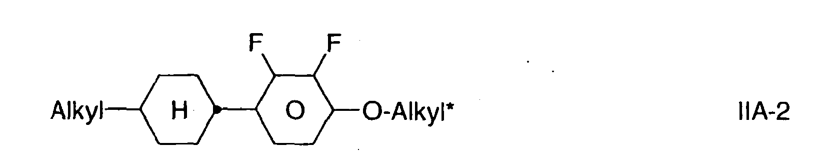

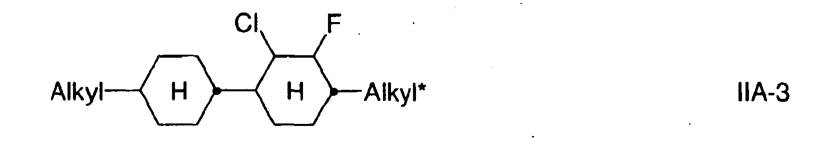

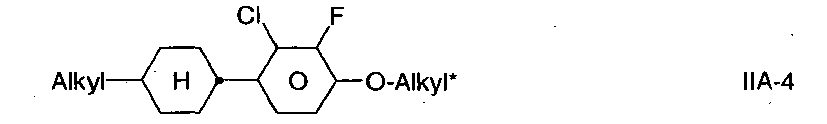

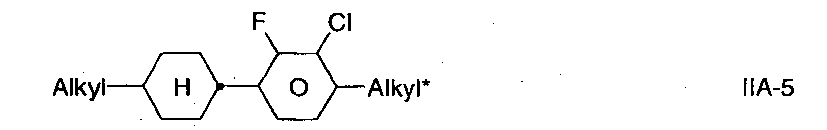

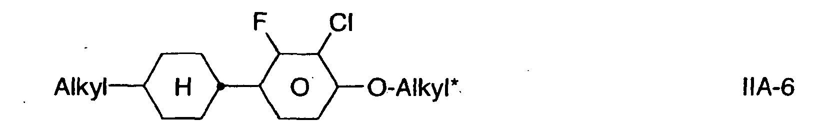

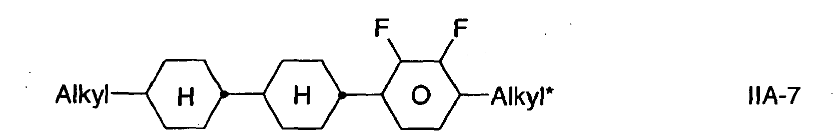

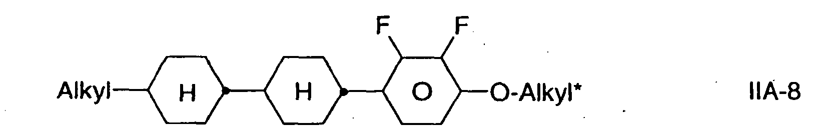

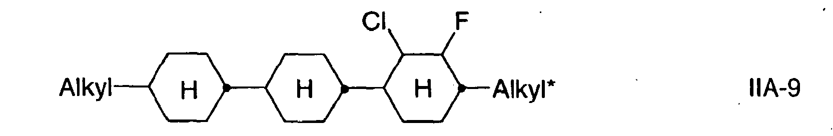

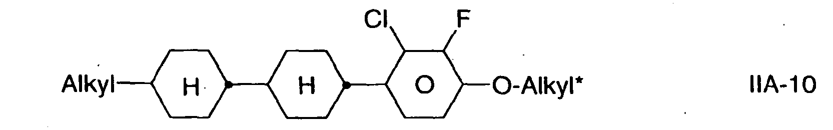

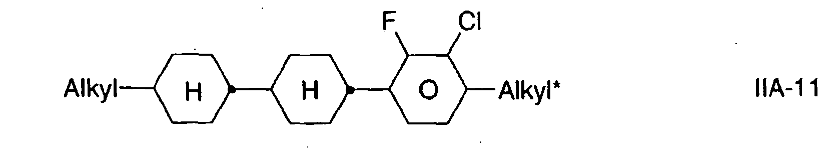

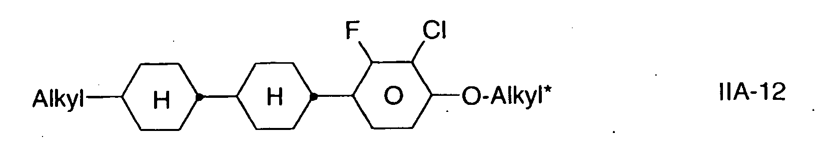

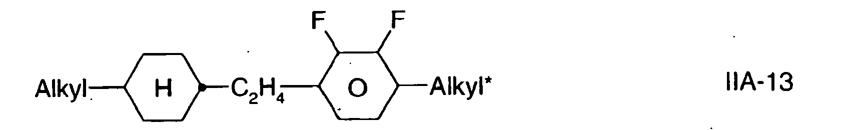

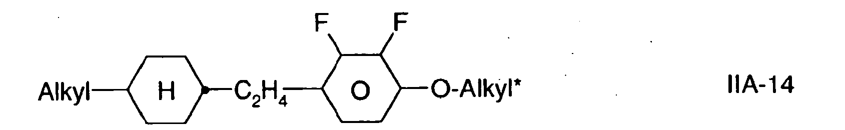

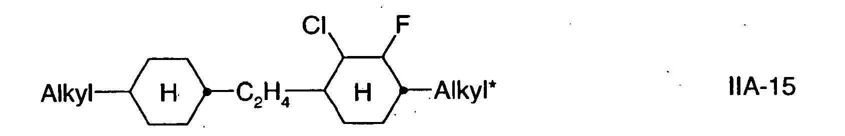

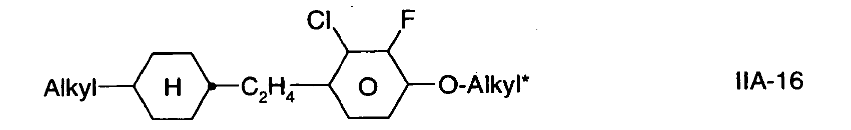

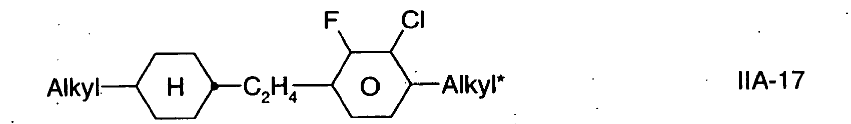

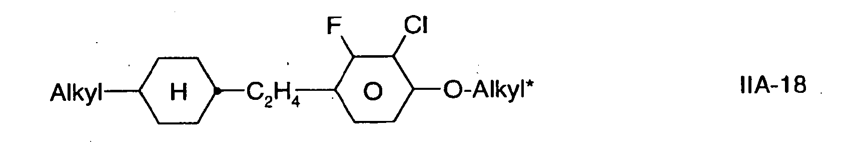

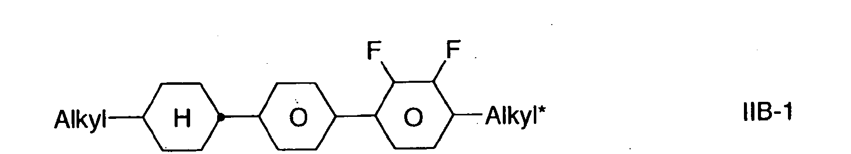

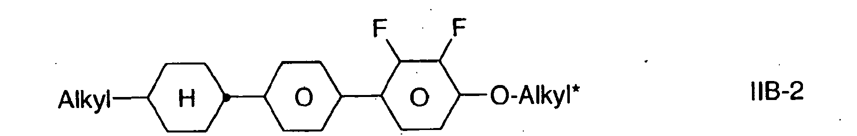

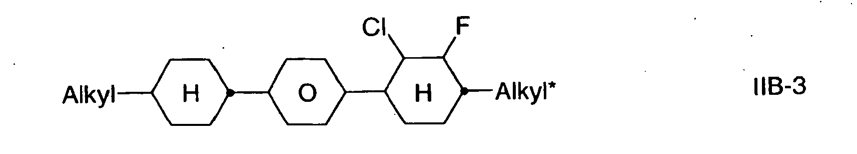

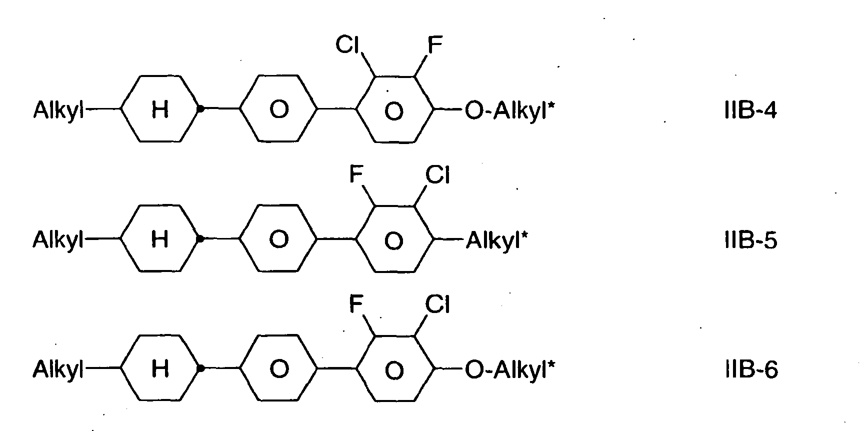

Vorzugsweise bedeuten in den Verbindungen der Formeln IIA und IIB R² jeweils geradkettiges Alkyl mit bis zu 6 C-Atomen, insbesondere CH₃, C₂H₅, n-C₃H₇, n-C₄H₉, n-C₅H₁₁. L¹⁻⁴ bedeuten vorzugsweise jeweils F.
f) Flüssigkristallines Medium, welches zusätzlich eine oder mehrere Verbindungen der Formel III enthält, 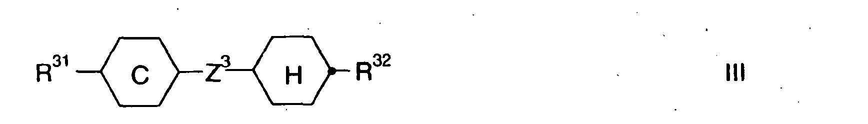 worin
   - R³¹ und R³²: jeweils unabhängig voneinander einen geradkettigen Alkyl-, Alkoxyalkyl- oder Alkoxyrest mit bis zu 12 C-Atomen, und 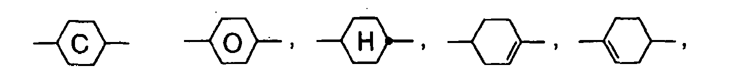 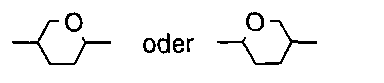
   - Z³: Einfachbindung, -CH₂CH₂-, -CH=CH-, -CF₂O-, -OCF₂-, -CH₂O-, -OCH₂-, -COO-, -OCO-, -C₂F₄-, -CF=CF-.
   bedeuten.
g) Flüssigkristallines Medium, wobei der Anteil an Verbindungen der Formeln IIA und/oder IIB im Gesamtgemisch mindestens 20 Gew.% beträgt.
h) Flüssigkristallines Medium, wobei der Anteil der Verbindungen der Formel III im Gesamtgemisch mindestens 5 Gew.% beträgt.
i) Flüssigkristallines Medium, welches zusätzlich eine oder mehrere Verbindungen ausgewählt aus den Formeln IIIa bis IIIh enthält: 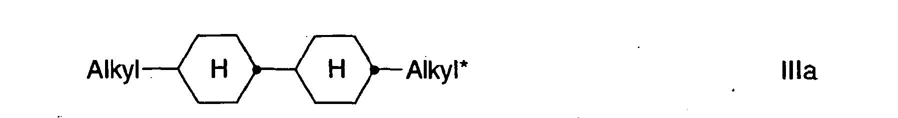 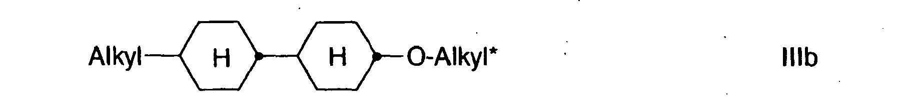 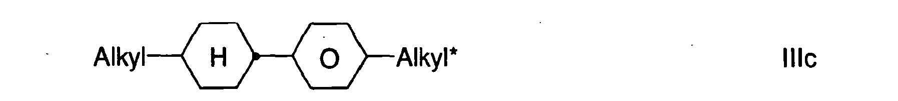 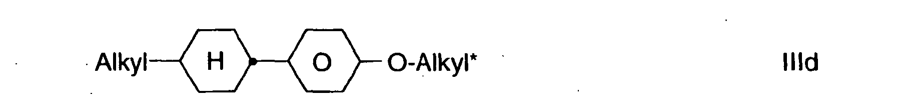 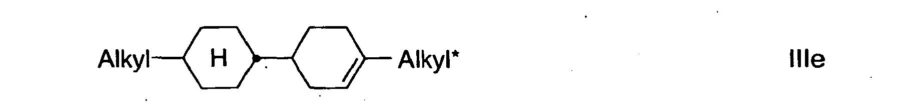 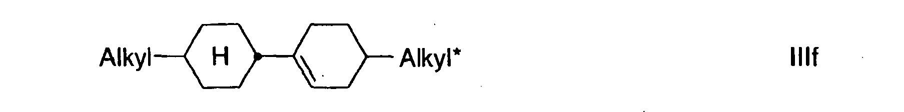 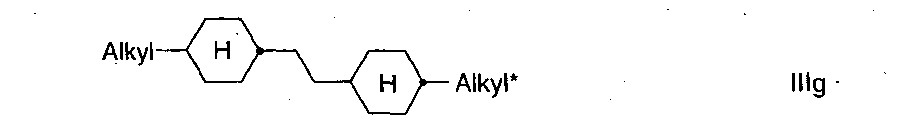 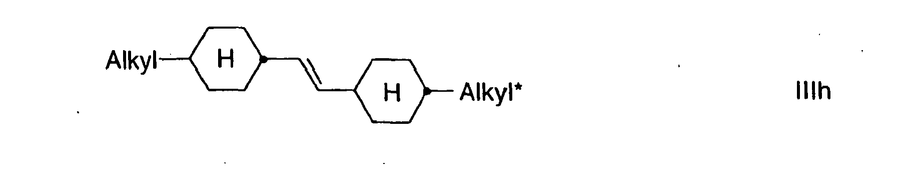 worin
   - Alkyl und Alkyl*: jeweils unabhängig voneinander einen geradkettigen Alkylrest mit 1-6 C-Atomen
bedeuten.

Vorzugsweise enthält das erfindungsgemäße Medium mindestens eine Verbindung der Formel IIIa, Formel IIIb und/oder Formel IIId.
j) Flüssigkristallines Medium, welches
   > 15-80Gew.% einer oder mehrerer Verbindungen Formel IA in Kombination mit mindestens einer oder mehreren Verbindungen ausgewählt aus der Gruppe der Verbindungen der Formeln IB, IC und lD,
   5-80 Gew.% einer oder mehrerer Verbindungen der Formeln IIA und/oder IIB
   enthält bzw. daraus besteht, wobei die Gesamtmenge der Verbindungen der Formeln IA, IB, IC, ID und IIA und/oder IIB ≤ 100 Gew.% beträgt.
k) Flüssigkristallines Medium, welches zusätzlich eine oder mehrere Vierkernverbindungen der Formeln 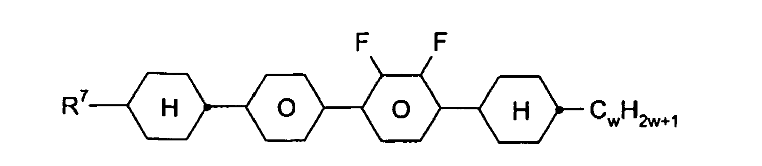 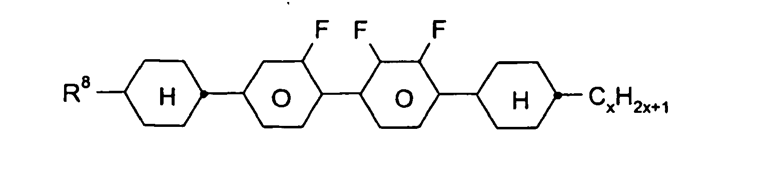 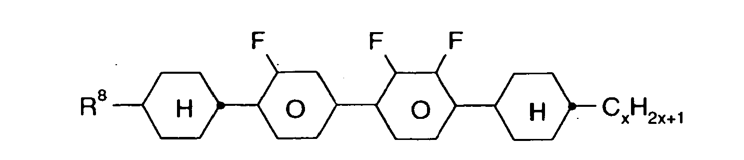 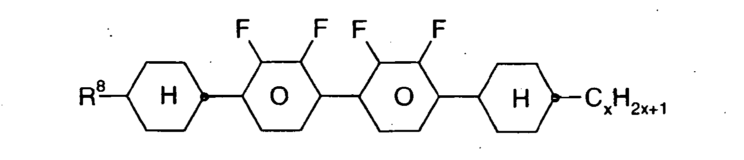 worin
   - R⁷ und R⁸: jeweils unabhängig voneinander eine der in Anspruch 2 für R² angegebenen Bedeutung haben, und
   - w und x: jeweils unabhängig voneinander 1 bis 6
   bedeuten,
   enthält.
l) Flüssigkristallines Medium, welches zusätzlich eine oder mehrere Verbindungen der Formeln Y-1 bis Y-8 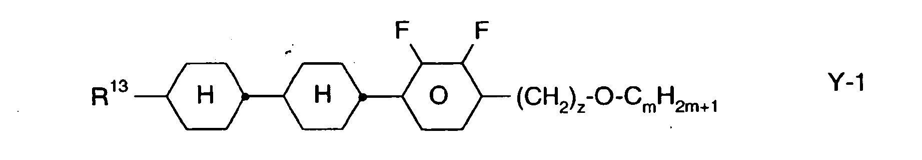 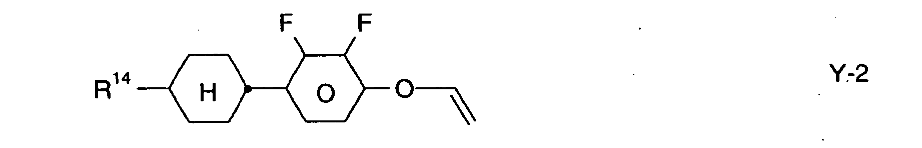 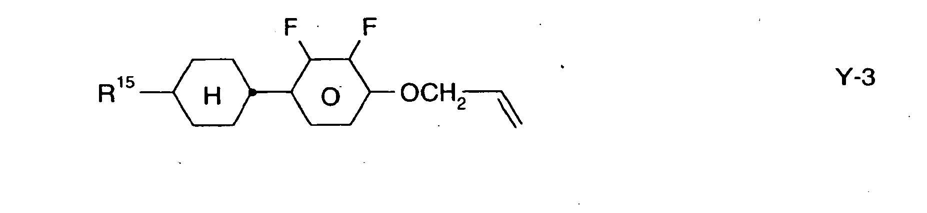 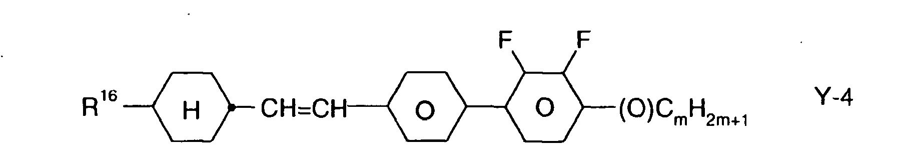 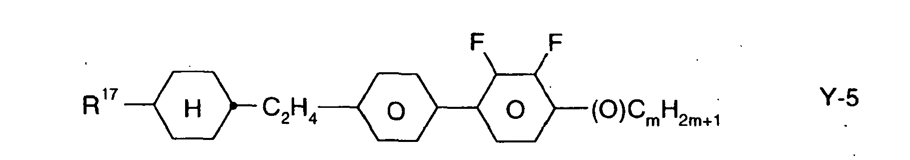 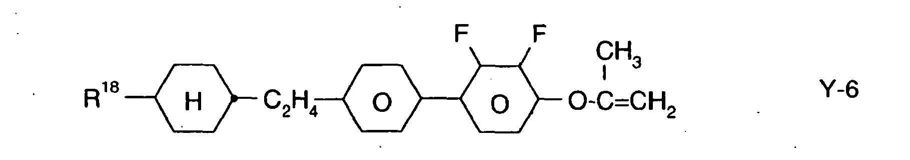 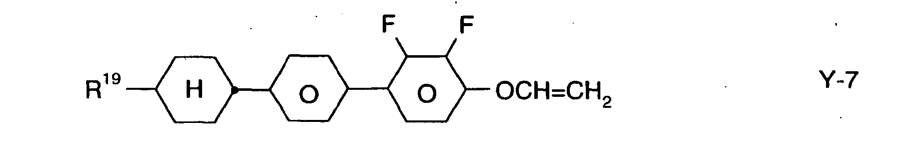 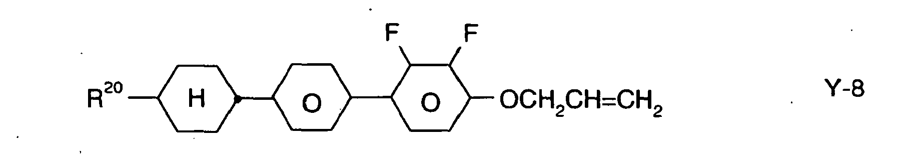 enthält,
   worin R¹³-R²⁰ jeweils unabhängig voneinander einen Alkyl- oder Alkoxyrest mit 1-6 C-Atomen bedeuten; z und m bedeuten jeweils unabhängig voneinander 1-6; x bedeutet 0, 1, 2 oder 3.
   Insbesondere bevorzugt enthält das erfindungsgemäße Medium eine oder mehrere Verbindungen der Formeln Y-1 bis Y-8 in Mengen von ≥ 5 Gew.%.
m) Flüssigkristallines Medium, welches zusätzlich eine oder mehrere Verbindungen der Formeln, 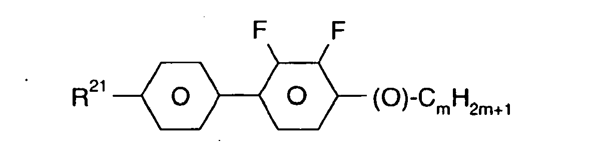 vorzugsweise in Mengen von > 3 Gew.%, insbesondere ≥ 5 Gew.%, und ganz besonders bevorzugt von 5-25 Gew.% enthält,
   wobei
   R²¹ Alkyl oder Alkoxy mit 1-7 C-Atomen bedeutet.
n) Flüssigkristallines Medium enthaltend zusätzlich ein oder mehrere fluorierte Terphenyle der Formeln T-1 bis T-22, 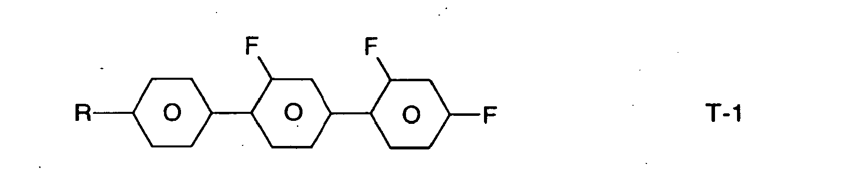 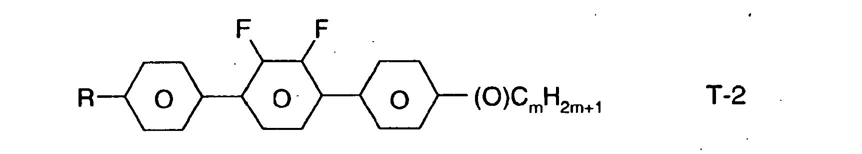 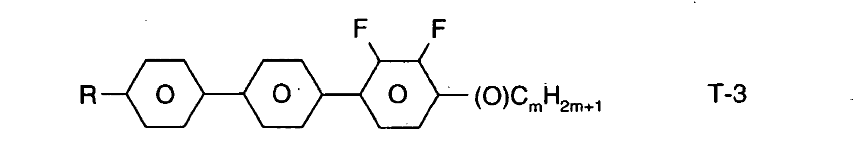 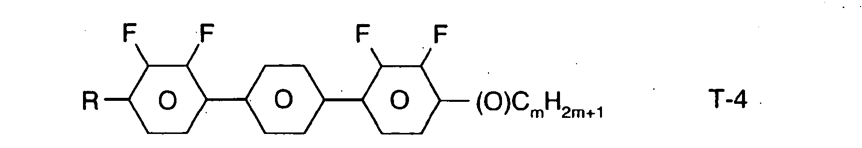 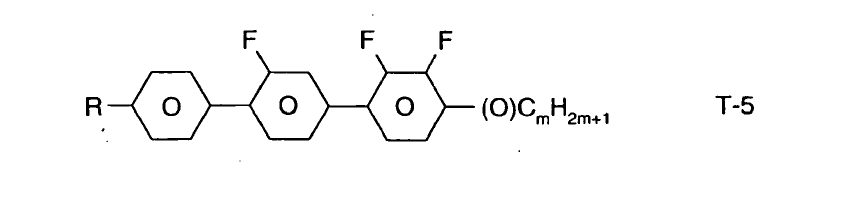 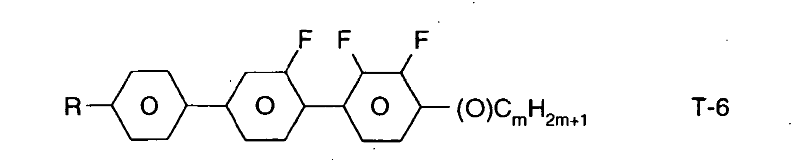 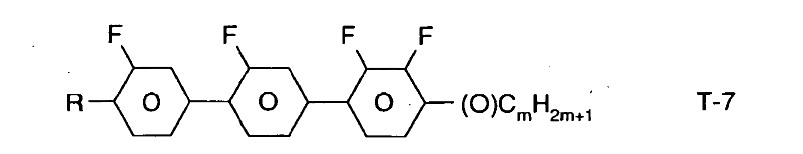 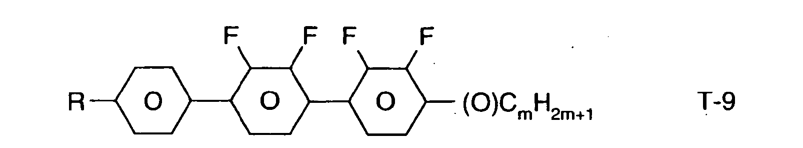 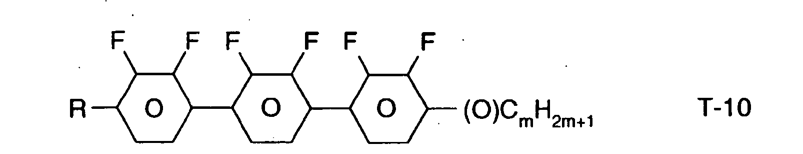 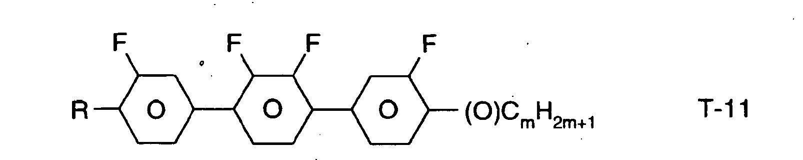 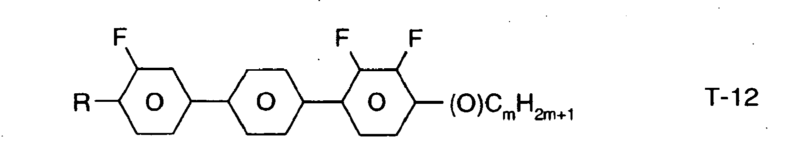 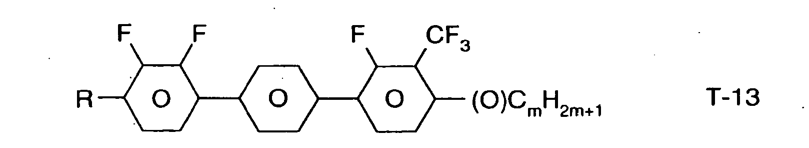 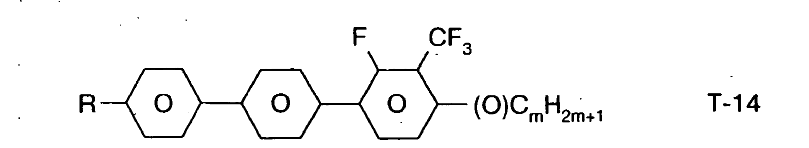 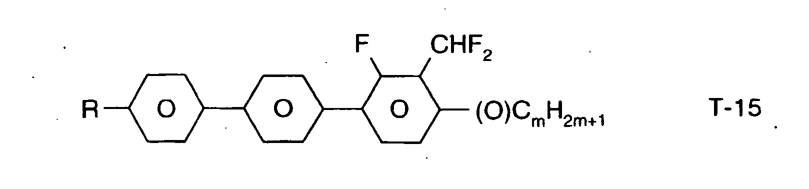 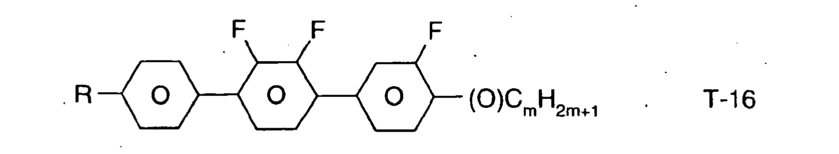 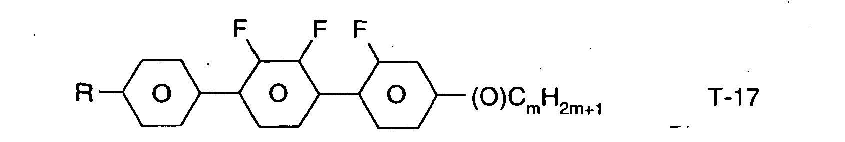 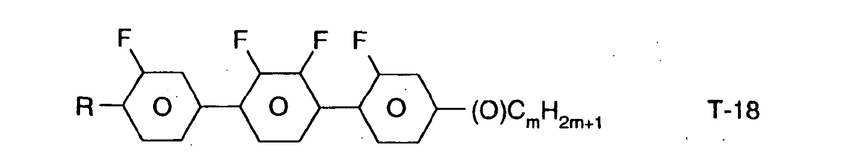 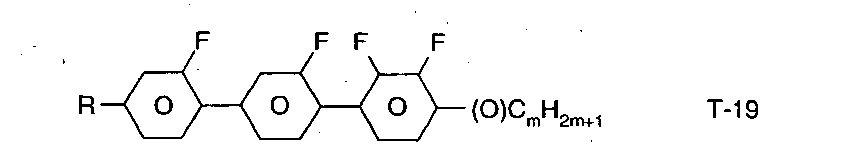 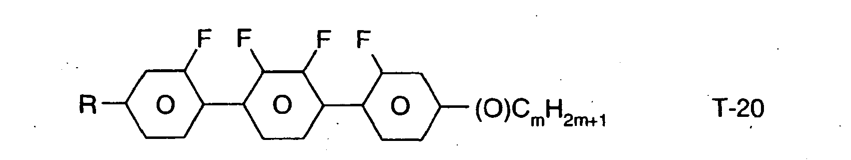 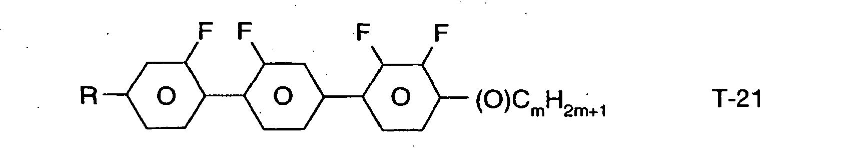 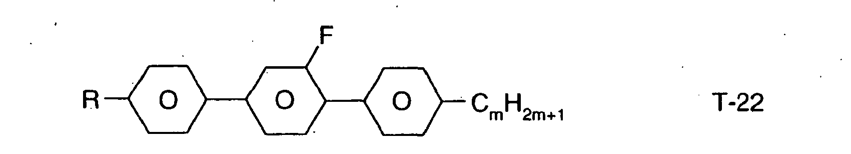 worin
   R geradkettiger Alkyl- oder Alkoxyrest mit 1-7 C-Atomen bedeutet,
   enthält.
   Vorzugsweise bedeutet R Methyl, Ethyl, Propyl, Butyl, Pentyl, Hexyl Methoxy, Ethoxy, Propoxy, Butoxy, Pentoxy.
   Das erfindungsgemäße Medium enthält die Terphenyle der Formeln T-1 bis T-22 vorzugsweise in Mengen von 2-30 Gew.%, insbesondere von 5-20 Gew.%.
   Besonders bevorzugt sind Verbindungen der Formeln T-1, T-2, T-3 und T-22. In diesen Verbindungen bedeutet R vorzugsweise Alkyl, ferner Alkoxy jeweils mit 1-5 C-Atomen.
   Vorzugsweise werden die Terphenyle in den erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen ausgewählt aus der Gruppe der Verbindungen T-1 bis T-22.
o) Flüssigkristallines Medium enthaltend zusätzlich ein oder mehrere Biphenyle der Formeln B-1 bis B-3, 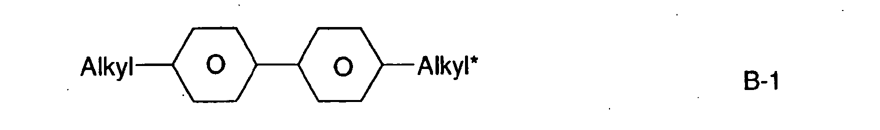 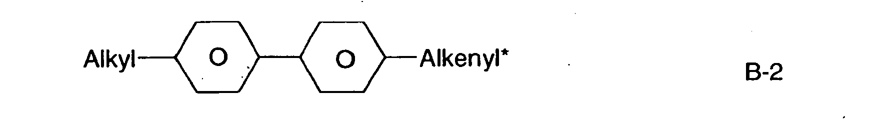 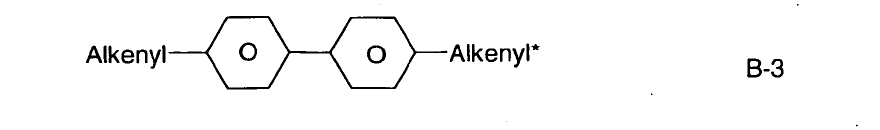 worin
   - Alkyl und Alkyl*: jeweils unabhängig voneinander einen gerad- kettigen Alkylrest mit 1-6 C-Atomen, und
   - Alkenyl und Alkenyl*: jeweils unabhängig voneinander einen geradkettigen Alkenylrest mit 2-6 C-Atomen
   bedeuten.
   Der Anteil der Biphenyle der Formeln B-1 bis B-3 in der GesamtMischung beträgt vorzugsweise mindestens 3 Gew.%, insbesondere ≥ 5 Gew.%.
   Von den Verbindungen der Formeln B-1 bis B-3 sind die Verbindungen der Formel B-2 insbesondere bevorzugt.
   Besonders bevorzugte Biphenyle sind 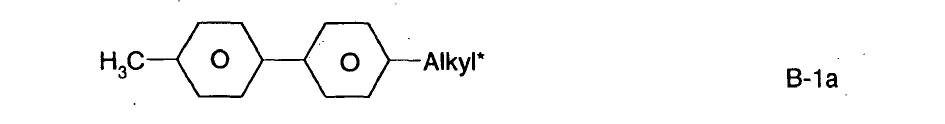 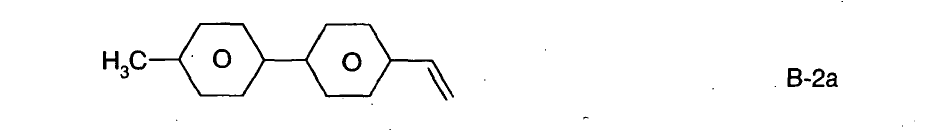 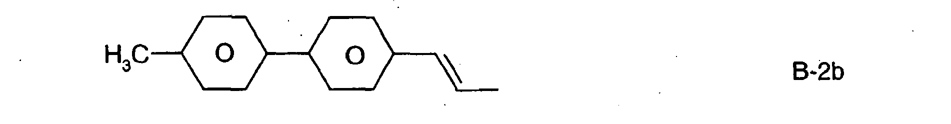 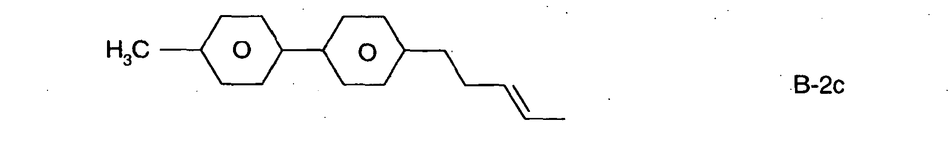 worin Alkyl* einen Alkylrest mit 1-6 C-Atomen bedeutet. Insbesondere bevorzugt enthält das erfindungsgemäße Medium eine oder mehrere Verbindungen der Formeln B-1a und/oder B-2c.
p) Flüssigkristallines Medium enthaltend mindestens eine Verbindung der Formeln Z-1 bis Z-16, 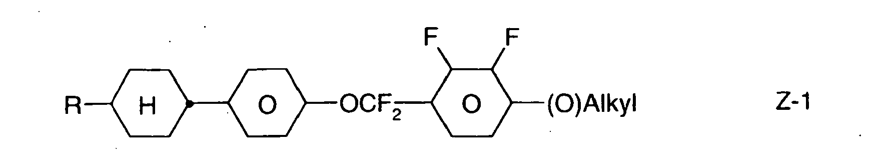 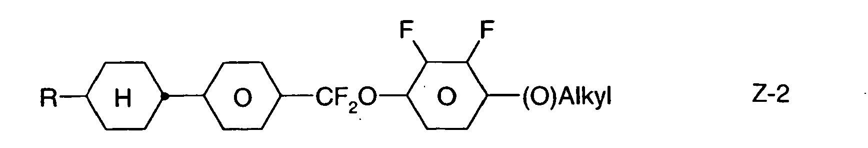 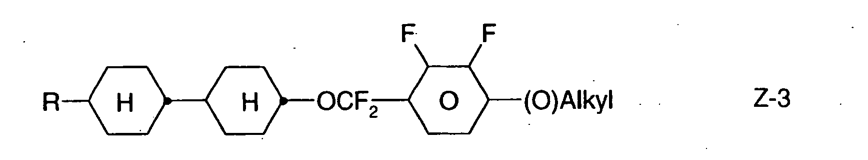 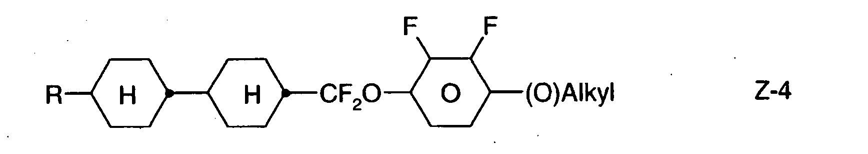 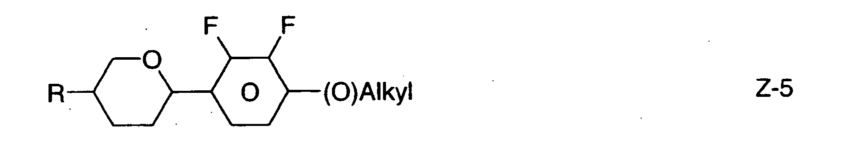 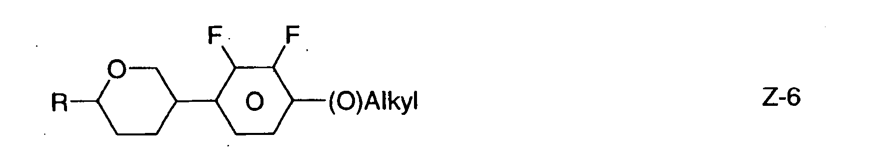 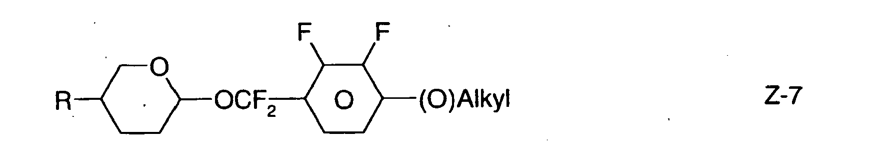 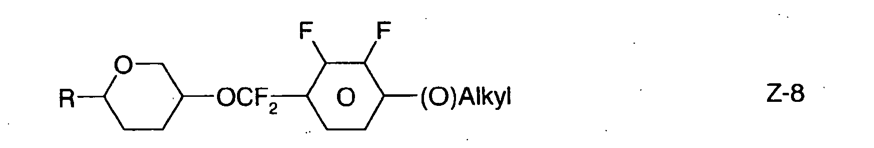 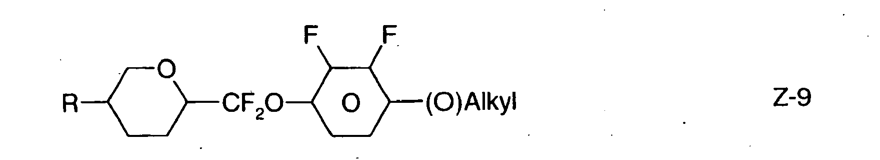 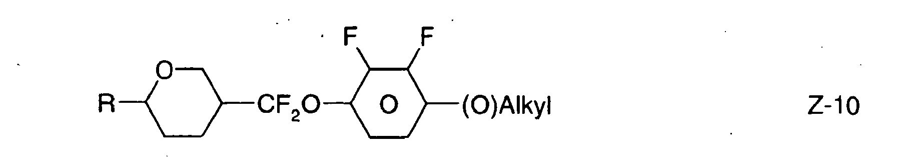 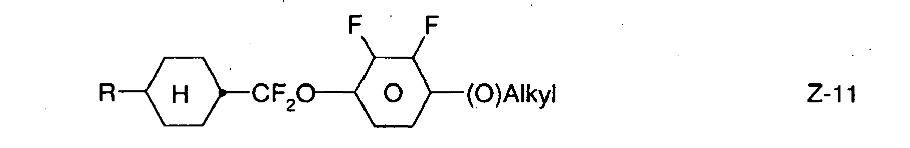 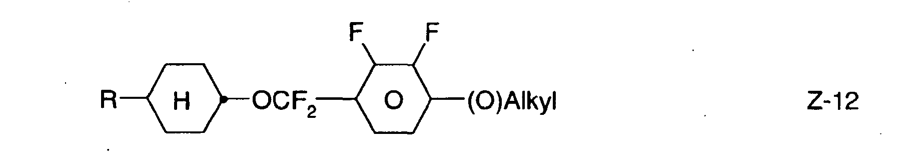 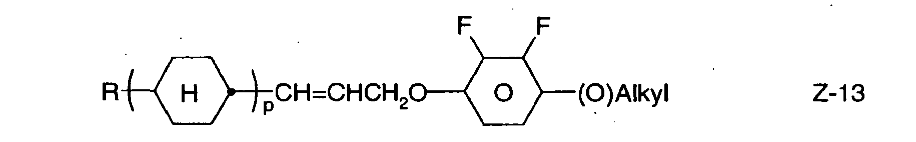 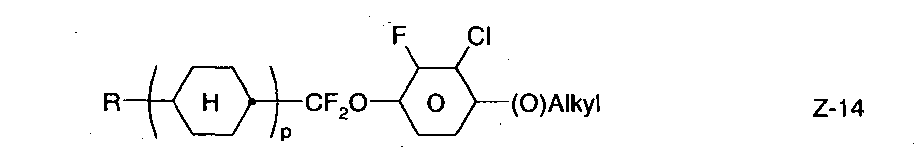 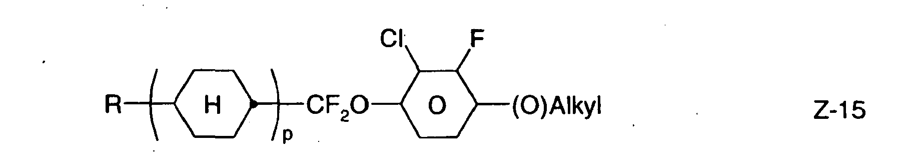 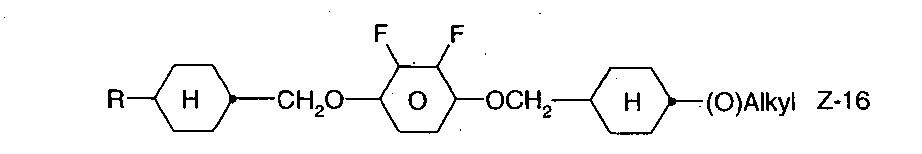 worin R und Alkyl die oben angegebenen Bedeutungen haben.
   q) Flüssigkristallines Medium enthaltend mindestens eine Verbindung der Formeln O-1 bis O-13, 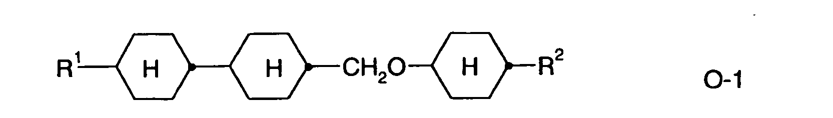 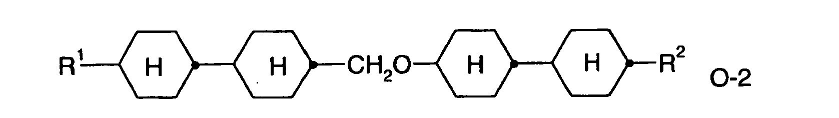 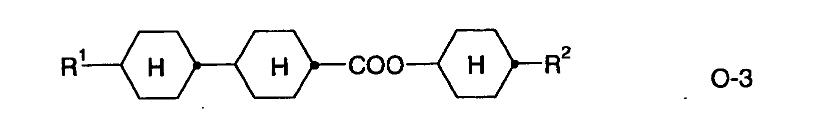 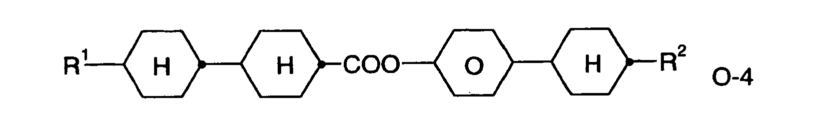 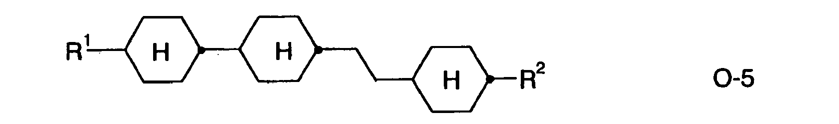 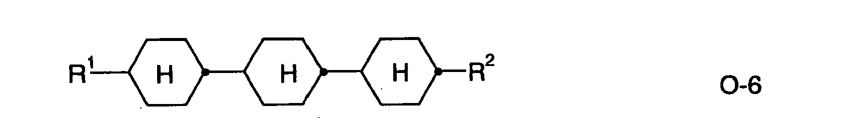 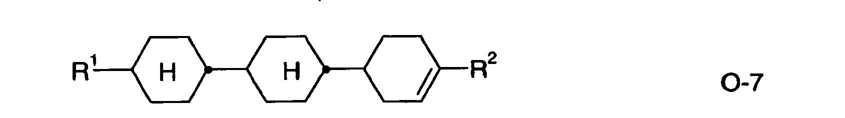 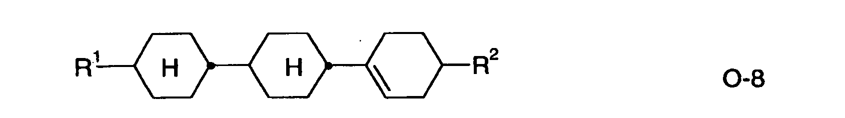 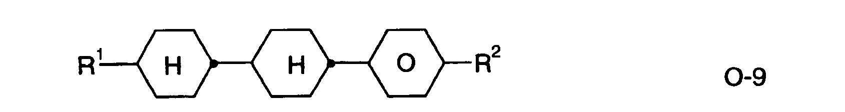 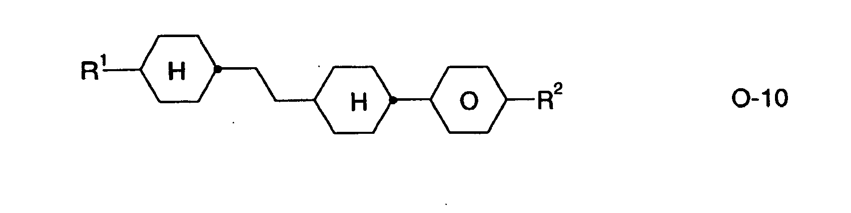 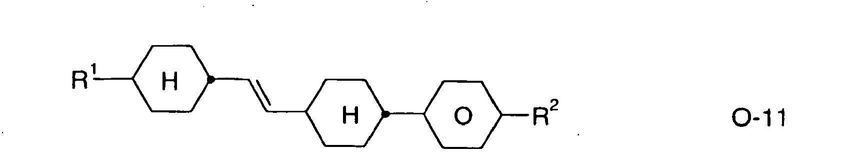 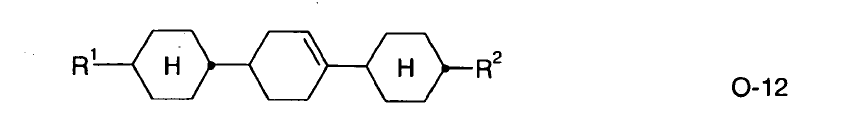 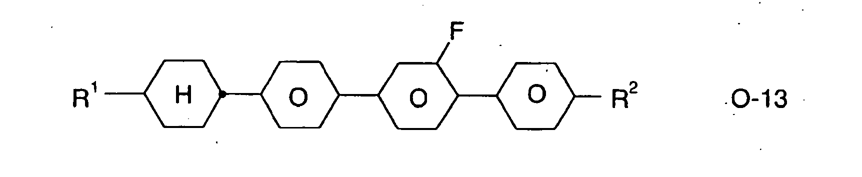 worin R¹ und R² die für R^{2A} angegebenen Bedeutungen haben, vorzugsweise bedeuten R¹ und R² jeweils unabhängig voneinander geradkettiges Alkyl, ferner Alkenyl.
   Bevorzugte Medien enthalten eine oder mehrere Verbindungen der Formel O-1, O-3, O-4, O-9 und/oder O-13.
r) Bevorzugte erfindungsgemäße flüssigkristalline Medien enthalten eine oder mehrere Substanzen, die eine Tetrahydronaphthyl- oder Naphthyl-Einheit aufweisen, wie z.B. die Verbindungen der Formeln N-1 bis N-5, 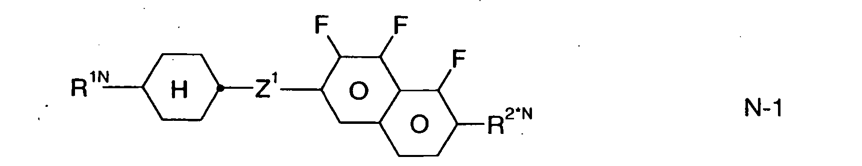 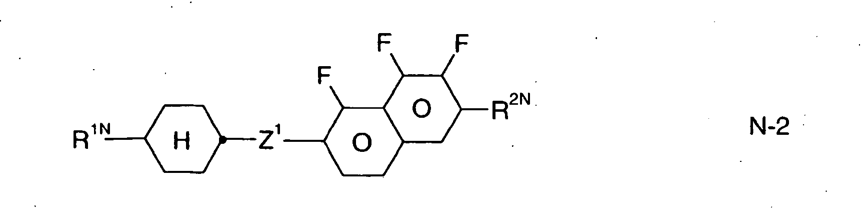 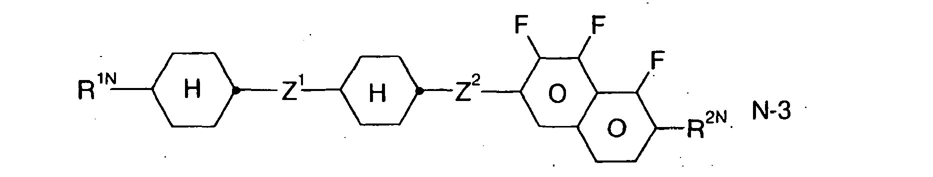 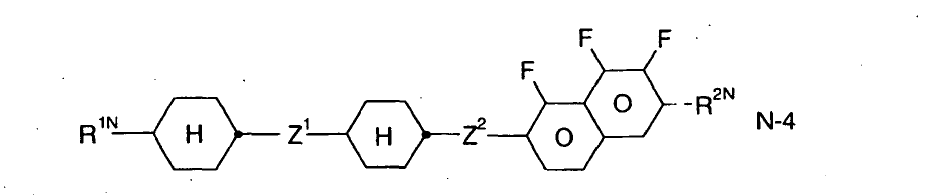 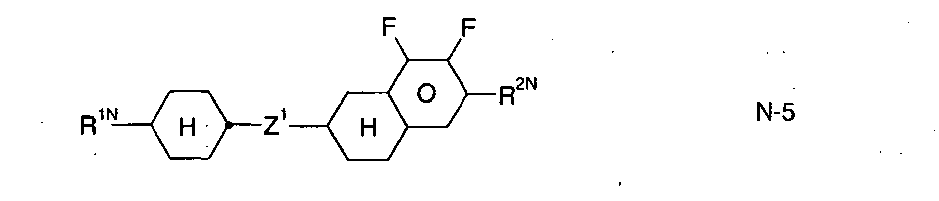 worin R^{1N} und R^{2N} jeweils unabhängig voneinander die für R^{2A} angegebenen Bedeutungen haben, vorzugsweise geradkettiges Alkyl, geradkettiges Alkoxy oder geradkettiges Alkenyl bedeuten, und Z, Z¹ und Z² jeweils unabhängig voneinander
   -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- oder eine Einfachbindung bedeuten.
s) Bevorzugte Mischungen enthalten eine oder mehrere Difluordibenzochroman-Verbindungen der Formel BC und/oder Chromane der Formeln CR. 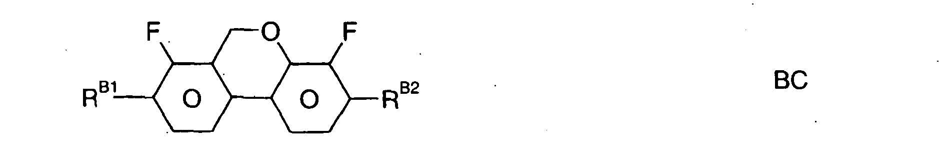 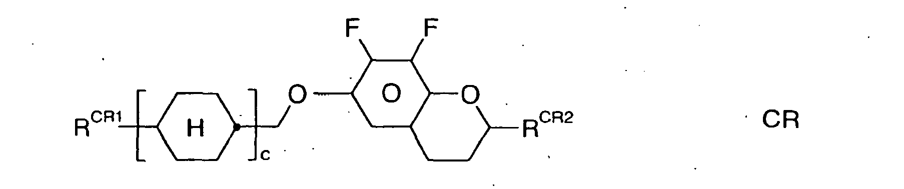 worin
   R^{B1}, R^{B2}, R^{CR1} und R^{CR2} jeweils unabhängig voneinander die Bedeutung von R^{2A} aufweisen. Die erfindungsgemäßen Mischungen enthalten die Verbindungen der Formeln BC und/oder CR, vorzugsweise in Mengen von 3 bis 20 Gew.%, insbesondere in Mengen von 3 bis 15 Gew.%.
   Besonders bevorzugte Verbindungen der Formeln BC und CR sind die Verbindungen BC-1 bis BC-7 und CR-1 bis CR-5, 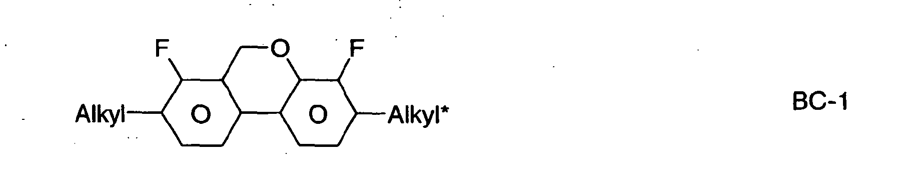 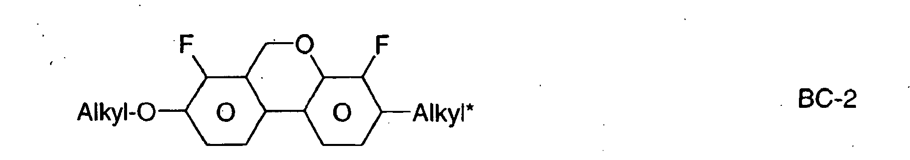 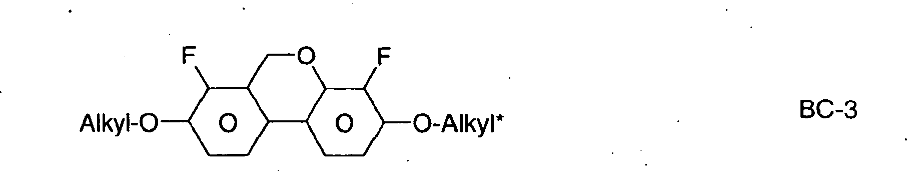 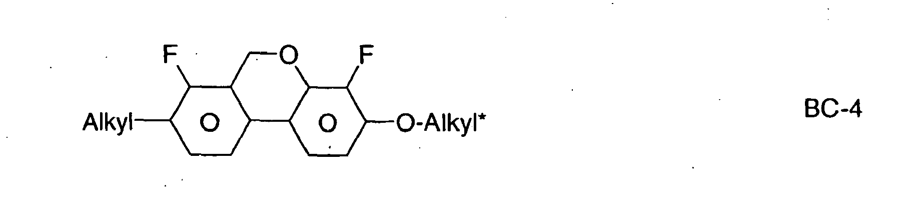 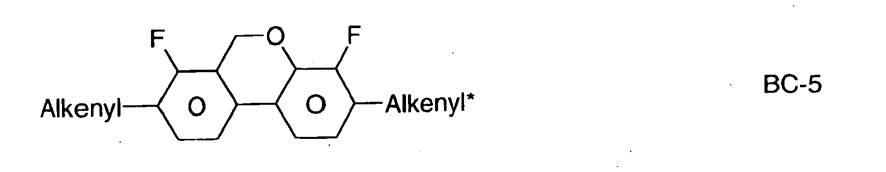 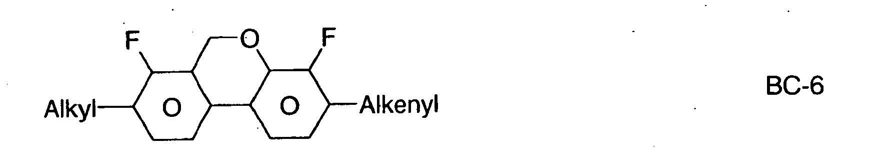 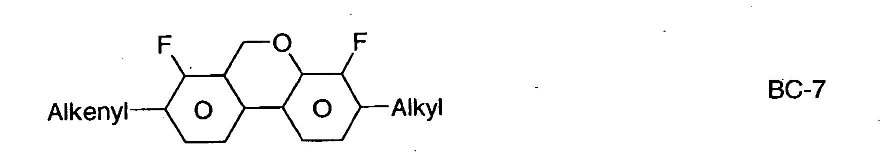 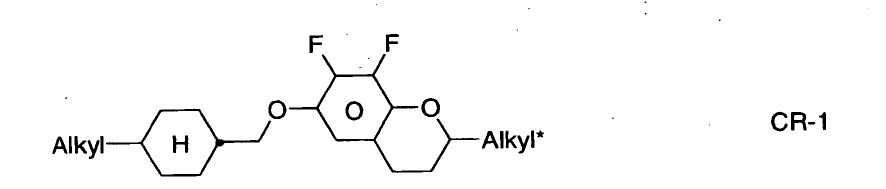 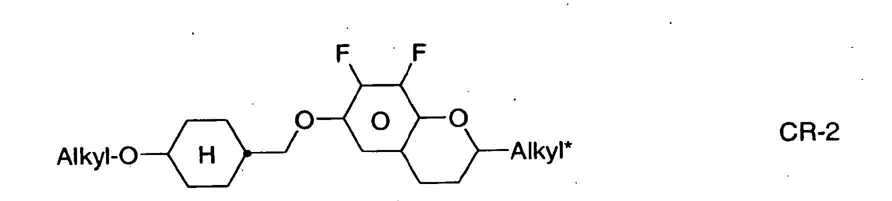 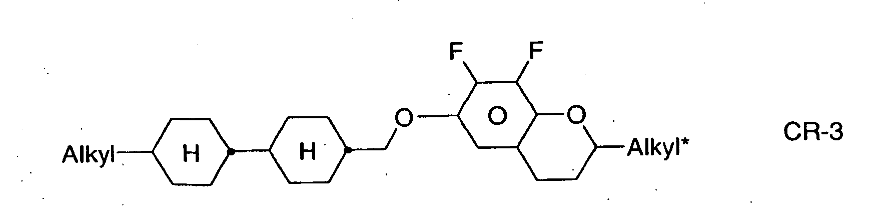 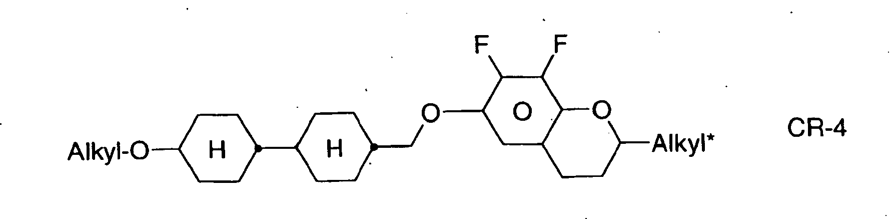 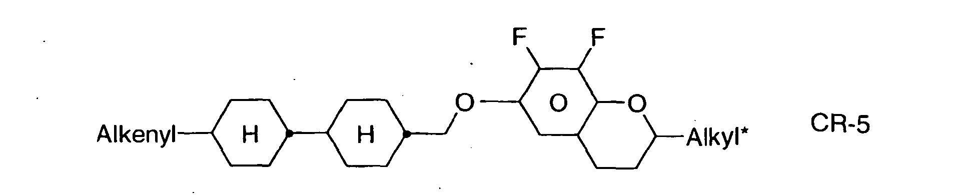 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen,
   bedeuten.
   Ganz besonders bevorzugt sind Mischungen enthaltend eine, zwei oder drei Verbindungen der Formel BC-2.

Ein weiterer Gegenstand der Erfindung ist eine elektrooptische Anzeige mit einer Aktivmatrix-Adressierung basierend auf dem ECB- oder FFS-Effekt, dadurch gekennzeichnet, dass sie als Dielektrikum ein flüssigkristallines Medium nach einem oder mehreren der Ansprüche 1 bis 10 enthält.

Das erfindungsgemäße flüssigkristalline Medium weist bevorzugt eine nematische Phase von ≤ -20 °C bis ≥ 70 °C, besonders bevorzugt von ≤ -30 °C bis ≥ 80 °C, ganz besonders bevorzugt von ≤ -40 °C bis ≥ 90 °C auf.

Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20 °C in einer entsprechenden Testzelle 1.000 h oder mehr beträgt, wird das Medium als bei dieser Temperatur stabil bezeichnet. Bei Temperaturen von -30 °C bzw. -40 °C betragen die entsprechenden Zeiten 500 h bzw. 250 h. Bei hohen Temperaturen wird der Klärpunkt nach üblichen Methoden in Kapillaren gemessen.

Vorzugsweise weist die Flüssigkristallmischung einen nematischen Phasenbereich von mindestens 60 K und eine Fließviskosität ν₂₀ von maximal 30 mm² · s⁻¹ bei 20 °C auf.

Die Werte der Doppelbrechung Δn in der Flüssigkristallmischung liegen in der Regel zwischen 0,07 und 0,16, vorzugsweise zwischen 0,08 und 0,12.

Die erfindungsgemäße Flüssigkristallmischung weist ein Δε von -0,5 bis -8,0, insbesondere von -3,0 bis -6,0 auf, wobei Δε die dielektrische Anisotropie bedeutet. Die Rotationsviskosität γ₁ bei 20 °C ist vorzugsweise ≤ 150 mPa·s, insbesondere ≤ 120 mPa·s.

Die erfindungsgemäßen Flüssigkristallmedien weisen relativ kleine Werte für die Schwellenspannung (V₀) auf. Vorzugsweise sind sie im Bereich von 1,7 V bis 2,5 V, besonders bevorzugt ≤ 2,4 V und ganz besonders bevorzugt ≤ 2,2 V.

Der Begriff "Schwellenspannung" bezieht sich für die vorliegende Erfindung auf die kapazitive Schwelle (V₀), auch Freedericksz-Schwelle genannt, sofern nicht explizit anders angegeben.

Außerdem weisen die erfindungsgemäßen Flüssigkristallmedien hohe Werte für die Voltage Holding Ratio in Flüssigkristallzellen auf.

In der Regel zeigen dabei Flüssigkristallmedien mit einer geringen Ansteuerspannung bzw. Schwellenspannung eine geringere Voltage Holding Ratio als solche mit einer größeren Ansteuerspannung bzw. Schwellenspannung und umgekehrt.

Für die vorliegende Erfindung bedeuten die Begriffe "dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homeotroper und mit homogener Oberflächenorientierung bei 1 kHz bestimmt wird. Die Messspannung beträgt typischerweise 0,5 V bis 1,0 V, sie ist jedoch stets niedriger als die kapazitive Schwelle der jeweiligen untersuchten Flüssigkristallmischung.

Als Hostmischung für dielektrisch positive und dielektrisch neutrale Verbindungen wird ZLI-4792 und für dielektrisch negative Verbindungen ZLI-2857, beide von Merck KGaA, Deutschland, verwendet. Aus der Änderung der Dielektrizitätskonstanten der Hostmischung nach Zugabe der zu untersuchenden Verbindung und Extrapolation auf 100 % der eingesetzten Verbindung werden die Werte für die jeweiligen zu untersuchenden Verbindungen erhalten. Die zu untersuchende Verbindung wird zu 10 % in der Hostmischung gelöst. Wenn die Löslichkeit der Substanz hierzu zu gering ist, wird die Konzentration schrittweise solange halbiert, bis die Untersuchung bei der gewünschten Temperatur erfolgen kann.

Alle angegebenen Werte für Temperaturen für die vorliegende Erfindung sind in °C.

Die Voltage Holding Ratio wird in den bei der Merck KGaA hergestellten Testzellen bestimmt. Die Messzellen haben Substrate aus Natriumglas (Sodalime Glas) und sind mit Polyimidorientierungsschichten (AL-3046 der Firma Japan Synthetic Rubber, Japan) ausgeführt. Die Schichtdicke beträgt einheitlich 6,0 µm. Die Fläche der durchsichtigen Elektroden aus ITO beträgt 1 cm².

Die erfindungsgemäßen Mischungen sind für alle VA-TFT-Anwendungen geeignet, wie z.B. VAN, MVA, (S)-PVA, ASV. Weiterhin sind sie für IPS (In plane switching)-, FFS (Fringe field switching)- und PALC-Anwendungen mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,5. Sie enthält bevorzugt neben einer oder mehreren Verbindungen der Formel IA eine oder mehrere Verbindungen der Formeln IC, ID, IIA, IIB.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm² · s⁻¹, vorzugsweise nicht mehr als 25 mm² · s⁻¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm² ˙ s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen 4 bis 15, insbesondere 5 bis 12, und besonders bevorzugt < 10, Verbindungen der Formeln IA, IB, IC, ID, IIA und/oder IIB und optional III.

Neben Verbindungen der Formeln IA, IB, IC, ID, IIA und/oder IIB und III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbenen, Benzylphenylether, Tolane und substituierten Zimtsäureestern.

Die wichtigsten als Bestandteile derartiger Flüssigkristallphasen in Frage kommenden Verbindungen lassen sich durch die Formel IV charakterisieren,

R⁹-L-G-E-R¹⁰ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor oder -CN, und R⁹ und R¹⁰ jeweils Alkyl, Alkenyl, Alkoxy, Alkoxyalkyl oder Alkoxycarbonyloxy mit bis zu 18, vorzugsweise bis zu 8 Kohlenstoffatomen, oder einer dieser Reste auch CN, NC, NO₂, NCS, CF₃, SF₅, OCF₃, F, Cl oder Br bedeuten.

Bei den meisten dieser Verbindungen sind R⁹ und R¹⁰ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, IPS-, FFS- oder PALC-Mischung auch Verbindungen enthalten kann, worin beispielsweise H, N, O, Cl, F durch die entsprechenden Isotope ersetzt sind.

Die erfindungsgemäßen Mischungen können weiterhin polymerisierbare Verbindungen, sogenannte reaktive Mesogene (RMs), beispielsweise wie in U.S. 6,861,107 offenbart, in Konzentrationen von bevorzugt 0,12 - 5 Gew.%, besonders bevorzugt 0,2 - 2 % bezogen auf die Mischung zugesetzt werden. Derartige Mischungen können für sogenannte Polymer Stabilized VA-Modes, bei denen eine Polymerisierung der reaktiven Mesogene in der flüssigkristallinen Mischung erfolgen soll, verwendet werden. Voraussetzung hierfür ist, dass die Flüssigkristallmischung selbst keine polymerisierbaren Komponenten, wie z. B. Verbindungen mit Alkenyl-Seitenketten, enthält.

Der Aufbau der erfindungsgemäßen Flüssigkristallanzeigen entspricht der üblichen Geometrie, wie sie z.B. in EP-OS 0 240 379, beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Vorzugsweise enthalten die erfindungsgemäßen Mischungen neben den Verbindungen der Formeln IA und einer oder mehrerer Verbindungen aus der Gruppe der Verbindungen der Formeln IB, IC und ID, eine oder mehrere Verbindungen der nachfolgend genannten Verbindungen.

Folgende Abkürzungen werden verwendet:
(n, m, z: jeweils unabhängig voneinander 1, 2, 3, 4, 5 oder 6)

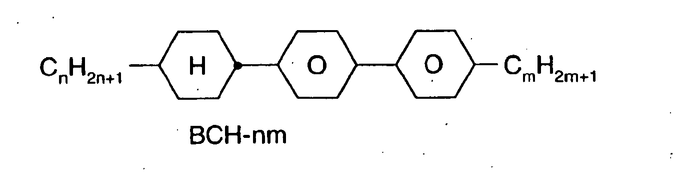

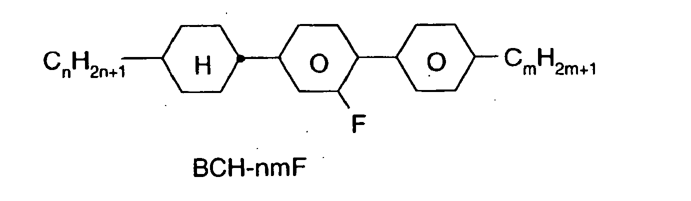

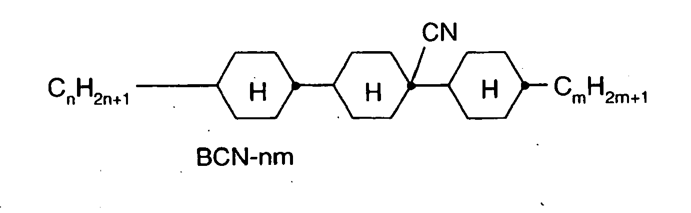

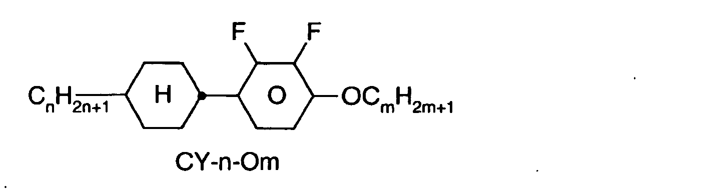

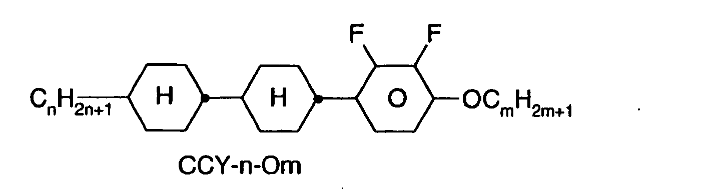

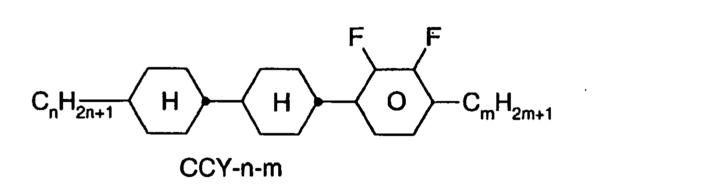

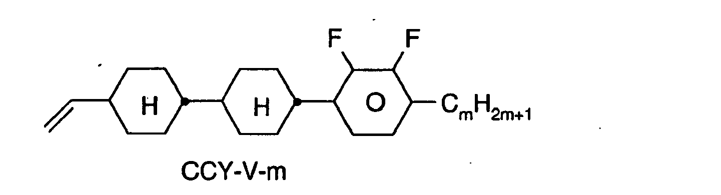

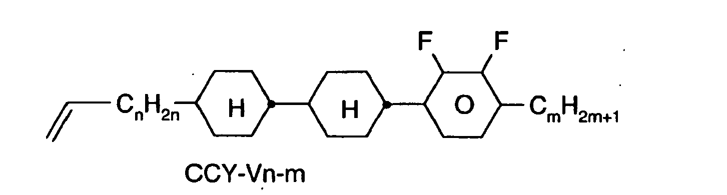

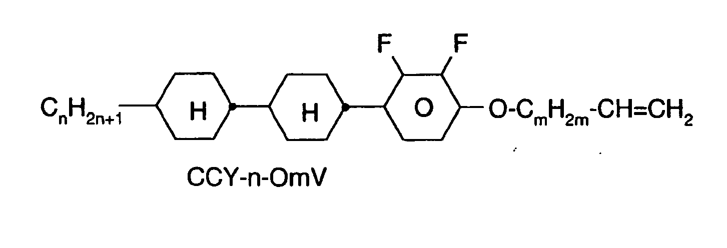

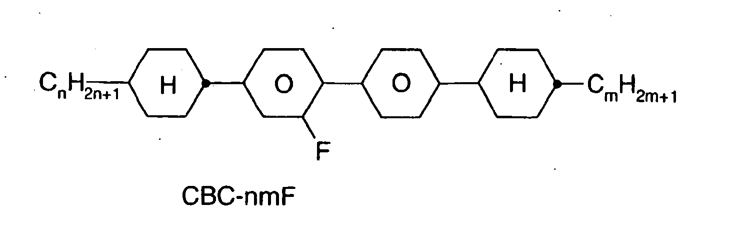

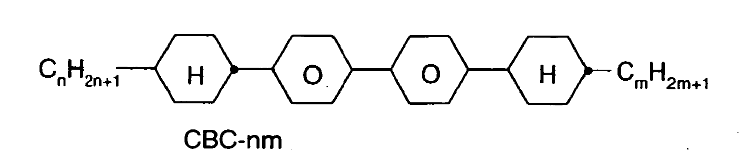

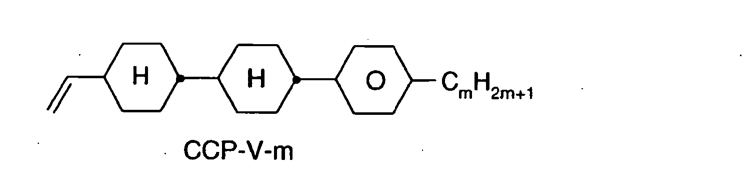

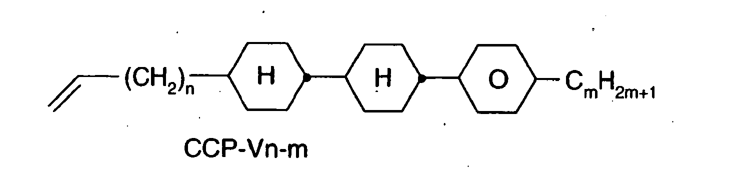

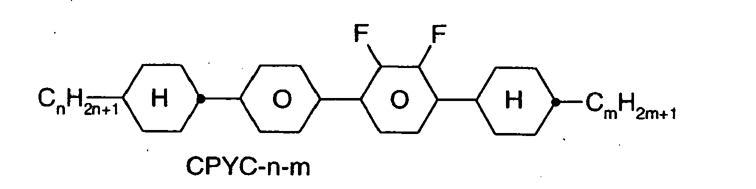

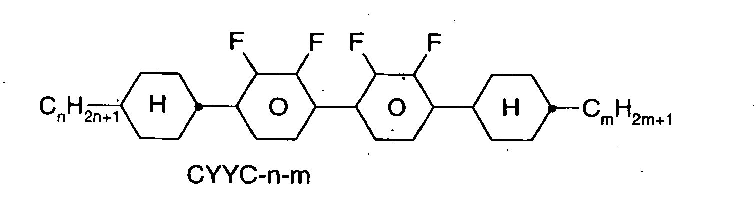

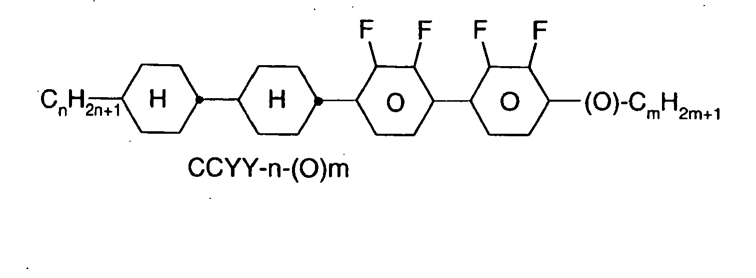

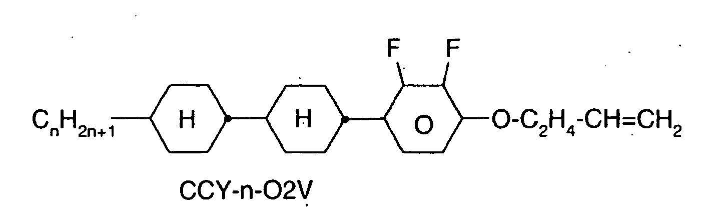

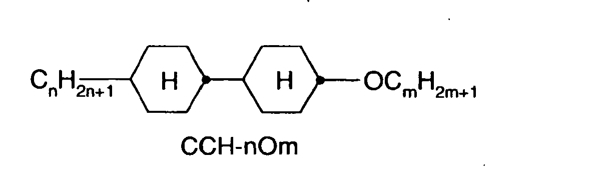

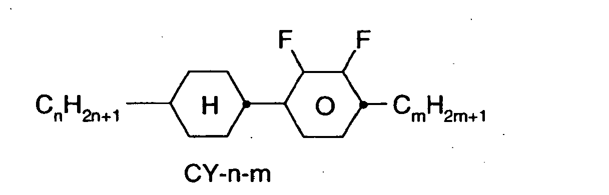

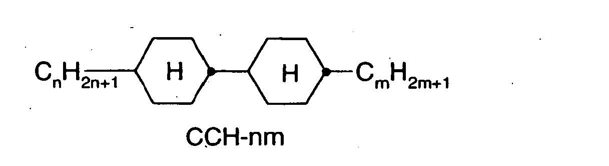

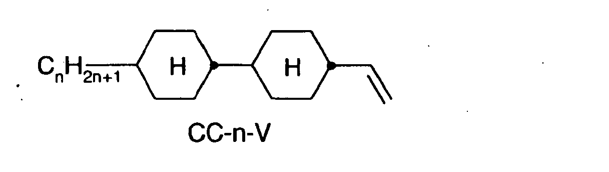

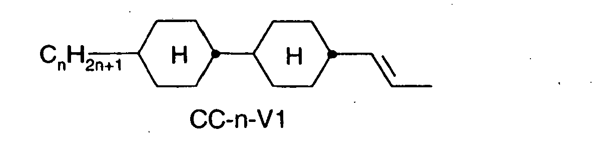

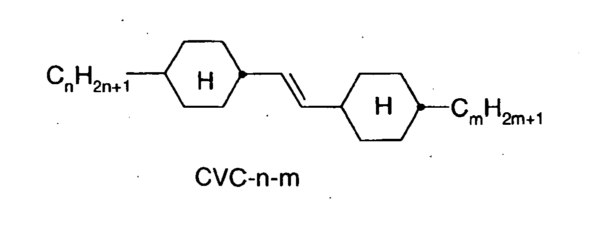

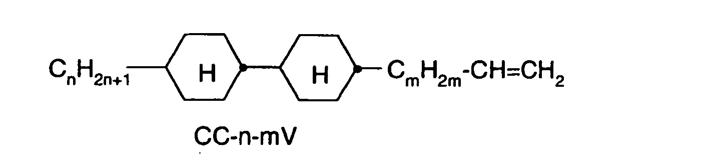

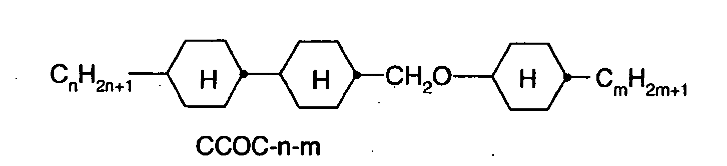

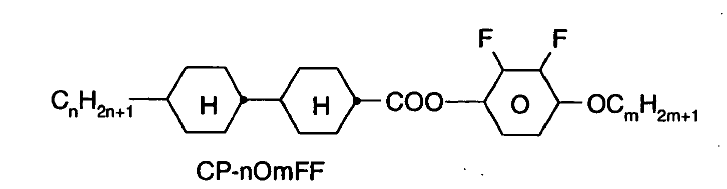

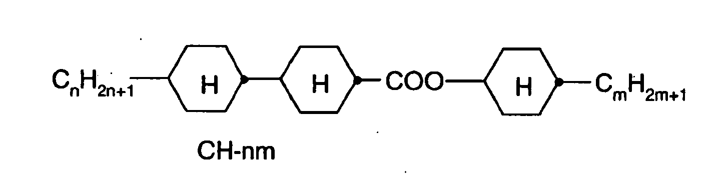

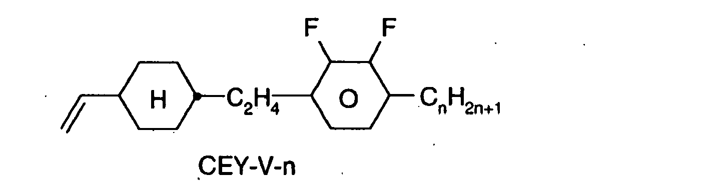

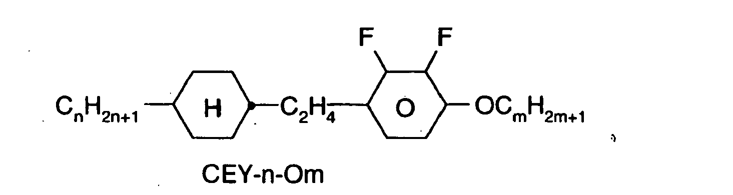

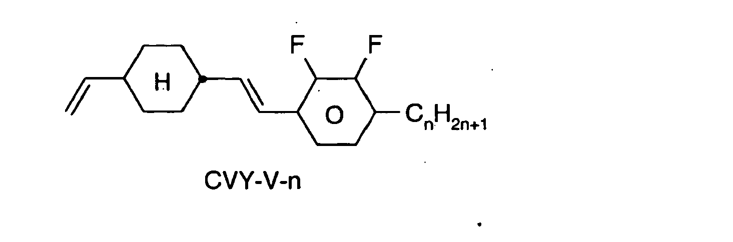

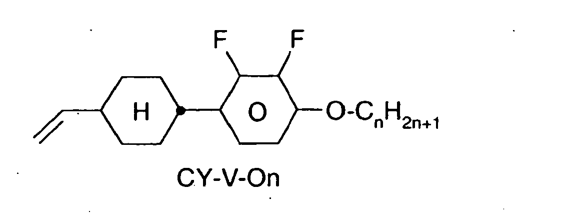

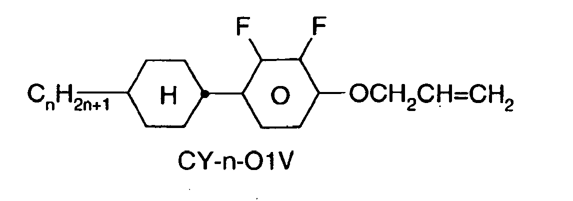

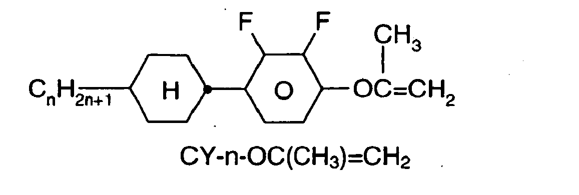

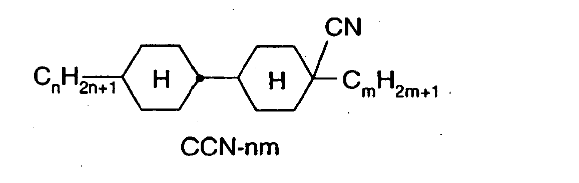

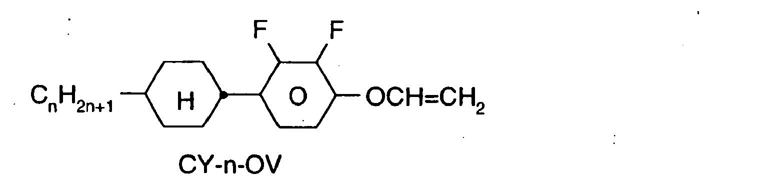

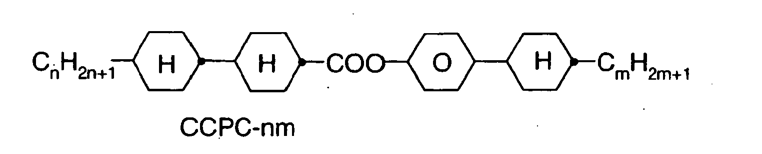

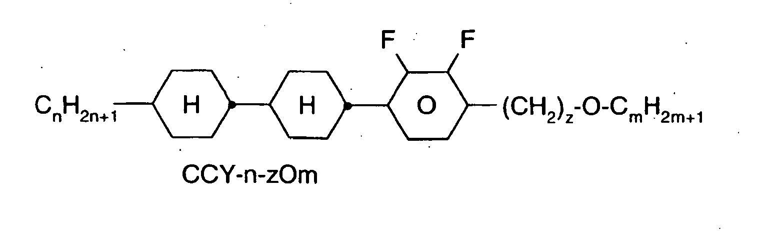

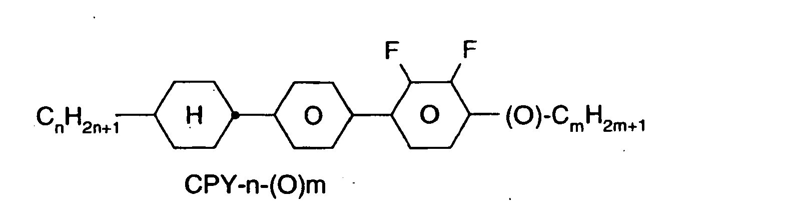

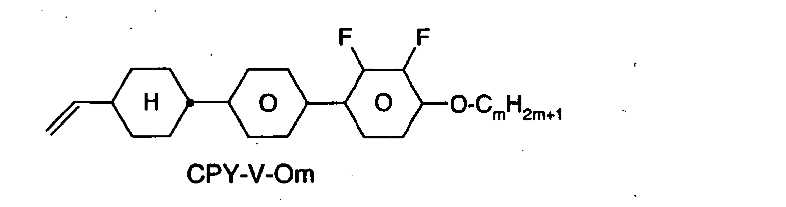

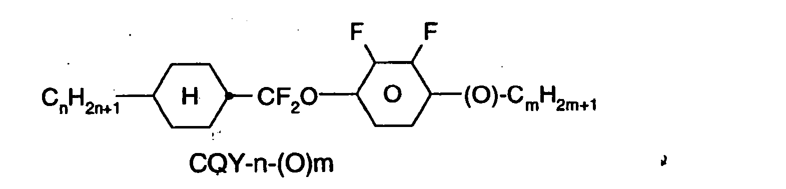

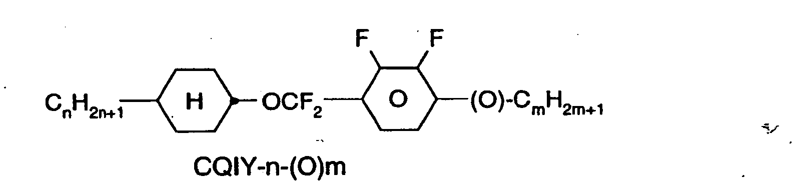

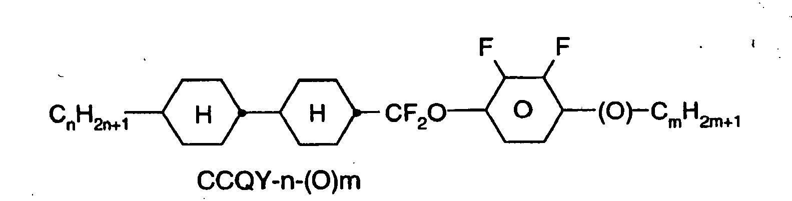

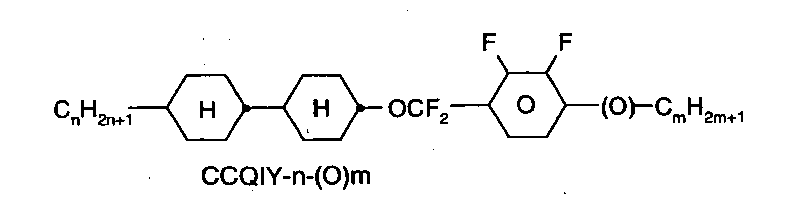

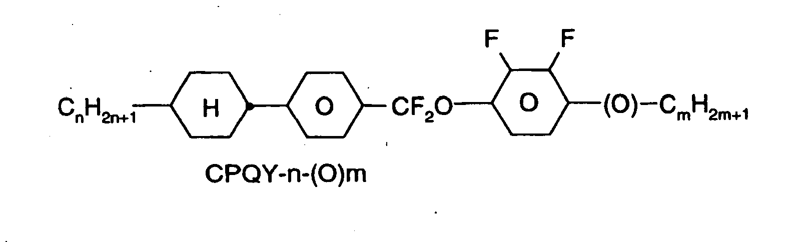

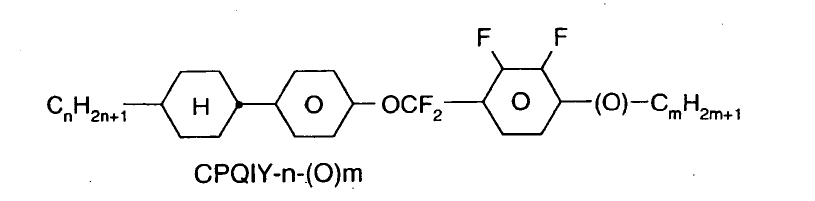

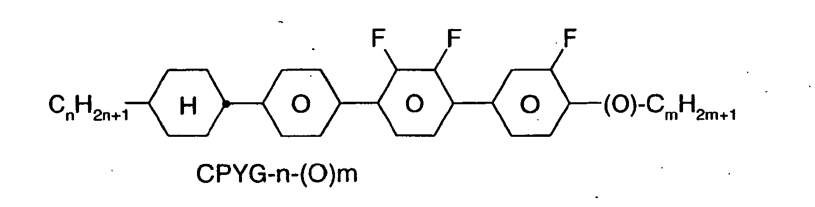

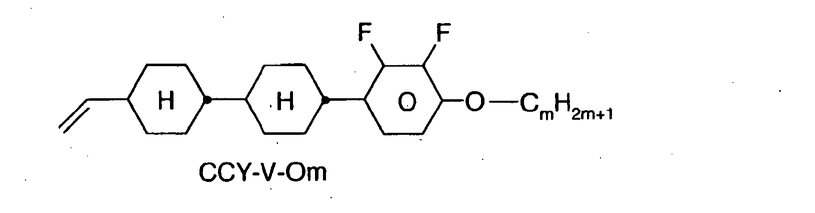

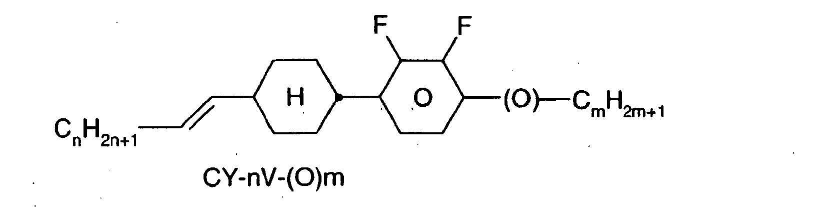

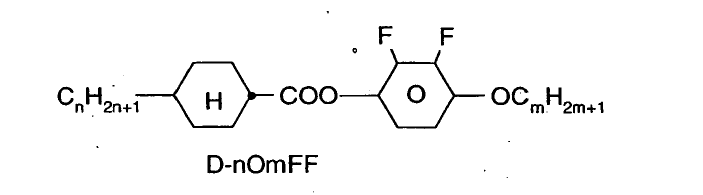

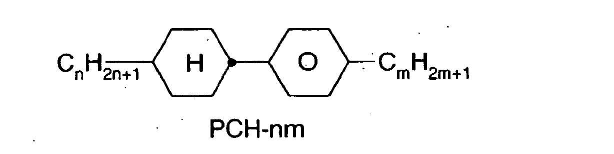

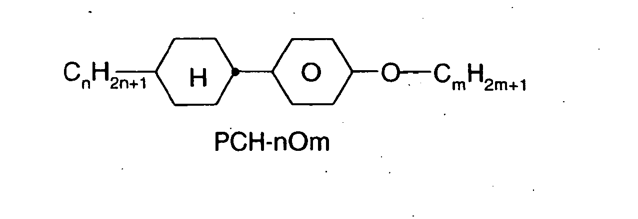

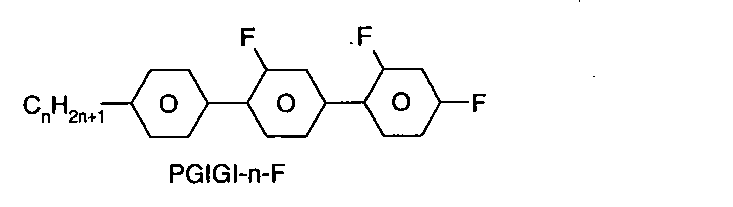

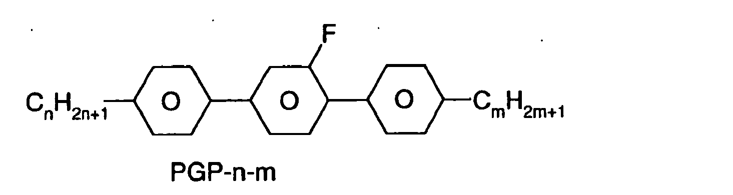

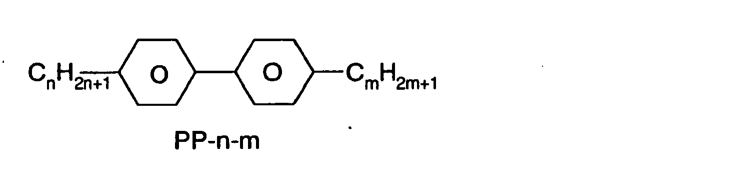

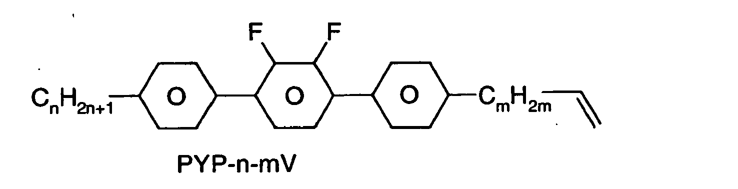

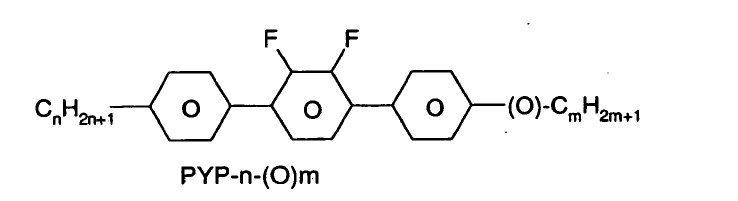

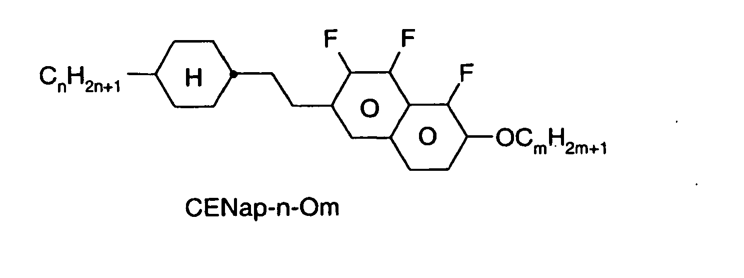

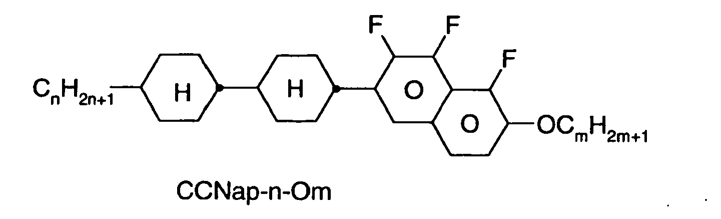

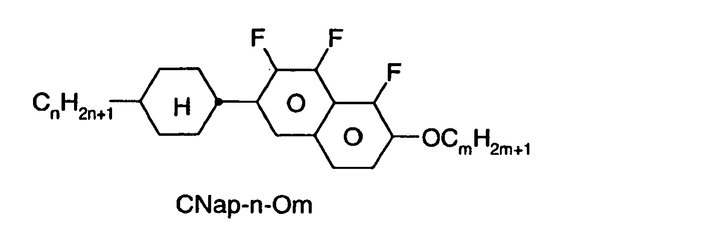

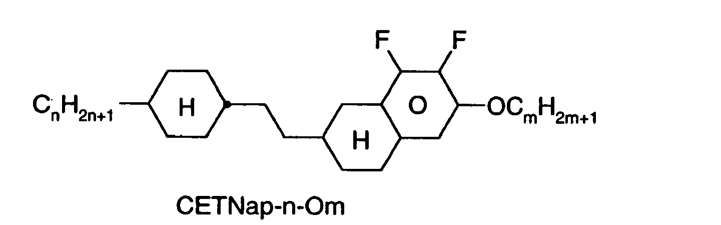

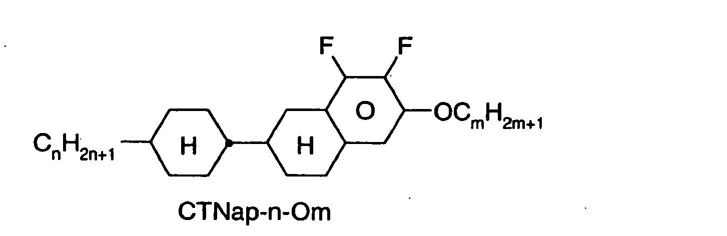

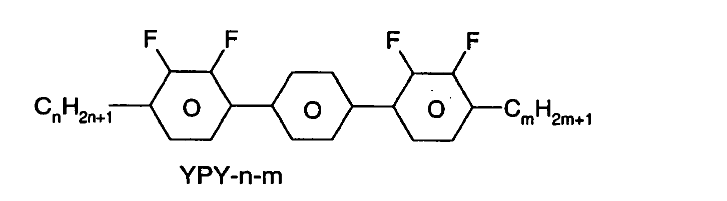

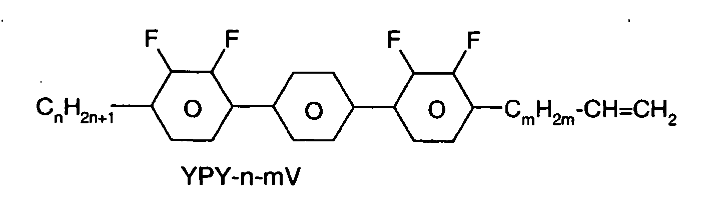

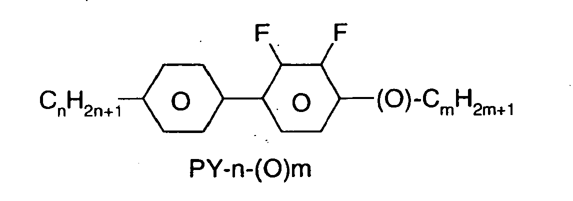

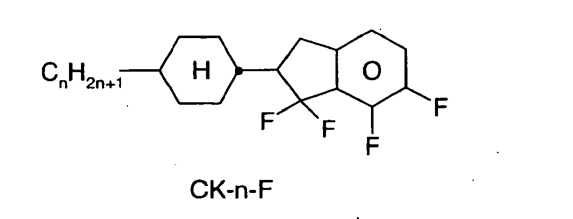

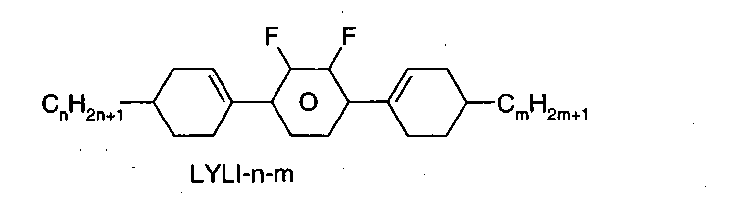

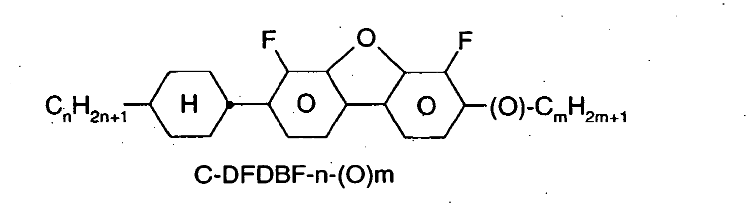

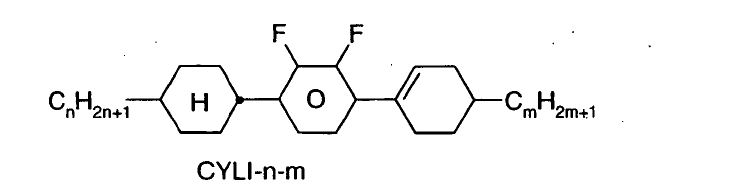

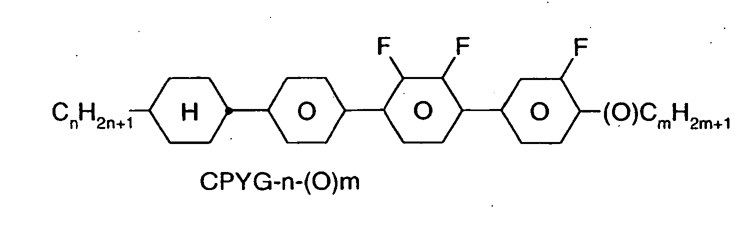

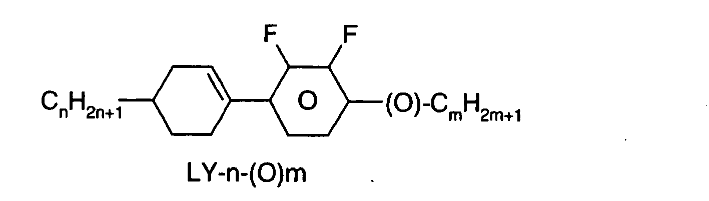

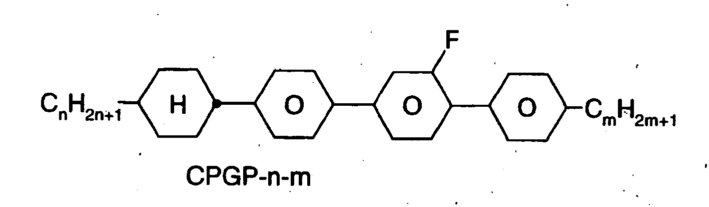

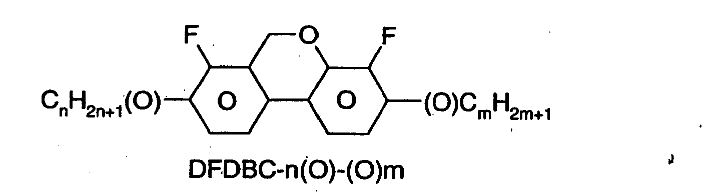

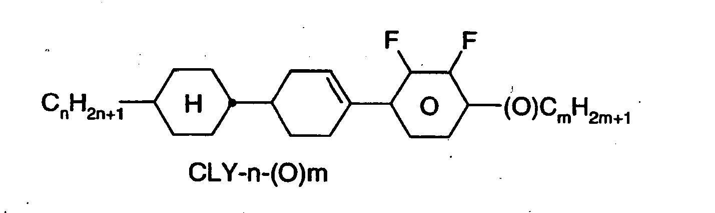

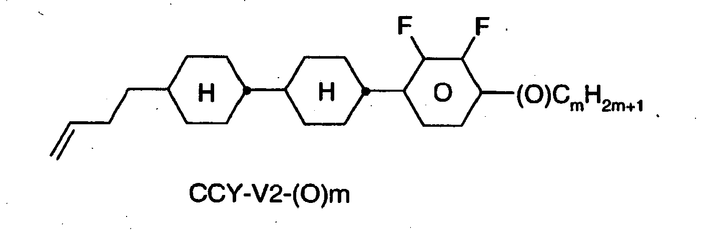

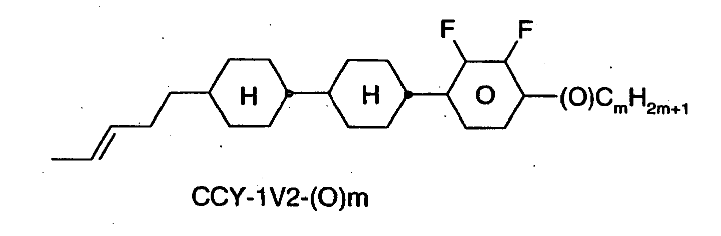

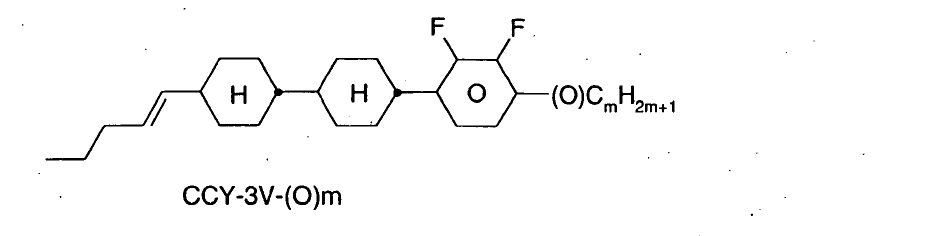

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA LCD-Anzeige einsetzbar sind.

Die Dielektrika können auch weitere, dem Fachmann bekannte und in der Literatur beschriebene Additive, wie z. B. UV-Absorber, Antioxidantien, Nanoteilchen, Radikalfänger, enthalten. Beispielsweise können 0-15 % pleochroitische Farbstoffe, Stabilisatoren oder chirale Dotierstoffe zugesetzt werden.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

In der Tabelle A werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,1-1,0 Gew.%, eingesetzt.

**Tabelle A**

| | |
|---|---|
| 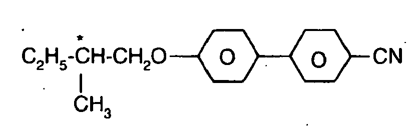 **C 15** | 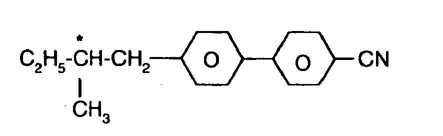 **CB 15** |
| 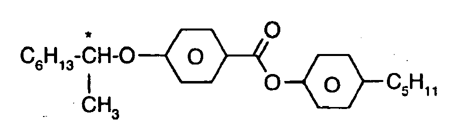 **CM 21** | |
| 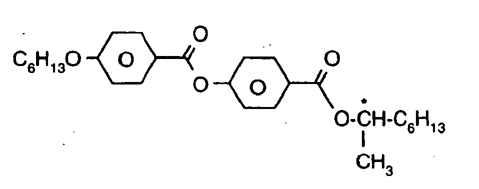 **R/S-811** | |
| 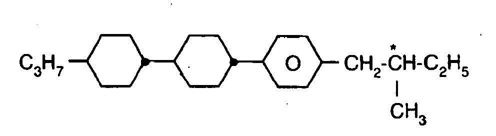 **CM 44** | |
| 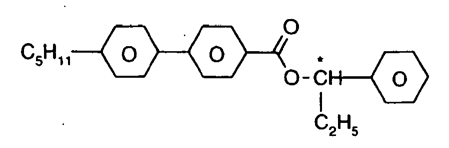 **CM 45** | 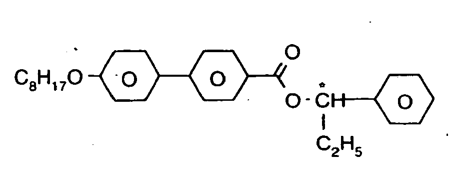 **CM 47** |
| 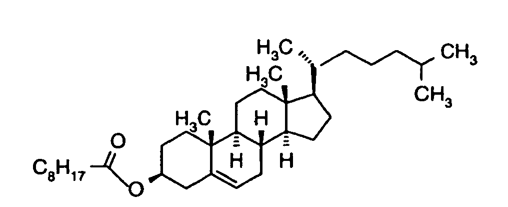 **CN** | |
| 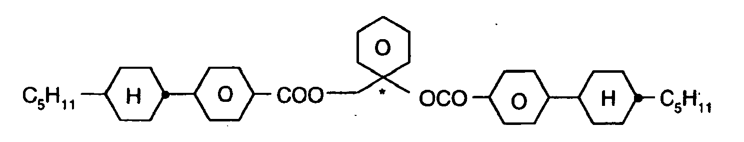 **R/S-1011** | |
| 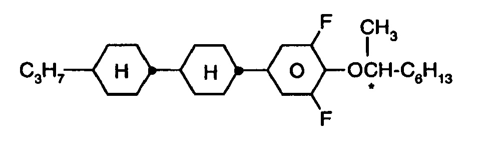 **R/S-2011** | |
| 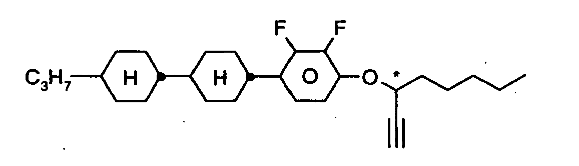 **R/S-3011** | |
| 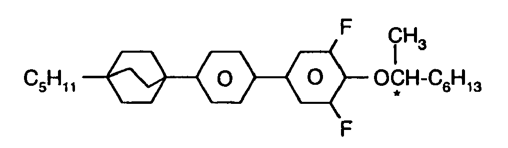 **R/S-4011** | |
| 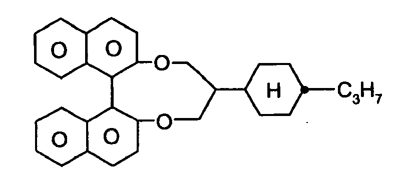 **R/S-5011** | |

Stabilisatoren, die beispielsweise den erfindungsgemäßen Mischungen in Mengen von bis zu 10 Gew.%, bezogen auf die gesamte Menge der Mischung, bevorzugt 0,01 bis 6 Gew.%, insbesondere 0,1 bis 3 Gew.%, zugesetzt werden können, werden nachfolgend in Tabelle B genannt.

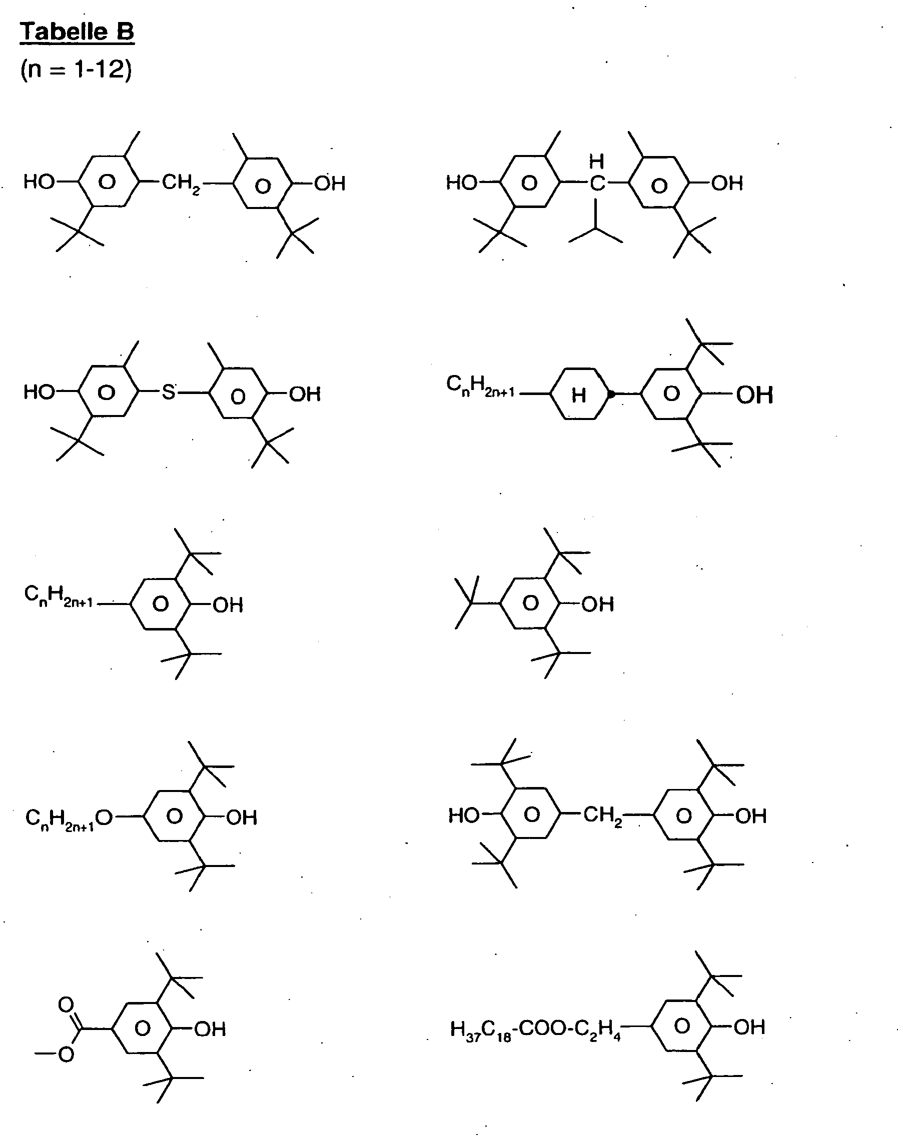

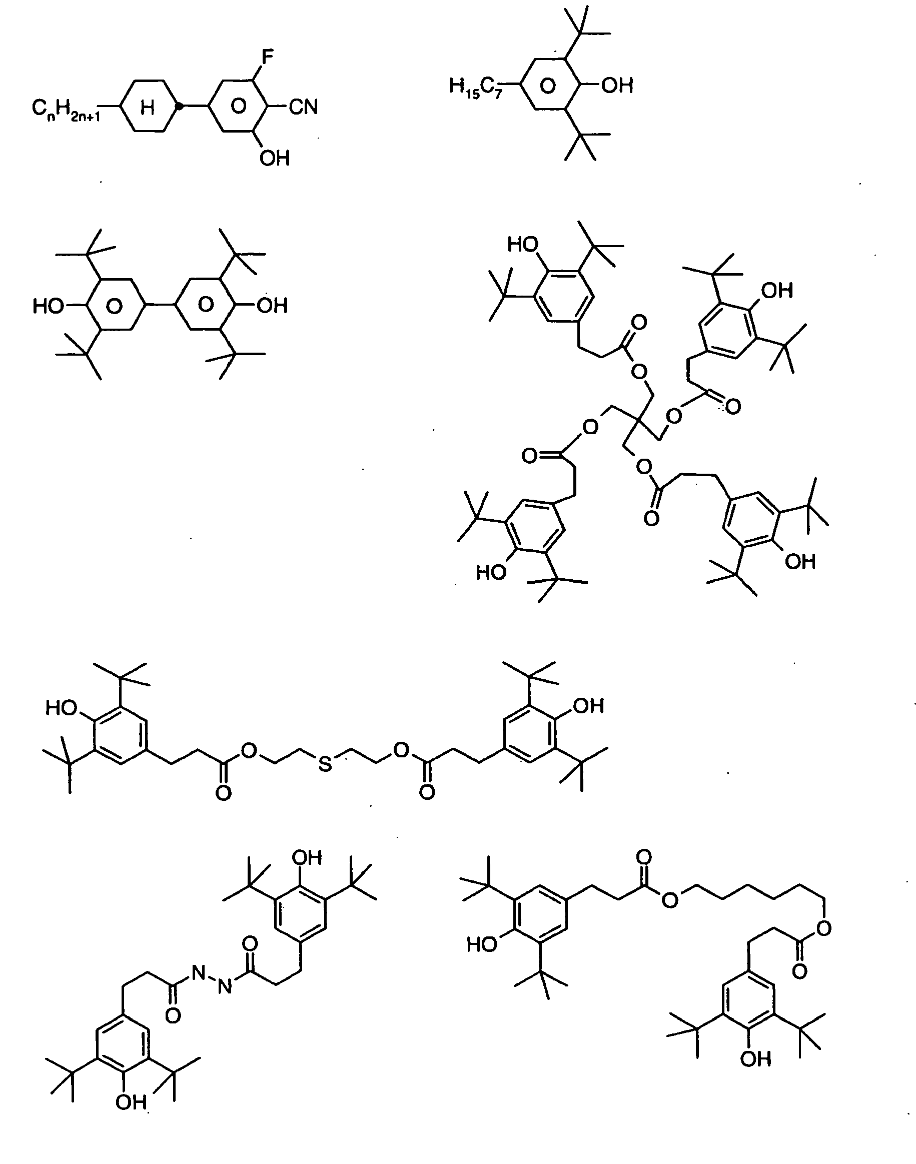

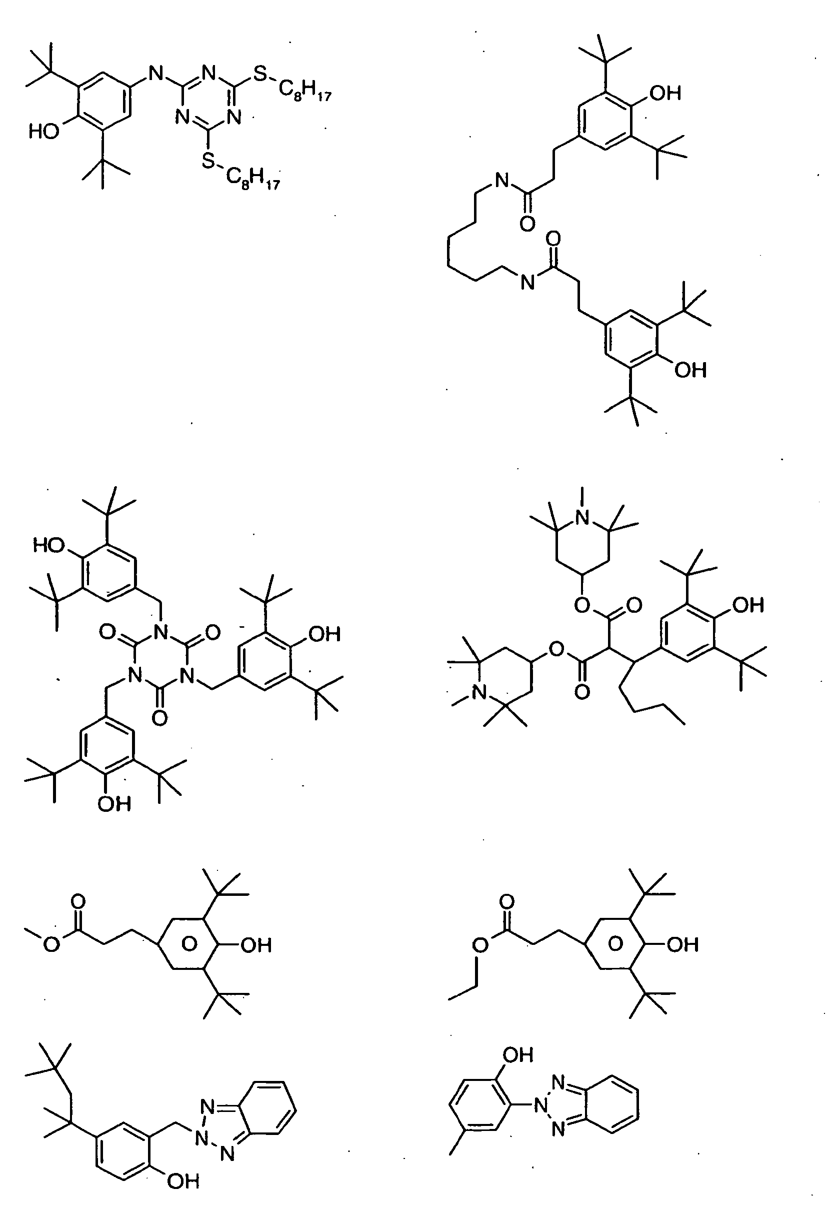

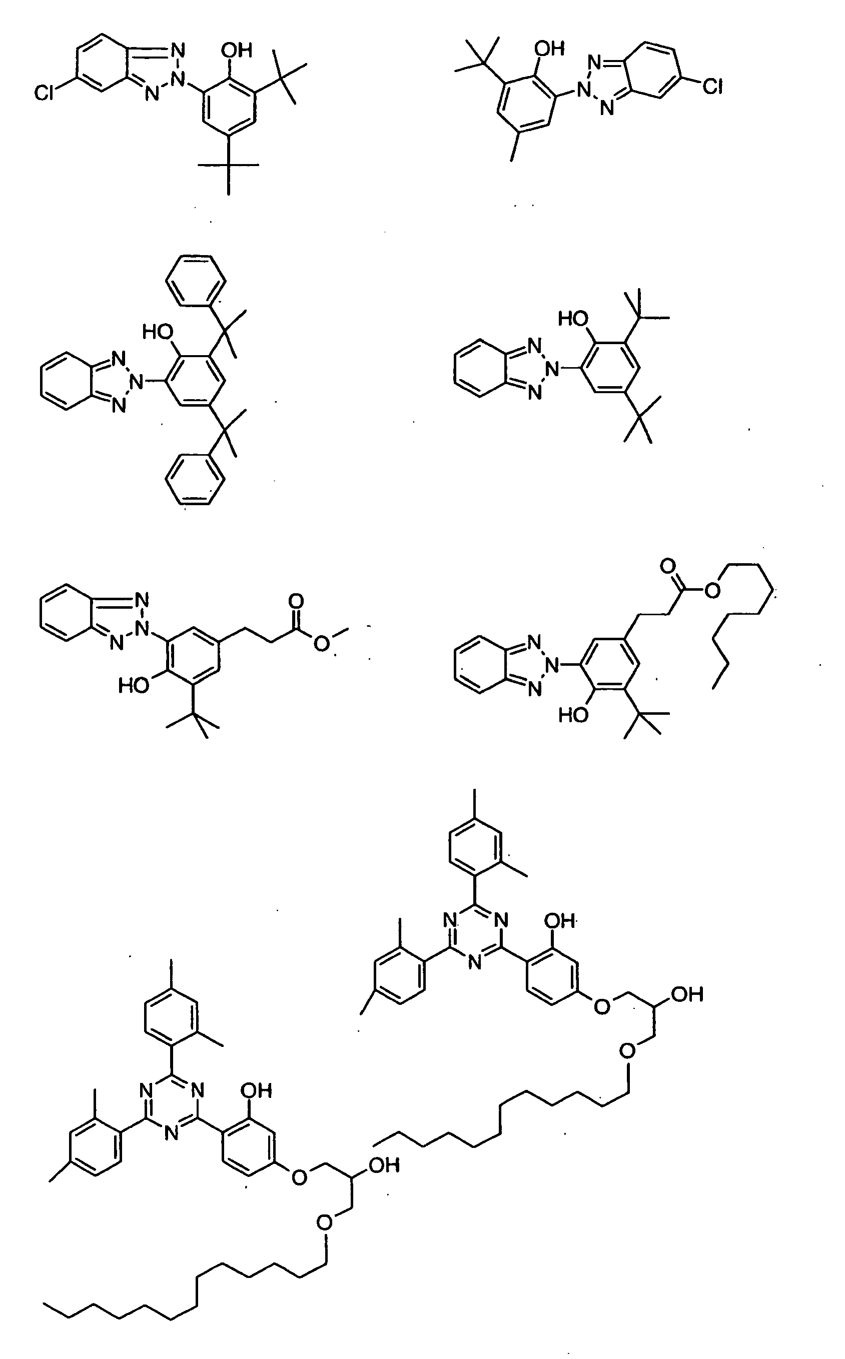

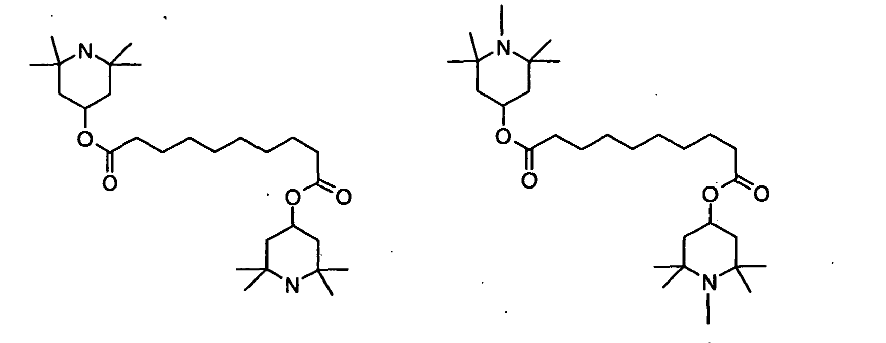

Die folgenden Beispiele sollen die Erfindung erläutern, ohne sie zu begrenzen. Vor- und nachstehend bedeuten
- Vₒ: Schwellenspannung, kapazitiv [V] bei 20 °C
- Δn: die optische Anisotropie gemessen bei 20 °C und 589 nm
- Δε: die dielektrische Anisotropie bei 20 °C und 1 kHz
- cp.: Klärpunkt [°C]
- K₁: elastische Konstante, "Splay"-Deformation bei 20 °C, [pN]
- K₃: elastische Konstante, "Bend"-Deformation bei 20 °C, [pN]
- γ₁: Rotationsviskosität gemessen bei 20 °C [mPa·s], bestimmt nach dem Rotationsverfahren in einem magnetischen Feld
- LTS: Tieftemperaturstabilität [Low temperature stability (nematische Phase)], bestimmt in Testzellen
- HR (20): Voltage holding ratio bei 20 °C [%]
- HR (100): Voltage holding ratio nach 5 min. bei 100 °C [%]
- HR (UV): Voltage holding ratio nach UV-Belastung [%]

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homeotrope Orientierung der Flüssigkristalle bewirken.

Alle Konzentrationen in dieser Anmeldung, soweit nicht explizit anders angegeben, beziehen sich auf die entsprechende Mischung oder Mischungskomponente. Alle physikalischen Eigenschaften werden nach "Merck Liquid Crystals, Physical Properties of Liquid Crystals", Status November 1997, Merck KGaA, Deutschland bestimmt und gelten für eine Temperatur von 20 °C, sofern nicht explizit anders angegeben.

### Mischungsbeispiele

### Beispiel 1

| | | | |
|---|---|---|---|
| CY-1V-O2 | 16,00 % | Klärpunkt [°C]: | 70 |
| CY-V-O4 | 14,00 % | Δn [589 nm, 20 °C]: | 0,0819 |
| CCY-V-O2 | 10,00 % | ε\|\|: | 3,6 |
| CCY-V-O4 | 10,00 % | ε_{⊥}: | 7,2 |
| CCY-V-1 | 9,00 % | Δε [1 kHz, 20 °C]: | -3,6 |
| CCY-V2-1 | 8,00 % | K₁ [pN, 20 °C]: | 11,8 |
| CCH-34 | 9,00 % | K₃ [pN, 20 °C]: | 14,3 |
| CCH-35 | 9,00 % | V₀ [V, 20 °C]: | 2,11 |
| CC-5-V | 9,00 % | γ₁ [mPa˙s, 20 °C]: | 103 |
| CC-3-V1 | 6,00 % | | |

### Beispiel 2

| | | | |
|---|---|---|---|
| CY-1V-O2 | 18,00 % | Klärpunkt [°C]: | 82,5 |
| CCY-V-O2 | 11,00 % | Δn [589 nm, 20 °C]: | 0,1100 |
| CCY-1V-O4 | 11,00 % | ε\|\|: | 3,4 |
| CPY-V-O4 | 6,00 % | ε_{⊥}: | 6,4 |
| PYP-2-2V | 15,00 % | Δε [1 kHz, 20 °C]: | -3,0 |
| CC-3-V1 | 11,00 % | K₁ [pN, 20 °C]: | 13,2 |
| CC-4-V | 20,00 % | K₃ [pN, 20 °C]: | 15,9 |
| CC-5-V | 8,00 % | V₀ [V, 20 °C]: | 2,45 |
| | | γ₁ [mPa·s, 20 °C]: | 105 |

## Patentansprüche

1. Flüssigkristallines Medium, **dadurch gekennzeichnet, dass** es
mindestens eine Verbindung der Formel IA, 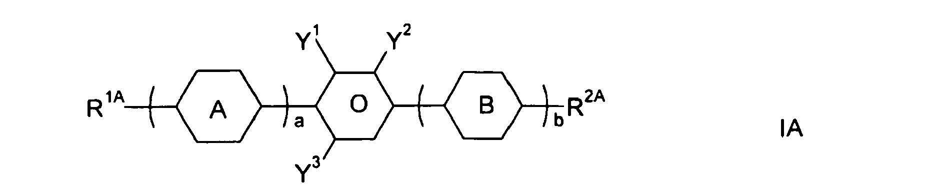 wobei der Anteil an Verbindungen der Formel IA im Gesamtgemisch ≥ 15 Gew.% beträgt,
und mindestens eine Verbindung ausgewählt aus der Gruppe der Verbindungen der Formeln IB, IC und ID, 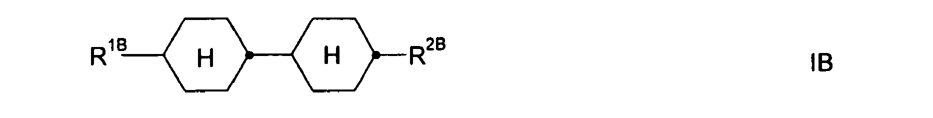 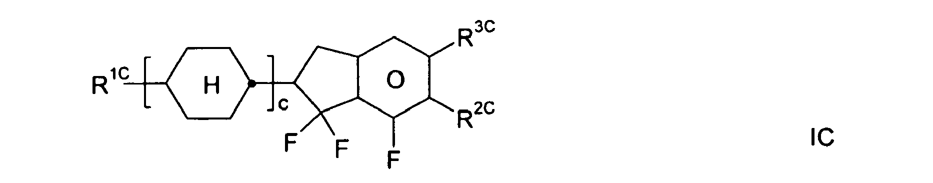 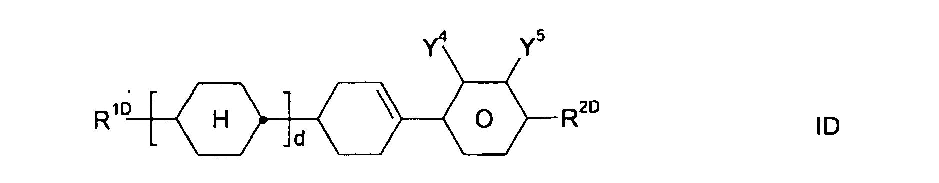 worin
R^{1A} CH₃CH=CH, C₂H₅CH=CH, C₃H₇CH=CH, CH₂=CHC₂H₄, CH₃CH=CHC₂H₄, CH₂=CHCH₂, CH₃CH=CHCH₂ oder C₂H₅CH=CHCH₂,
R^{1B} einen unsubstituierten Alkenylrest mit bis zu 6 C-Atomen, wobei in diesen Resten auch eine oder mehrere CH₂-Gruppen durch -O-, -S-, 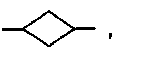 -C=C-, -CF₂O-, -OCF₂-, -OC-O- oder -O-CO- so ersetzt sein können, dass O-Atome nicht direkt miteinander verknüpft sind,
R^{2A}, R^{2B}, R^{1C}, R^{1D} und R^{2D} jeweils unabhängig voneinander einen unsubsti- tuierten, einen einfach durch CN oder CF₃ oder mindestens einfach durch Halogen substituierten Alkyl- oder Alkenylrest mit bis zu 6 C-Atomen, wobei in diesen Resten auch eine oder mehrere CH₂-Gruppen durch -O-, -S-, 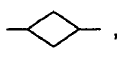 -C≡C-, -CF₂O-, -OCF₂-, -OC-O- oder -O-CO- so ersetzt sein können, dass O-Atome nicht direkt miteinander verknüpft sind, 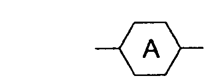 und 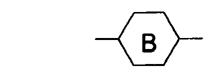 jeweils unabhängig voneinander 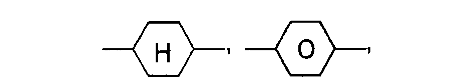 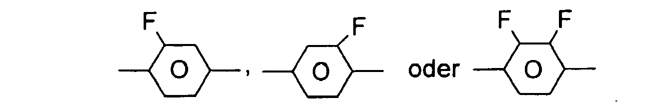
Y¹, Y², Y⁴ und Y⁵ jeweils unabhängig voneinander F, Cl, CF₃, CH₂F, OCF₃, OCH₂F, OCHF₂ oder CN,
Y³ H oder CH₃,
R^{2C} H oder F,
R^{3C} H, CH₃, C₂H₅ oder n-C₃H₇,
a und b jeweils unabhängig voneinander 0, 1 oder 2, wobei a+b ≥ 1 ist,
c 1 oder 2, und
d 0 oder 1
bedeuten,
enthält.

2. Flüssigkristallines Medium nach Anspruch 1, **dadurch gekennzeichnet, dass** in den Verbindungen der Formel IA
Y¹ und Y² beide Fluor und Y³= H
Y¹ = F, Y² = Cl und Y³ = H
oder
Y¹ =Cl, Y² = F und Y³ = H
bedeuten.

3. Flüssigkristallines Medium nach Anspruch 1 oder 2, **dadurch gekennzeichnet, dass** es zusätzlich eine oder mehrere Verbindungen der Formel III, 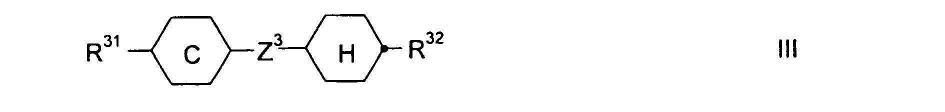 worin
R³¹ und R³² jeweils unabhängig voneinander einen geradkettigen Alkyl-, Alkoxyalkyl- oder Alkoxyrest mit bis zu 12 C-Atomen, und 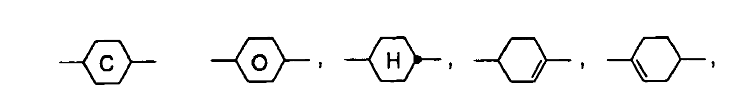 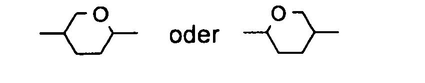
Z³ Einfachbindung, -CH₂CH₂-, -CH=CH-, -CF₂O-, -OCF₂-, -CH₂O-, -OCH₂-, -COO-, -OCO-, -C₂F₄-, -CF=CF- bedeuten, enthält.
worin Y¹ und Y² die in Anspruch 1 angegebenen Bedeutungen haben und Alkyl einen geradkettigen Alkylrest mit 1-6 C-Atomen bedeutet,
enthält.

4. Flüssigkristallines Medium nach einem oder mehreren der Ansprüche 1 bis 3, **dadurch gekennzeichnet, dass** das Medium mindestens eine Verbindung der Formeln

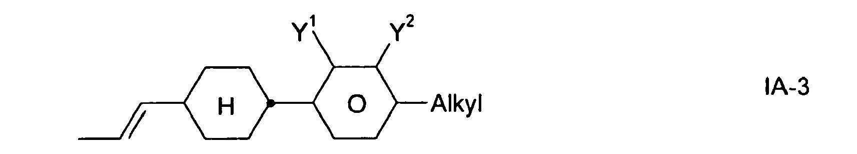

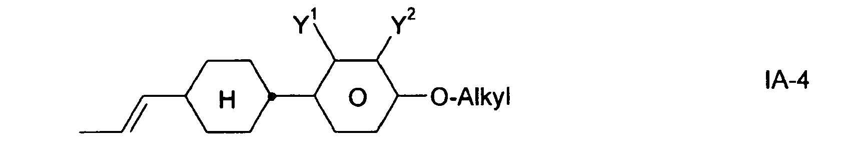

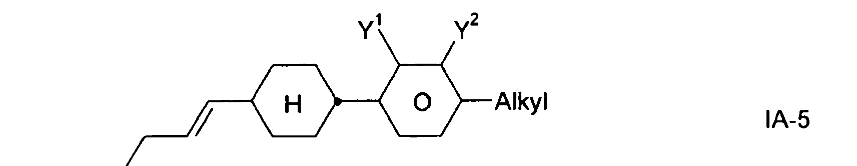

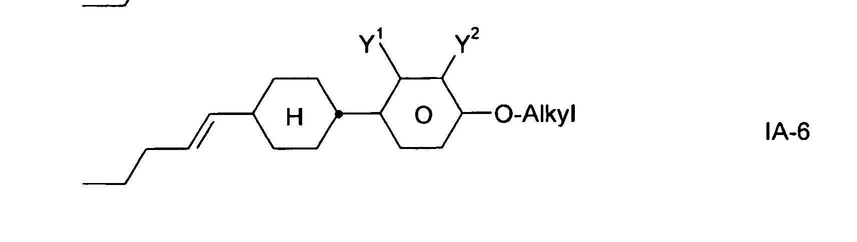

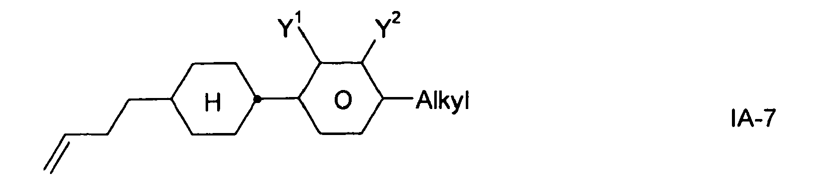

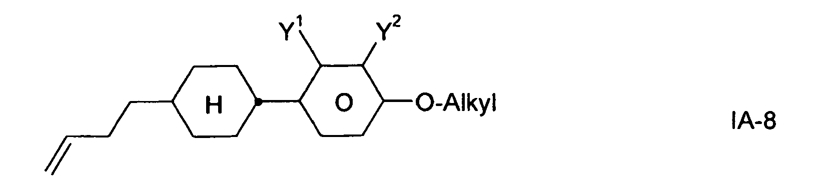

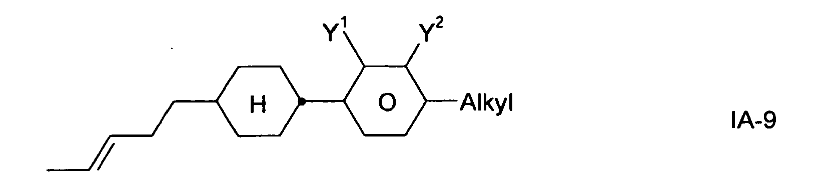

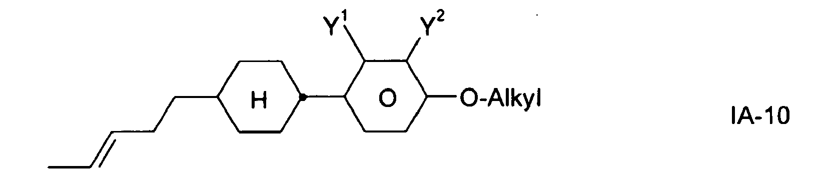

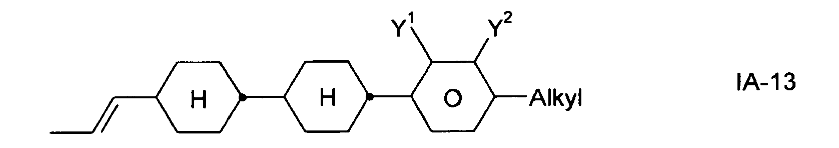

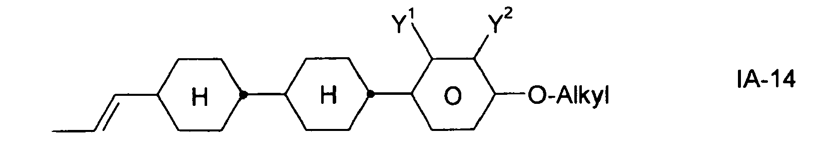

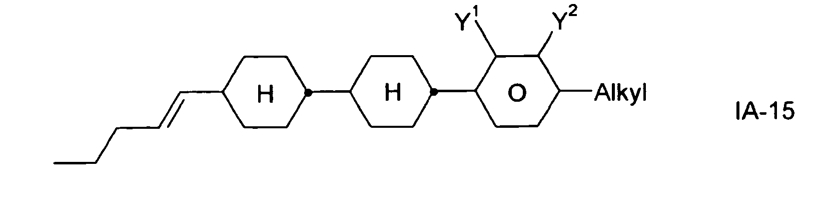

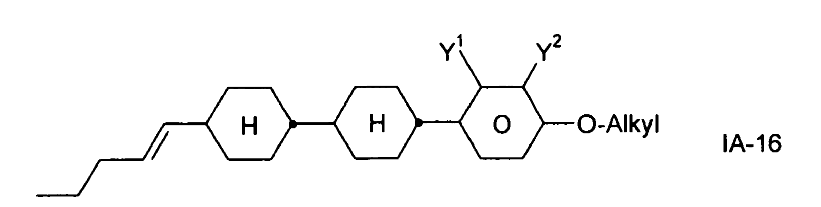

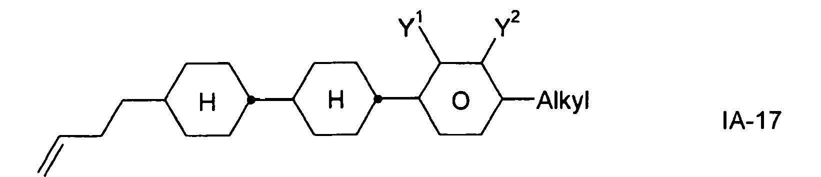

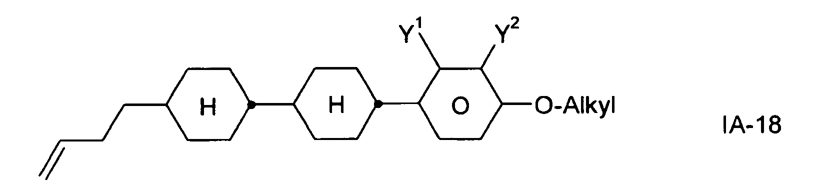

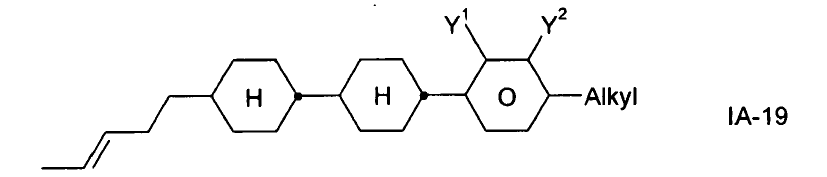

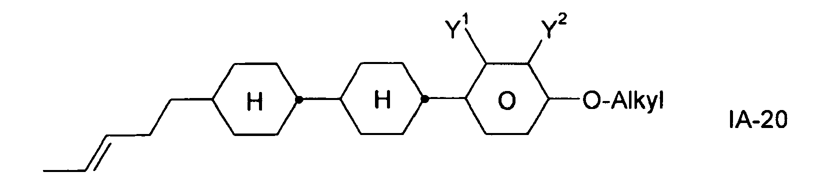

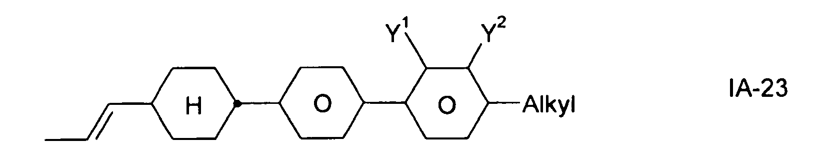

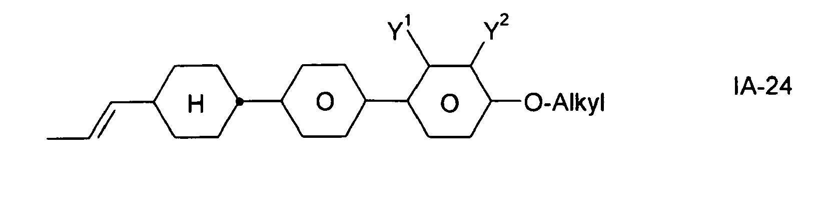

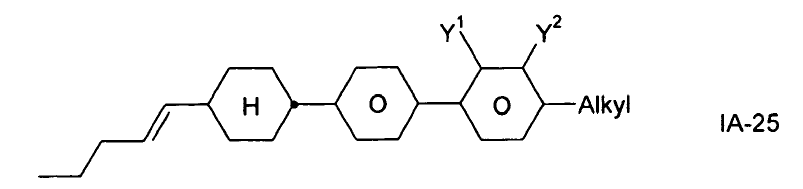

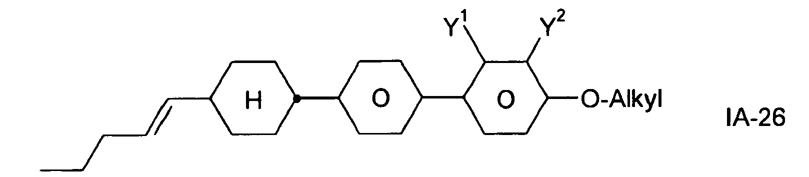

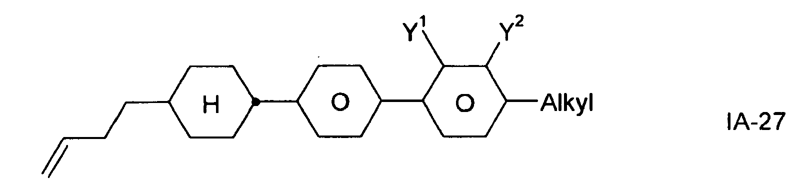

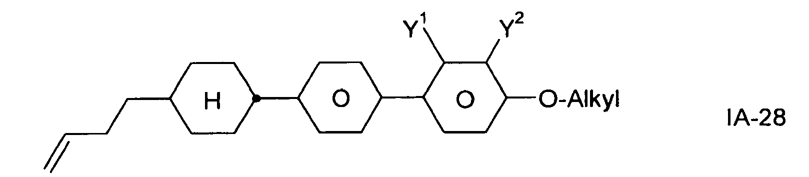

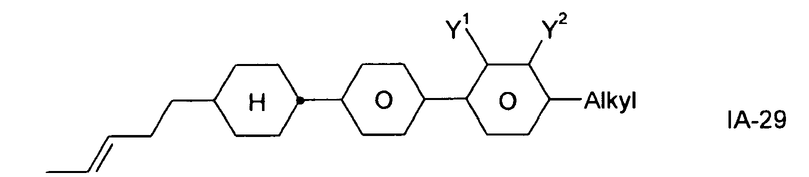

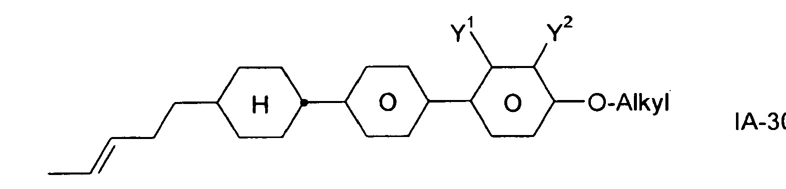

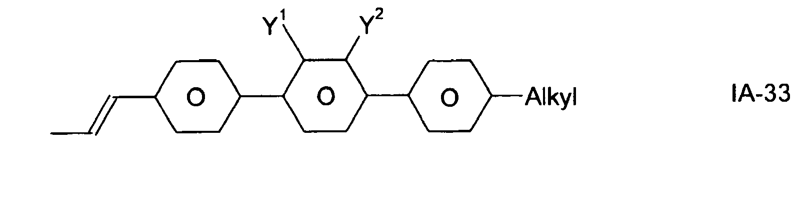

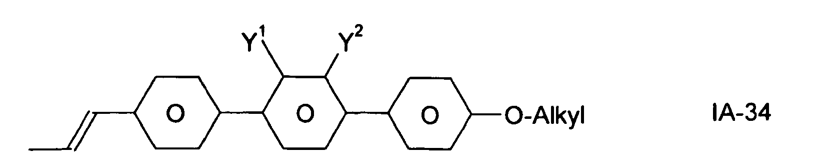

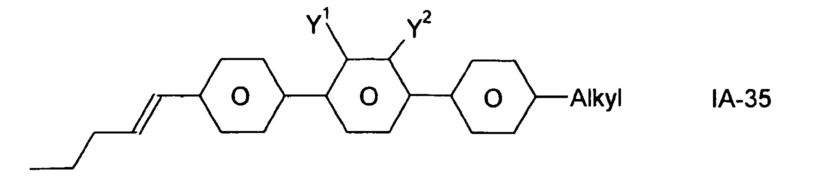

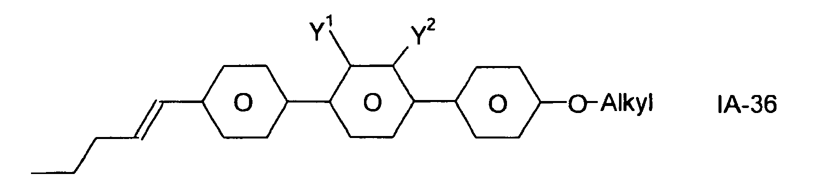

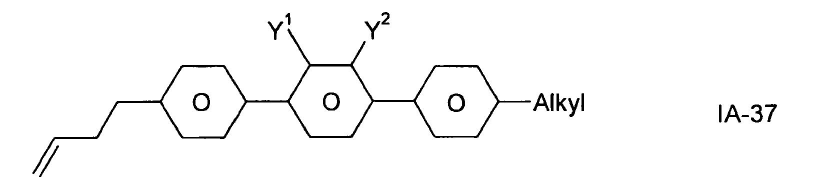

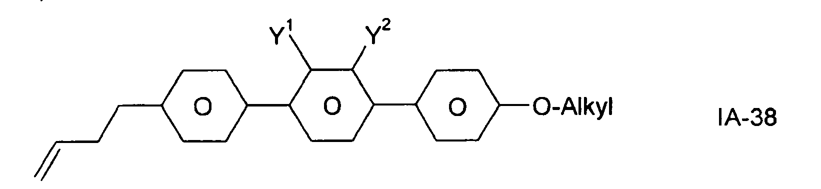

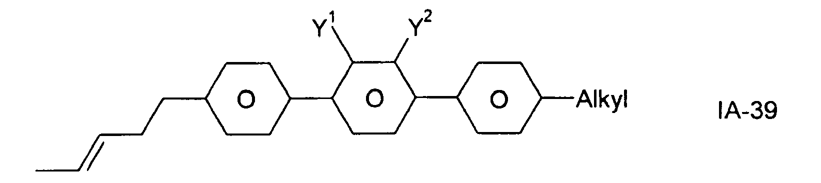

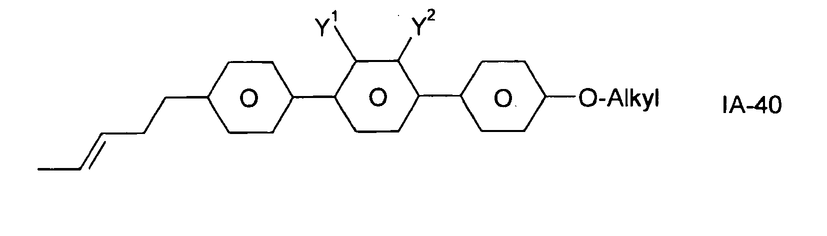

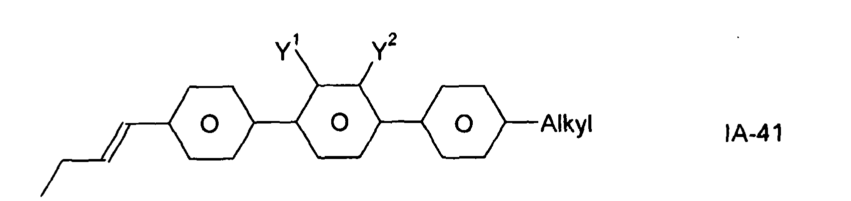

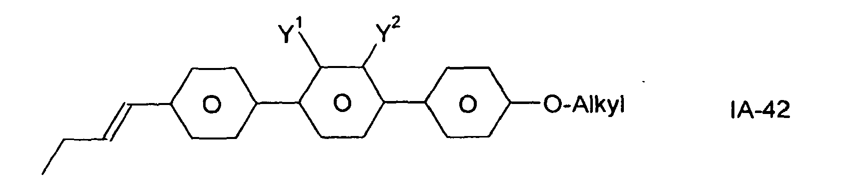

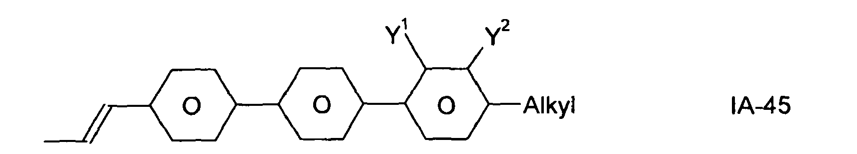

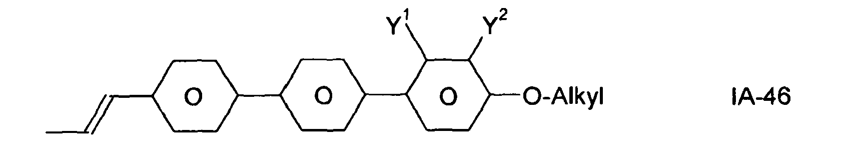

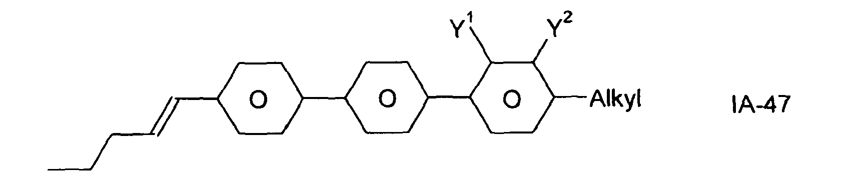

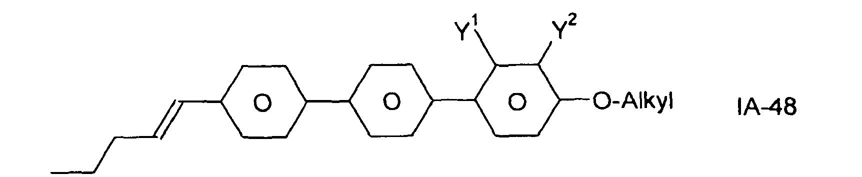

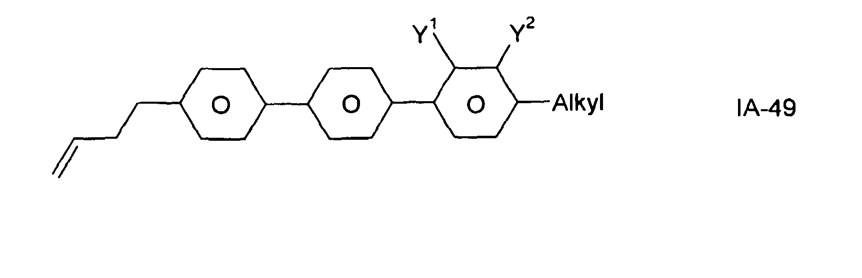

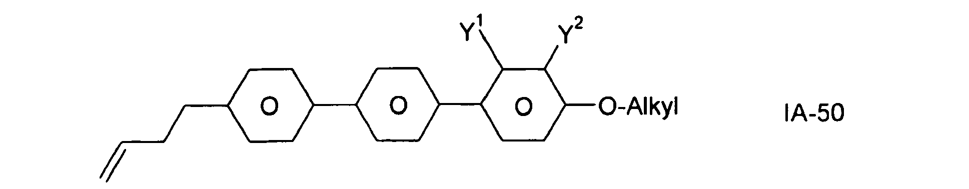

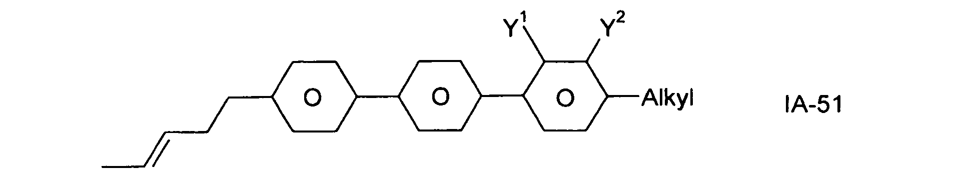

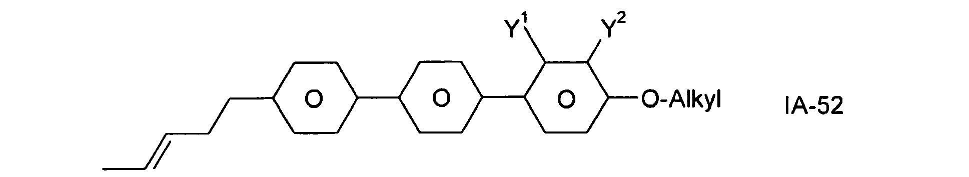

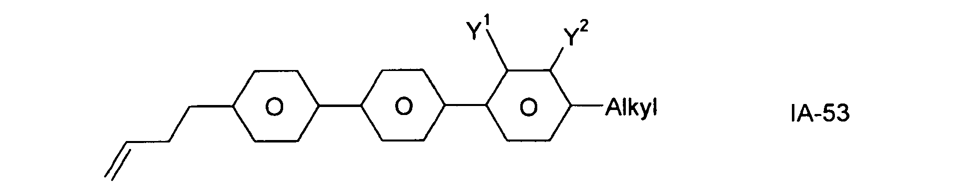

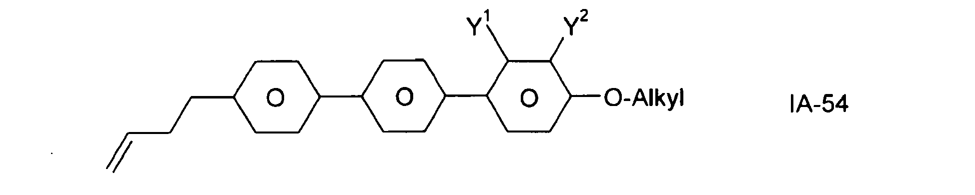

5. Flüssigkristallines Medium nach einem oder mehreren der Ansprüche 1 bis 4, **dadurch gekennzeichnet, dass** das Medium zusätzlich eine oder mehrere Verbindungen der Formeln 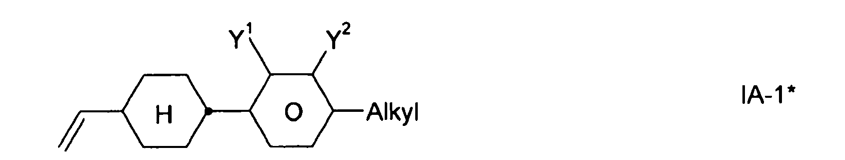 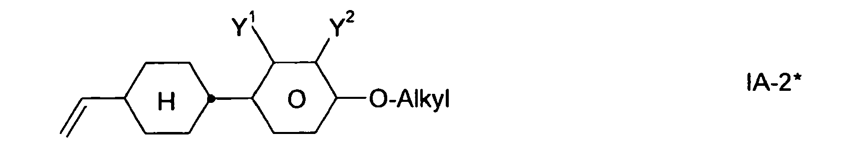 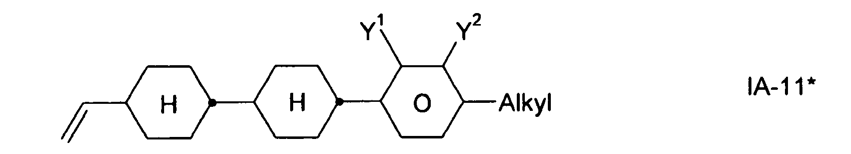 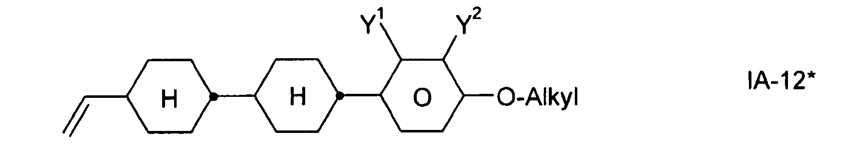 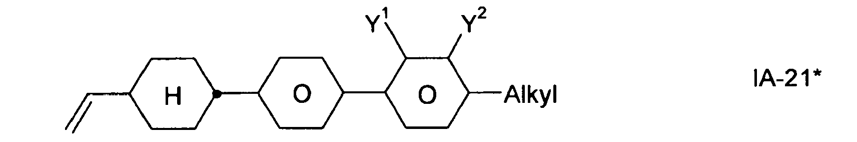 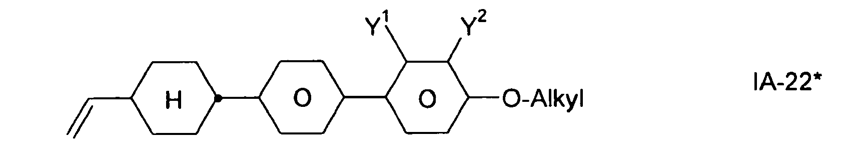 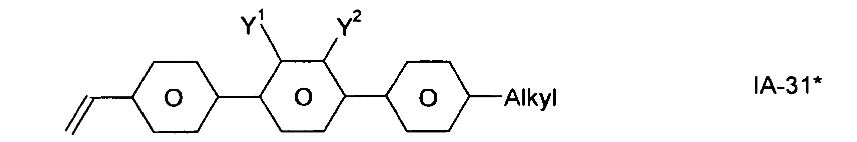 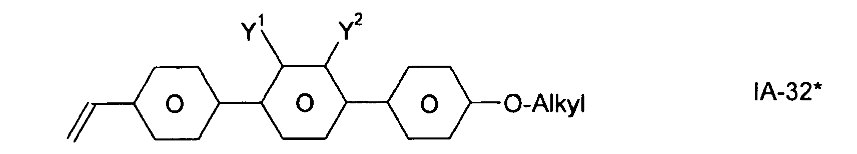 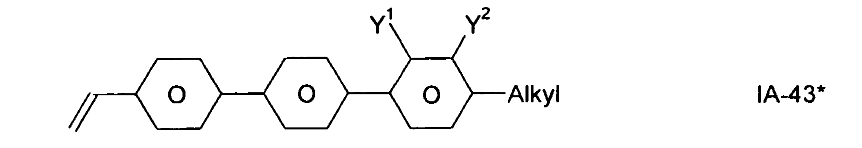 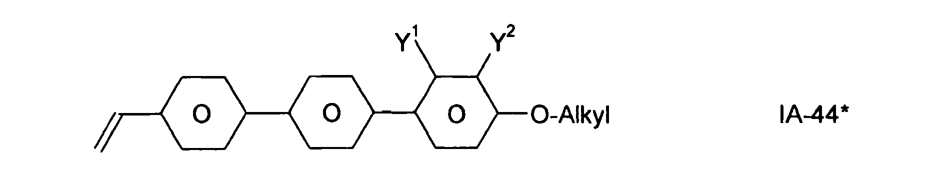 worin Y¹ und Y² die in Anspruch 1 angegebenen Bedeutungen haben und Alkyl einen geradkettigen Alkylrest mit 1-6 C-Atomen bedeutet,
enthält.

6. Flüssigkristallines Medium nach einem oder mehreren der Ansprüche 1 bis 5, **dadurch gekennzeichnet, dass** das Medium eine oder mehrere Verbindungen der Formeln, 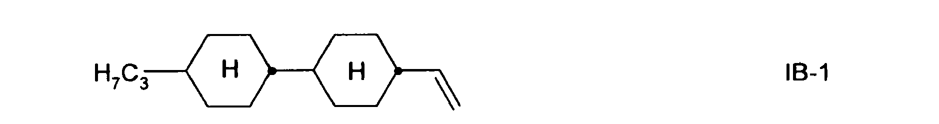 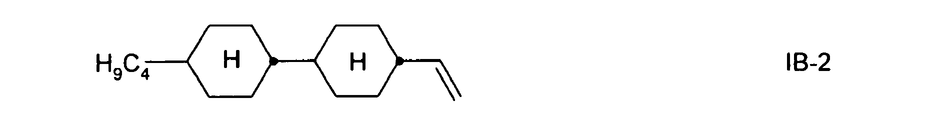 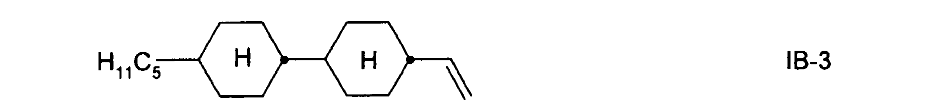 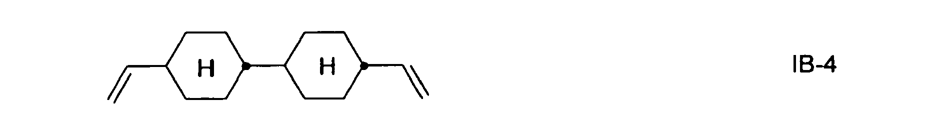 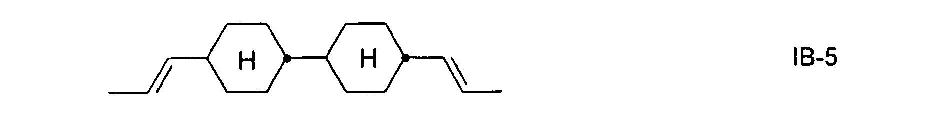 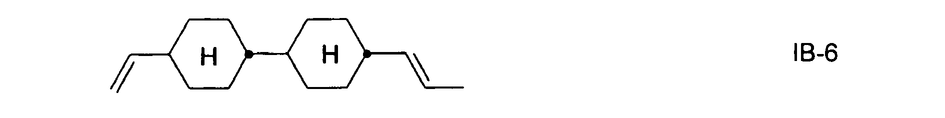 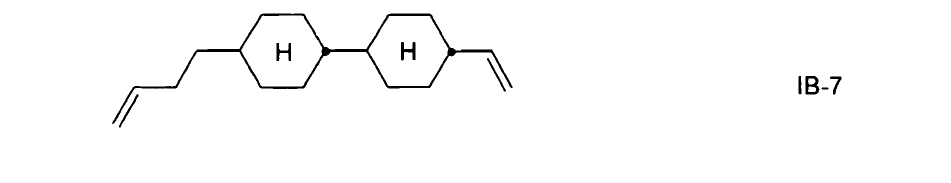 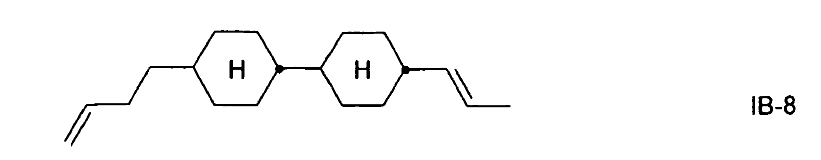 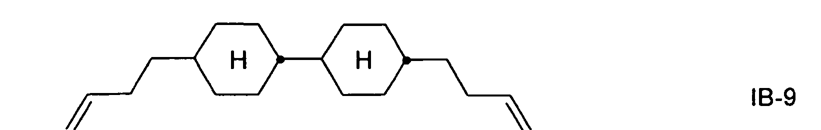 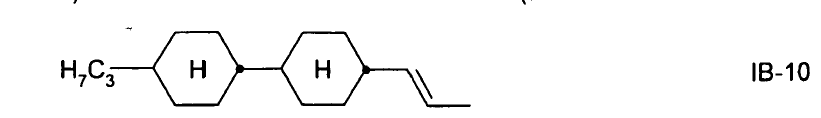 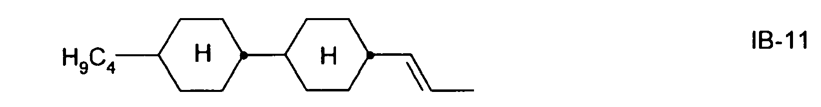 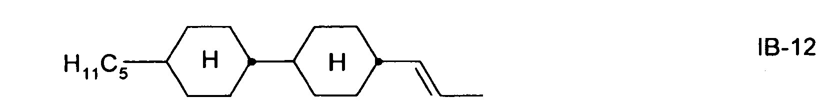 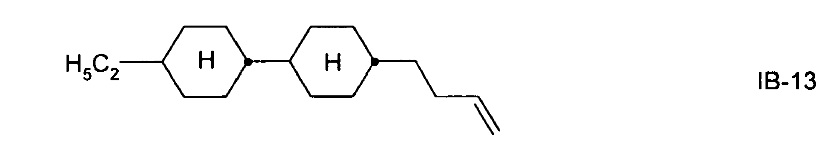 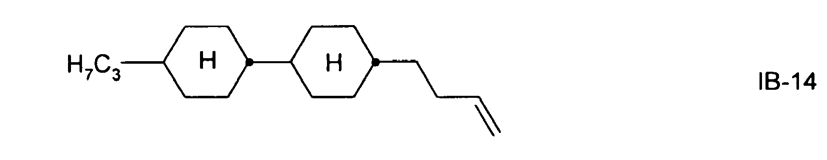 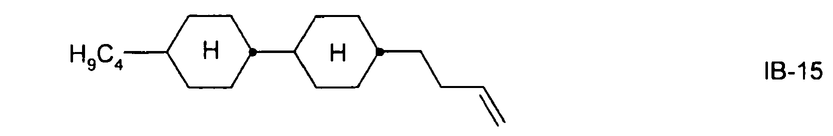 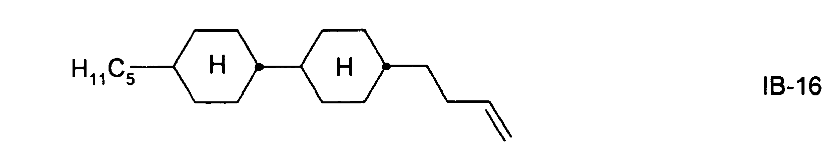 enthält.

7. Flüssigkristallines Medium nach einem oder mehreren der Ansprüche 1 bis 6, **dadurch kennzeichnet, dass** das Medium eine oder mehrere Verbindungen der Formeln IC-1 bis IC-16, 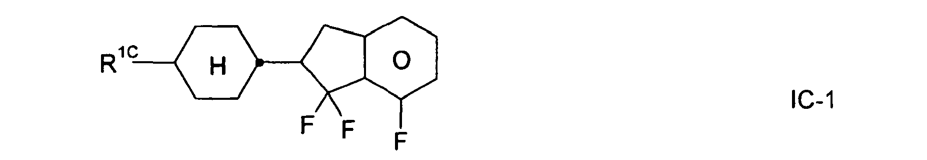 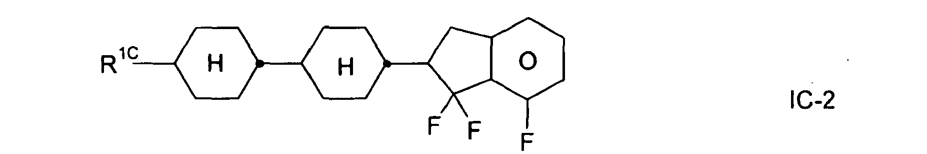 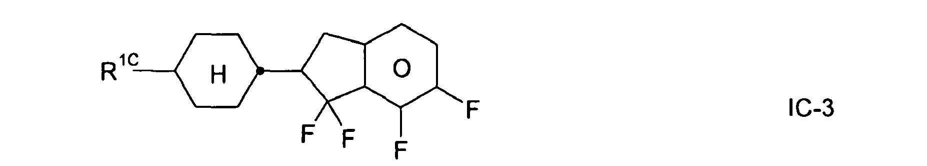 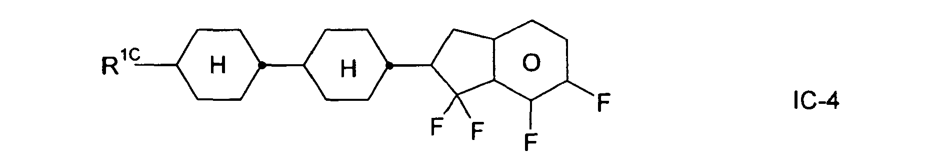 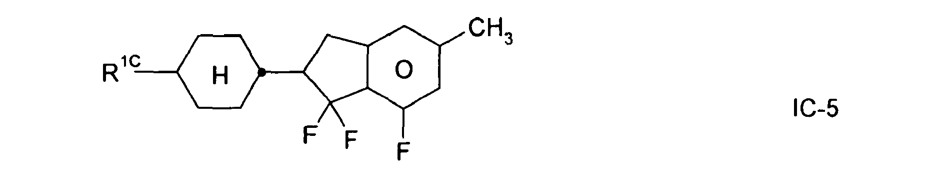 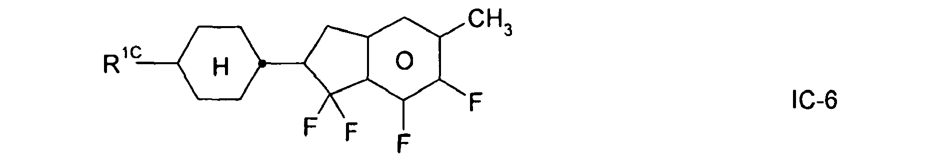 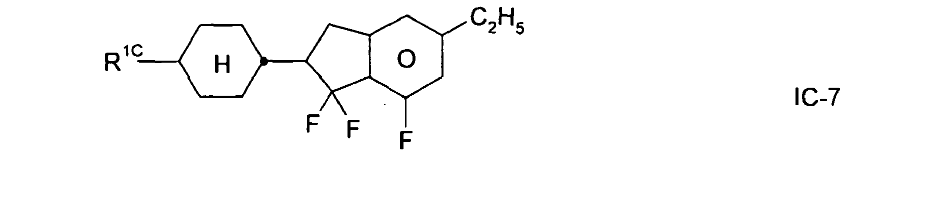 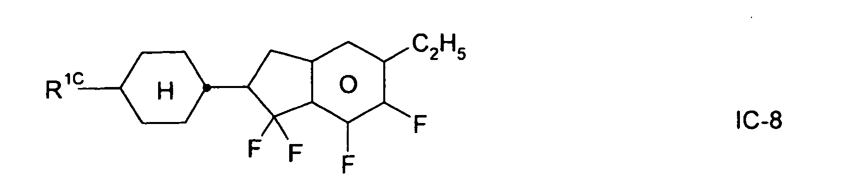 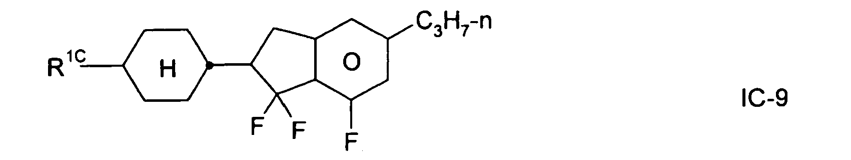 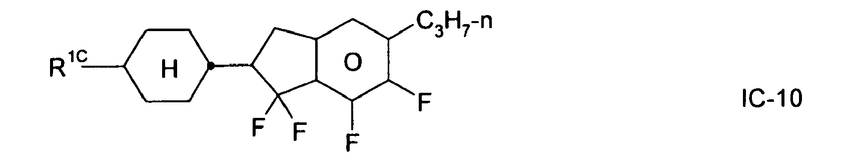 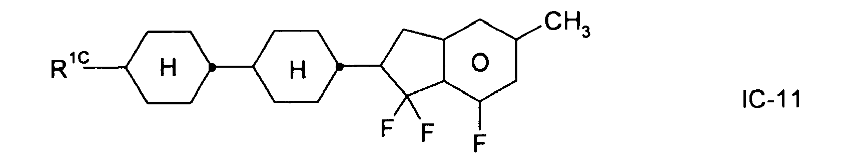 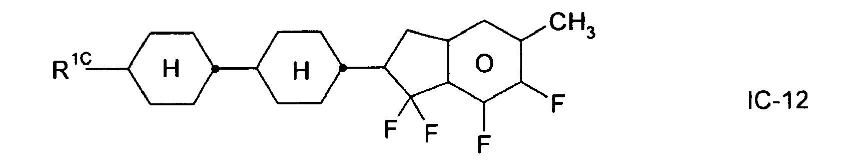 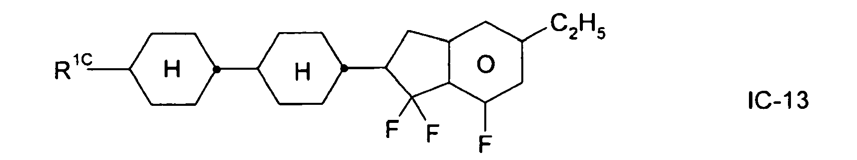 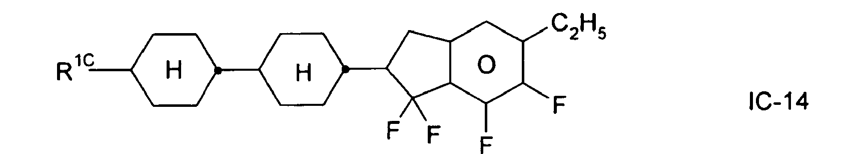 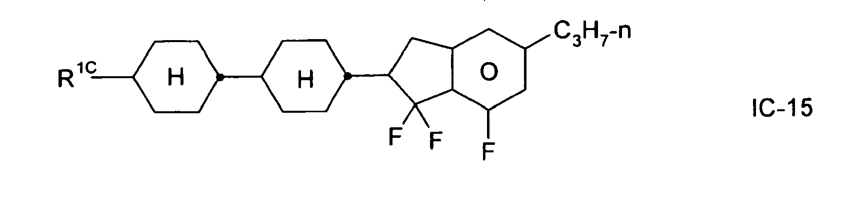 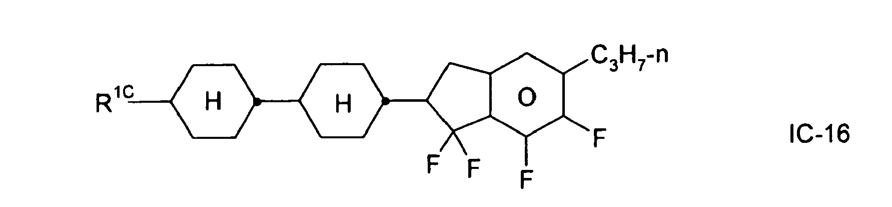 worin R^{1C} die in Anspruch 1 angegebenen Bedeutungen hat, enthält.

8. Flüssigkristallines Medium nach einem oder mehreren der Ansprüche 1 bis 7, **dadurch gekennzeichnet, dass** das Medium eine oder mehrere Verbindungen der Formeln ID-1 bis ID-6, 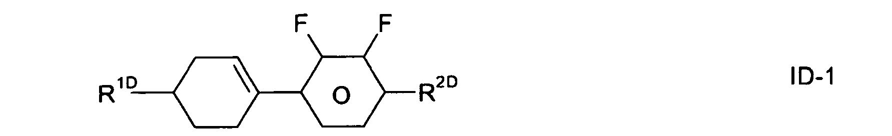 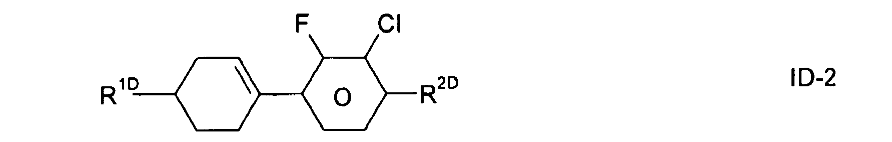 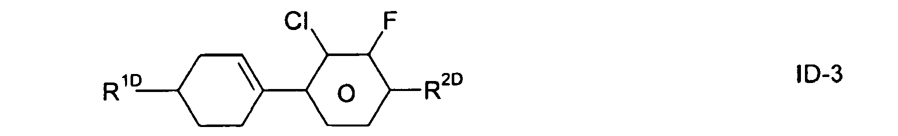 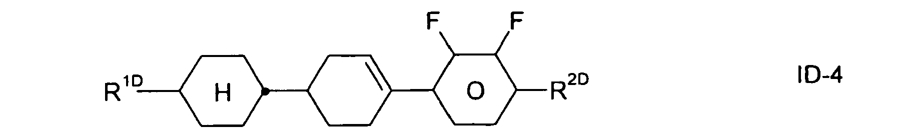 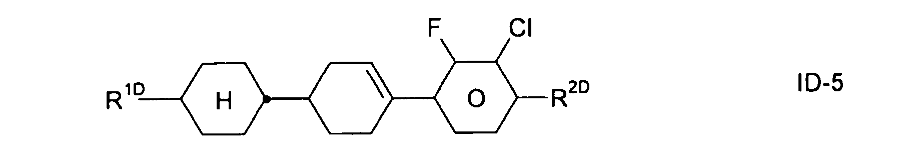 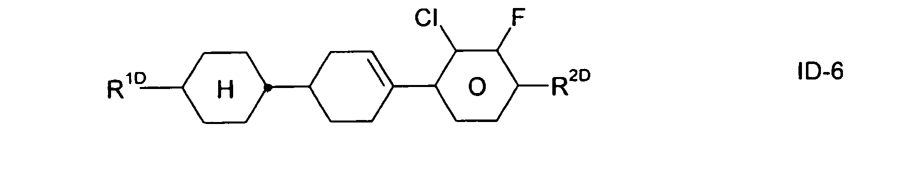 worin R^{1D} und R^{2D} die in Anspruch 1 angegebenen Bedeutungen haben,
enthält.

9. Flüssigkristallines Medium nach einem oder mehreren der Ansprüche 1 bis 8, **dadurch gekennzeichnet, dass** es eine oder mehrere Verbindungen der Formeln IIA und/oder IIB, 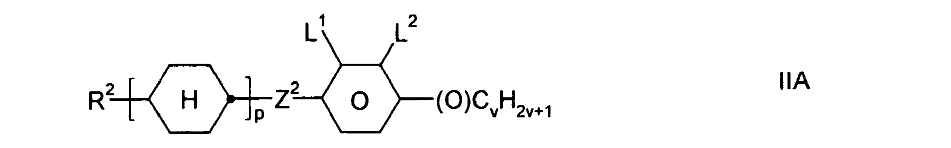 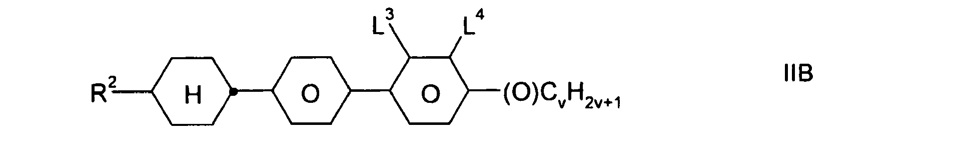 worin
R² H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 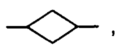 -C≡C-, -CF₂O-, -OCF₂-, -OC-O- oder -O-CO- so ersetzt sein können, dass O-Atome nicht direkt miteinander verknüpft sind,
L¹⁻⁴ jeweils unabhängig voneinander F oder Cl,
Z² Einfachbindung, -CH₂CH₂-, -CH=CH-, -CF₂O-, -OCF₂-, -CH₂O-, -OCH₂-, -COO-, -OCO-, -C₂F₄-, -CF=CF-
p 1 oder 2, und
v 1 bis 6
bedeuten,
enthält.

10. Flüssigkristallines Medium nach einem oder mehreren der Ansprüche 1 bis 9, **dadurch gekennzeichnet, dass** es mindestens eine Verbindung der Formeln O-1 bis O-13, 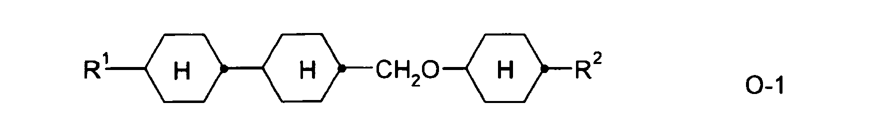 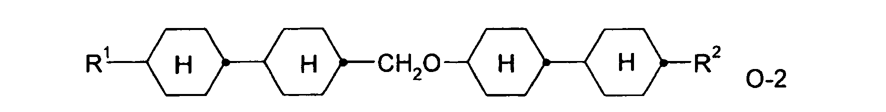 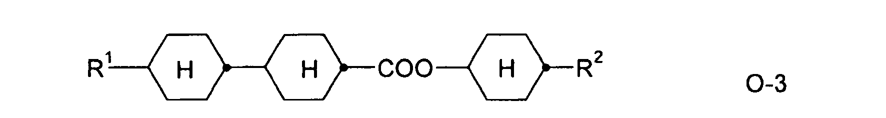 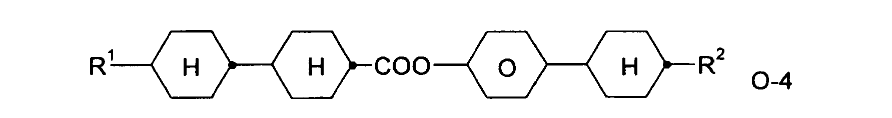 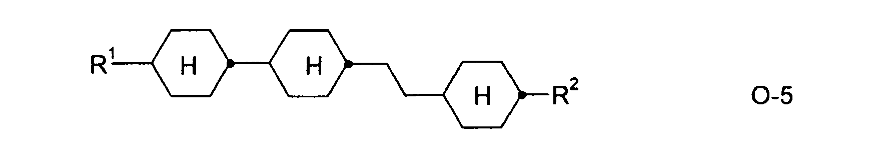 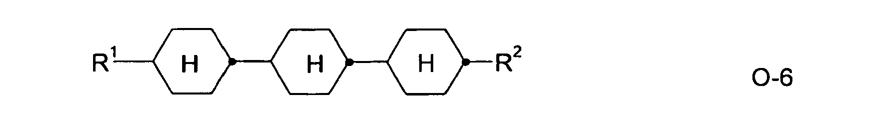 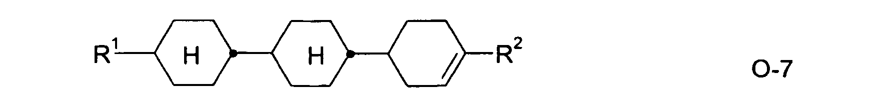 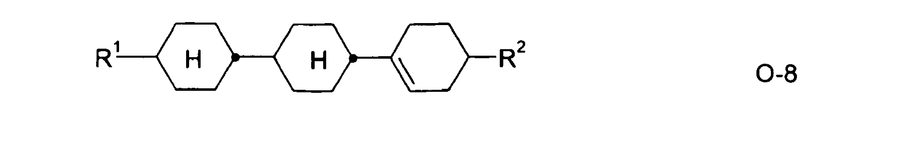 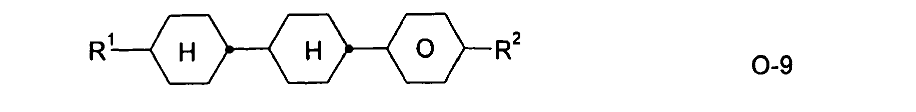 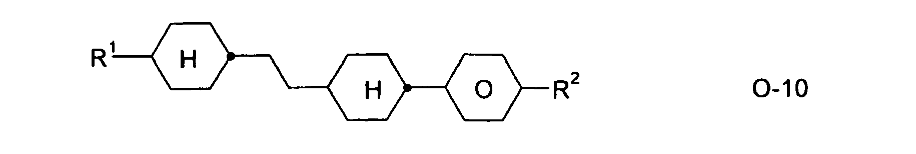 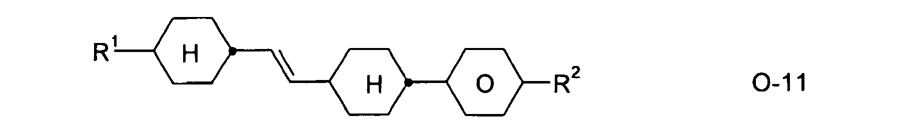 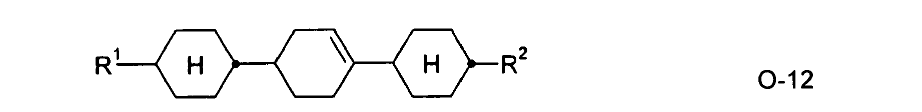 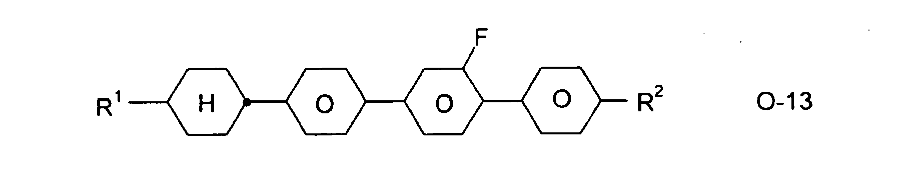 worin R¹ und R² die für R^{2A} in Anspruch 1 angegebenen Bedeutungen haben,
enthält.

11. Verfahren zur Herstellung eines flüssigkristallinen Mediums nach einem oder mehreren der Ansprüche 1 bis 10, **dadurch gekennzeichnet, dass** man mindestens eine oder mehrere Verbindungen der Formel IA mit mindestens einer oder mehrerer Verbindungen ausgewählt aus der Gruppe der Verbindungen der Formeln IB, IC und ID und gegebenenfalls weitere flüssigkristalline Verbindungen und/oder Additive zusetzt.

12. Elektrooptische Anzeige mit einer Aktivmatrix-Addressierung basierend auf dem ECB-, PALC-, FFS- oder dem IPS-Effekt, **dadurch gekennzeichnet, dass** sie als Dielektrikum ein flüssigkristallines Medium nach einem oder mehreren der Ansprüche 1 bis 10 enthält.

## Claims

1. Liquid-crystalline medium, **characterised in that** it comprises at least
one compound of the formula IA, 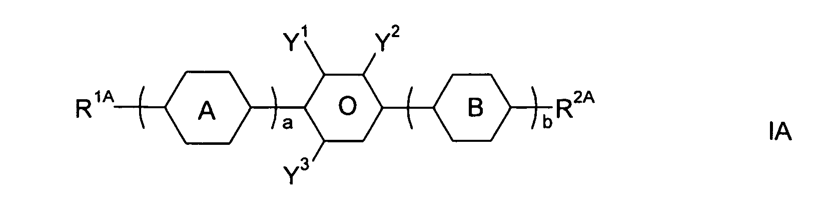 where the proportion of compounds of the formula IA in the mixture as a whole is ≥ 15% by weight,
and at least one compound selected from the group of the compounds of the formulae IB, IC and ID, 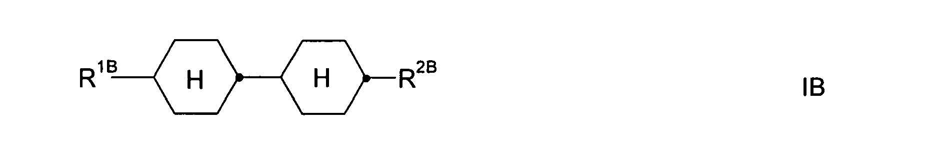 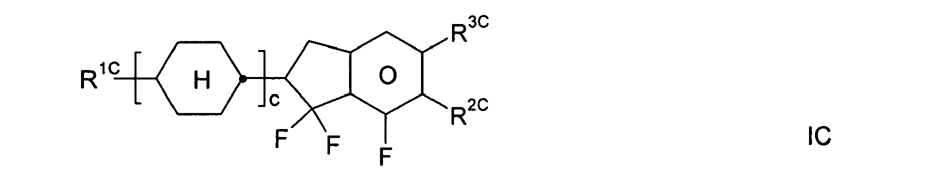 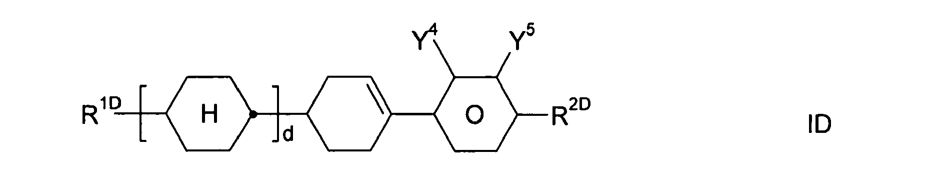 in which
R^{1A} denotes CH₃CH=CH, C₂H₅CH=CH, C₃H₇CH=CH, CH₂=CHC₂H₄, CH₃CH=CHC₂H₄, CH₂=CHCH₂, CH₃CH=CHCH₂ or C₂H₅CH=CHCH₂,
R^{1B} denotes an unsubstituted alkenyl radical having up to 6 C atoms, where, in addition, one or more CH₂ groups in these radicals may be replaced by -O-, -S-, 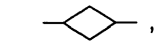
-C≡C-, -CF₂O-, -OCF₂-, -OC-O- or -O-CO- in such a way that O atoms are not linked directly to one another,
R^{2A} , R^{2B} , R^{1C} , R^{1D} and R^{2D} each, independently of one another, denote an alkyl or alkenyl radical having up to 6 C atoms which is un- substituted, monosubstituted by CN or CF₃ or at least monosubstituted by halogen, where, in addition, one or more CH₂ groups in these radicals may be re- placed by -O-, -S-, 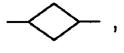 -C≡C-, -CF₂O-, -OCF₂-, -OC-O- or -O-CO- in such a way that O atoms are not linked directly to one another, 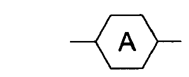 and 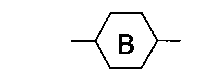 each, independently of one another, denote 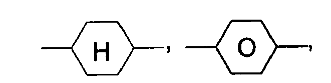 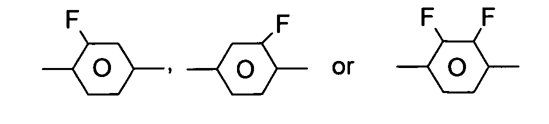
Y¹, Y², Y⁴ and Y⁵ each, independently of one another, denote F, Cl, CF₃, CH₂F, OCF₃, OCH₂F, OCHF₂ or CN,
Y³ denotes H or CH₃,
R^{2C} denotes H or F,
R^{3C} denotes H, CH₃, C₂H₅ or n-C₃H₇,
a and b each, independently of one another, denote 0, 1 or 2, where a+b is ≥ 1,
c denotes 1 or 2, and
d denotes 0 or 1.

2. Liquid-crystalline medium according to Claim 1, **characterised in that**, in the compounds of the formula IA,
Y¹ and Y² both denote fluorine and Y³ = H Y¹ = F, Y² = Cl and Y³ = H
or
Y¹ = Cl, Y² = F and Y³ = H.

3. Liquid-crystalline medium according to Claim 1 or 2, **characterised in that** it additionally comprises one or more compounds of the formula III, 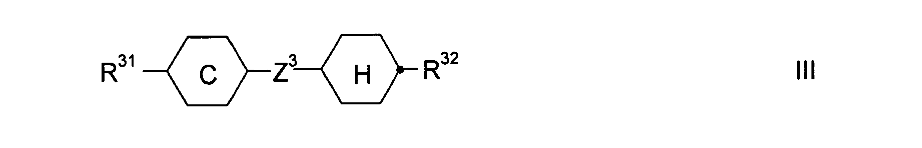 in which
R³¹ and R³² each, independently of one another, denote a straight- chain alkyl, alkoxyalkyl or alkoxy radical having up to 12 C atoms, and 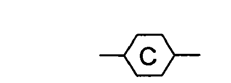 denotes 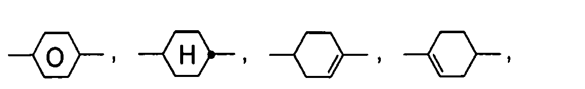 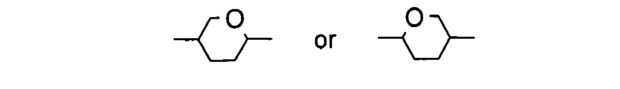
Z³ denotes a single bond, -CH₂CH₂-, -CH=CH-, -CF₂O-, -OCF₂-, -CH₂O-, -OCH₂-, -COO-, -OCO-, -C₂F₄-, -CF=CF-.

4. Liquid-crystalline medium according to one or more of Claims 1 to 3, **characterised in that** the medium comprises at least one compound of the formulae 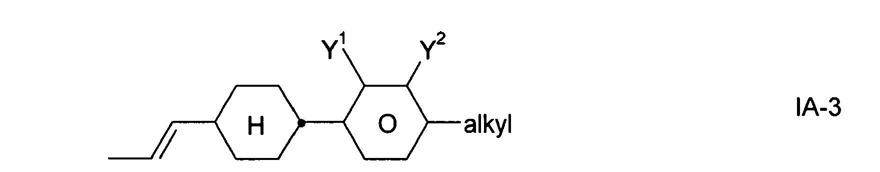 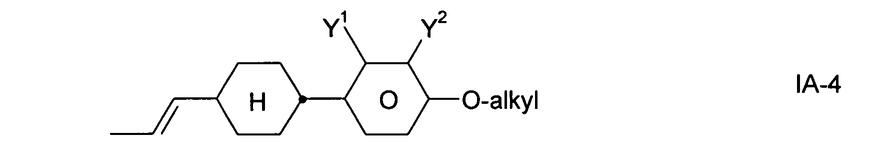 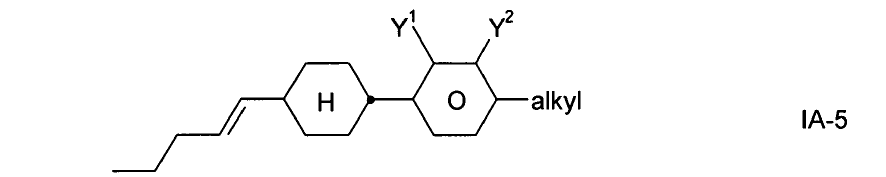 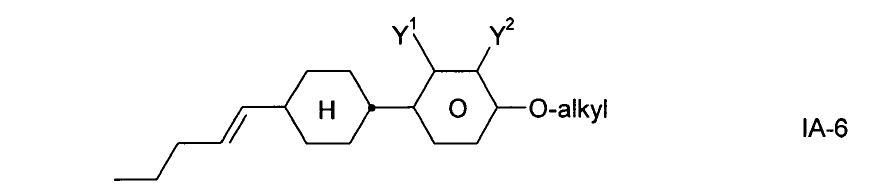 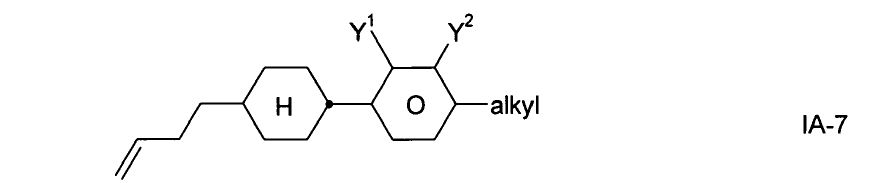 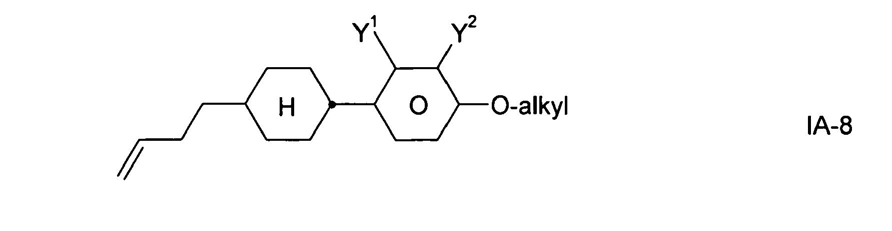 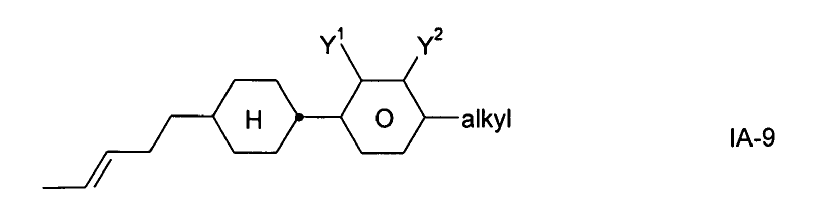 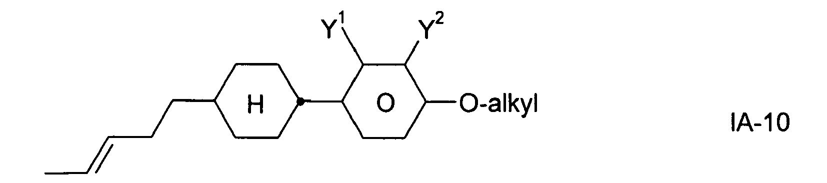 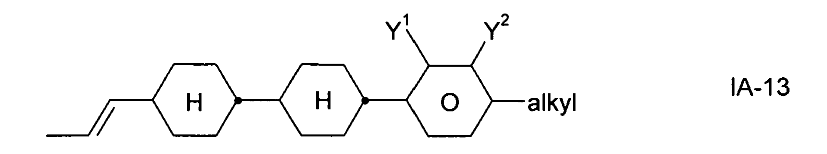 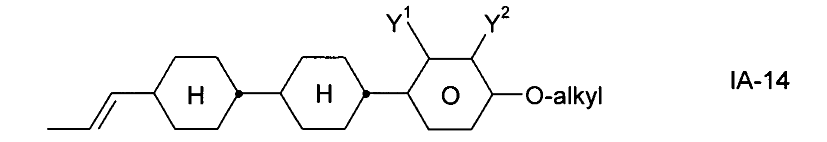 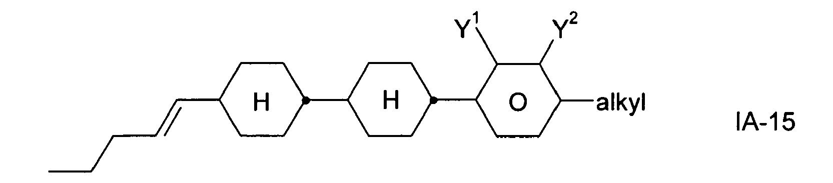 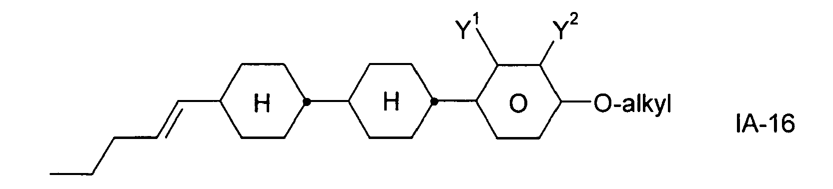 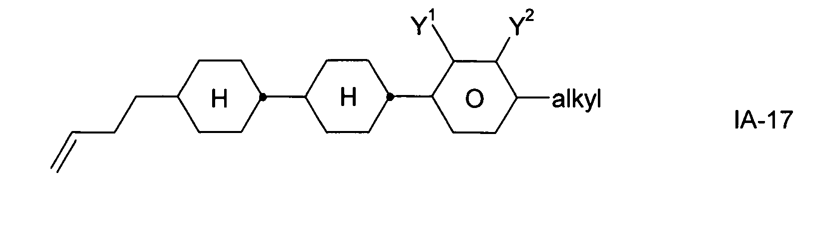 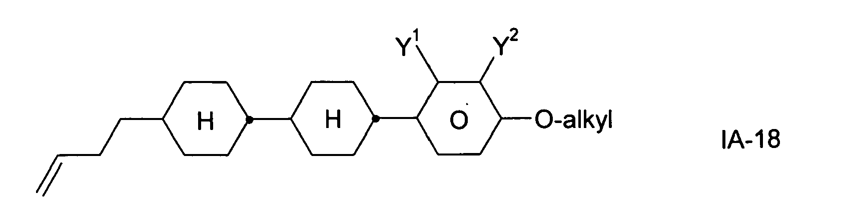 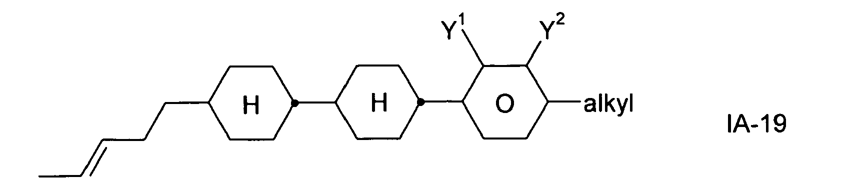 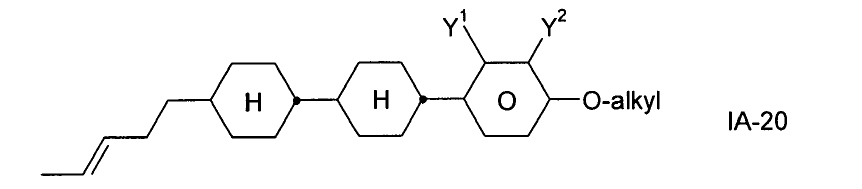 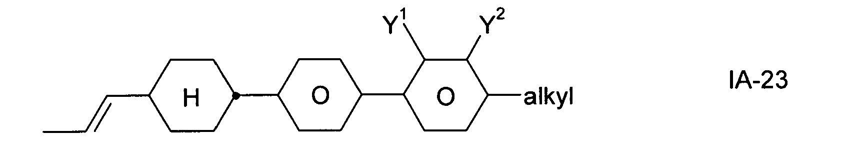 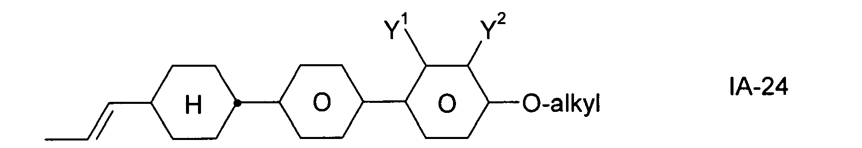 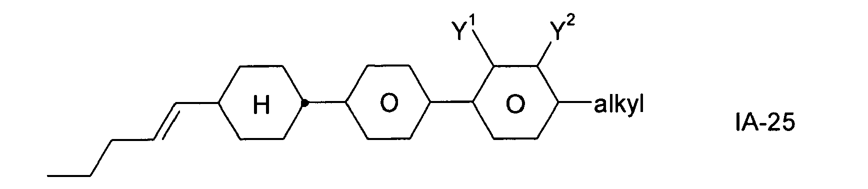 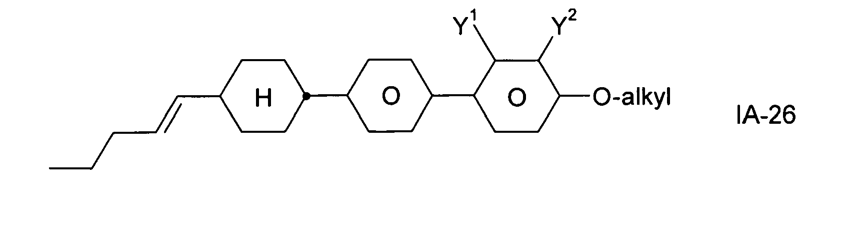 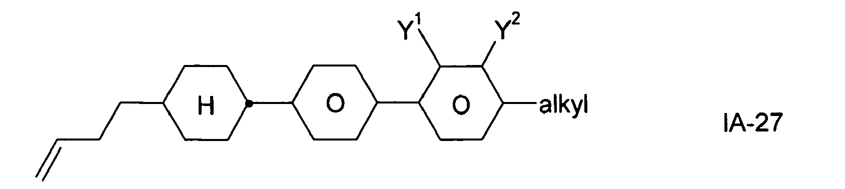 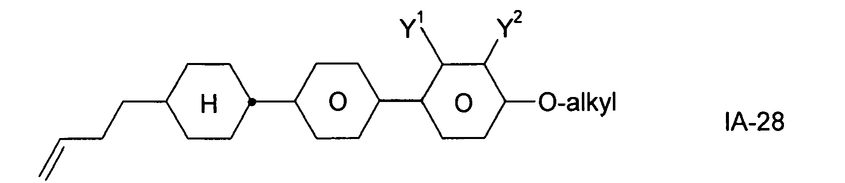 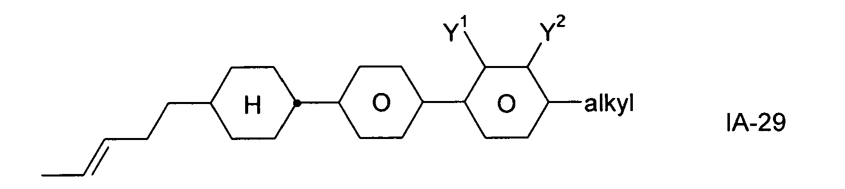 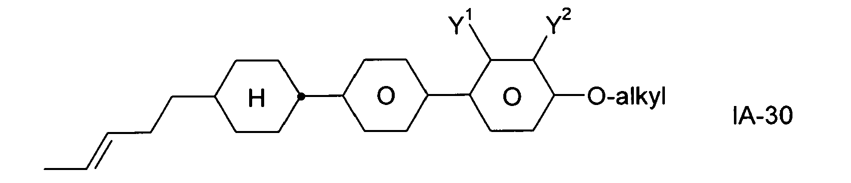 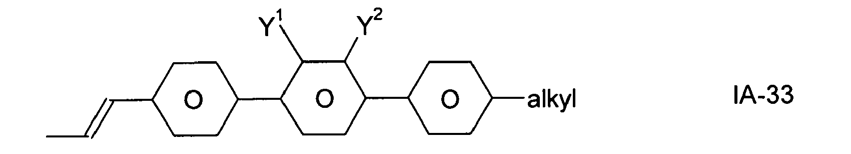 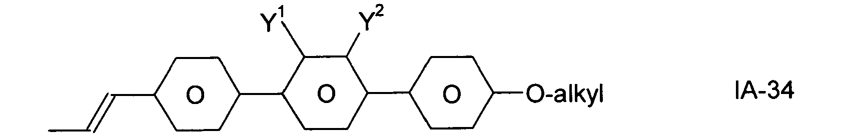 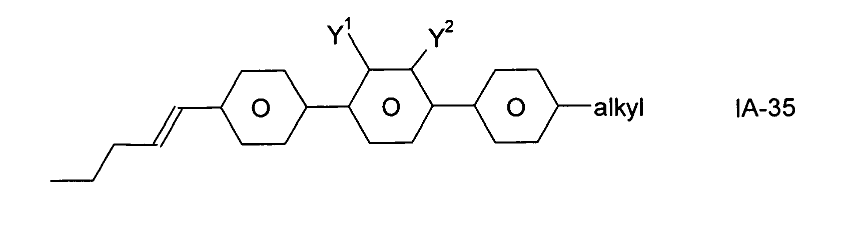 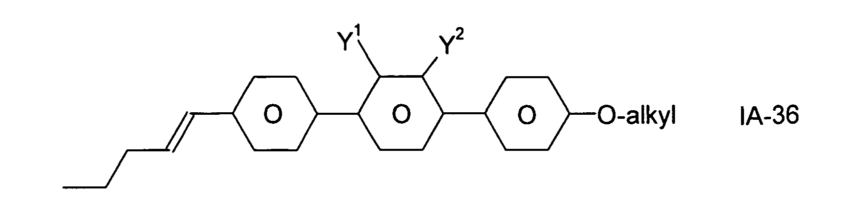 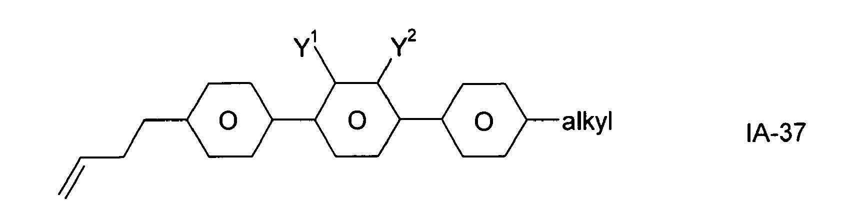 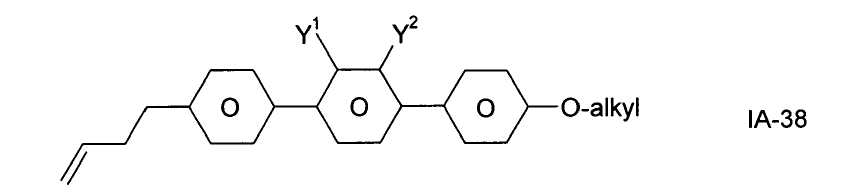 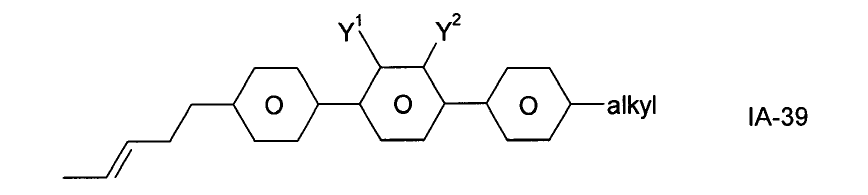 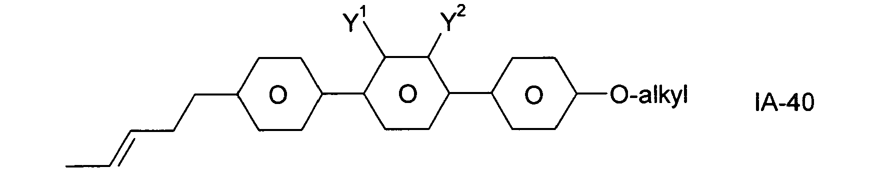 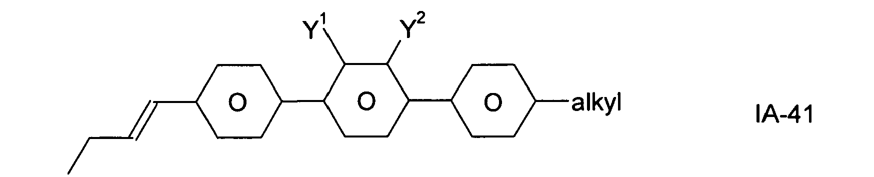 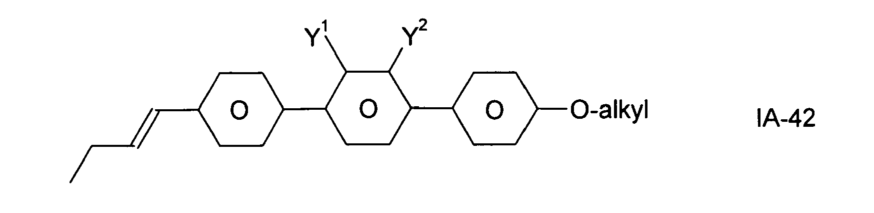 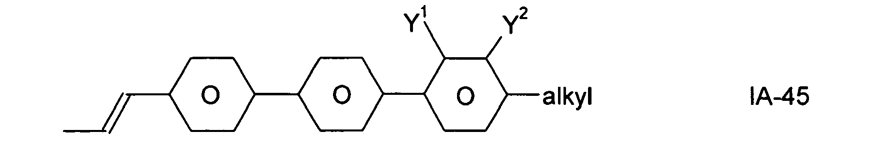 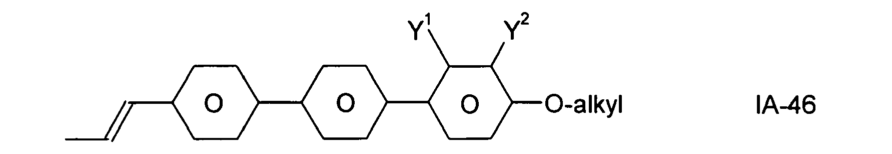 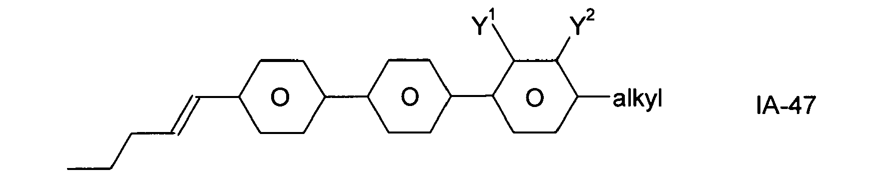 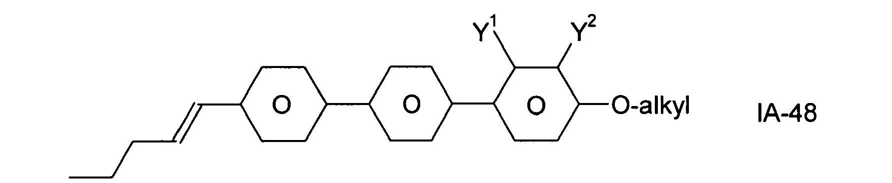 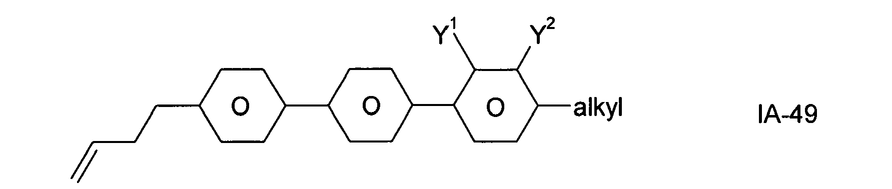 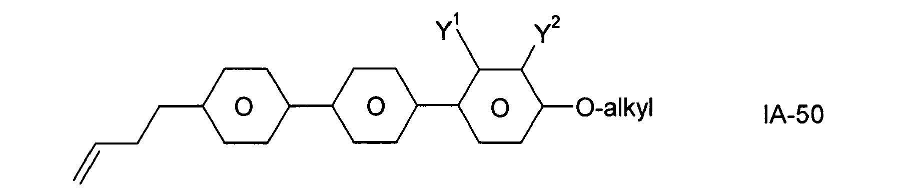 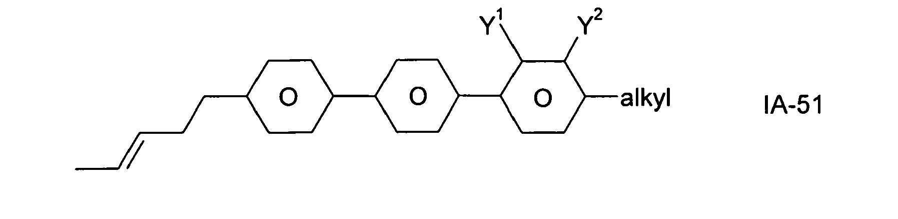 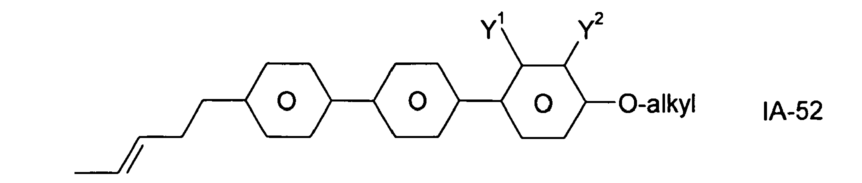 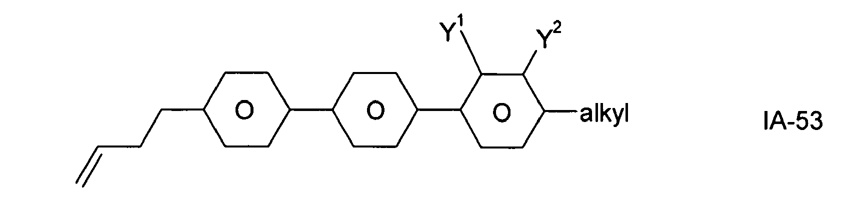 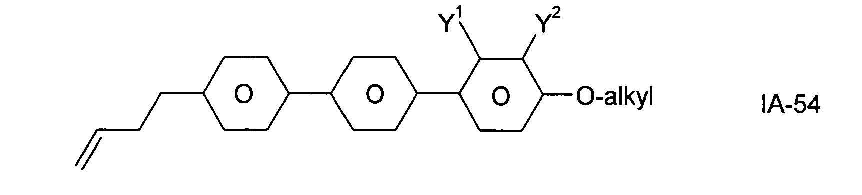 in which Y¹ and Y² have the meanings indicated in Claim 1, and alkyl denotes a straight-chain alkyl radical having 1-6 C atoms.

5. Liquid-crystalline medium according to one or more of Claims 1 to 4, **characterised in that** the medium additionally comprises one or more compound of the formulae 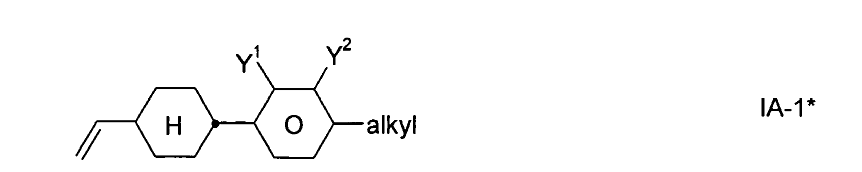 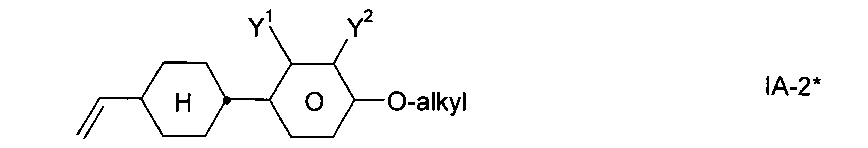 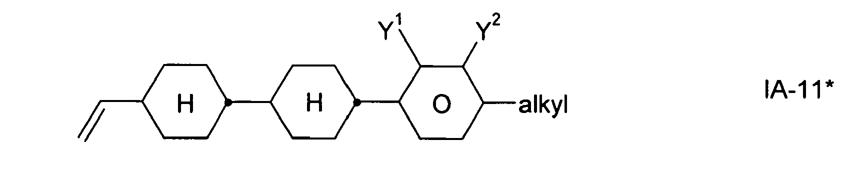 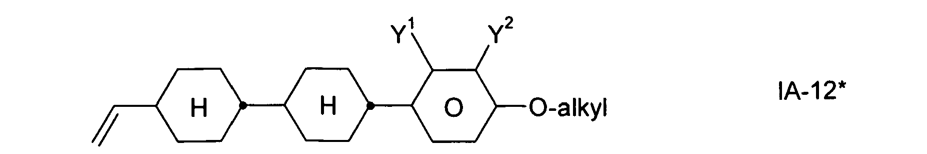 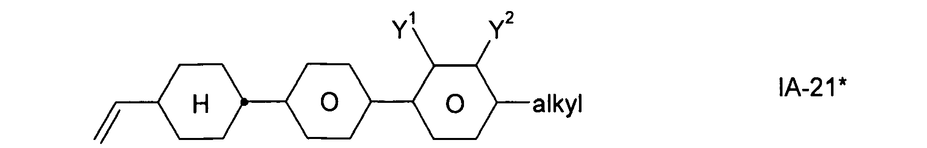 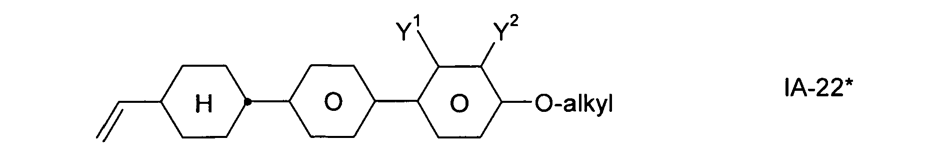 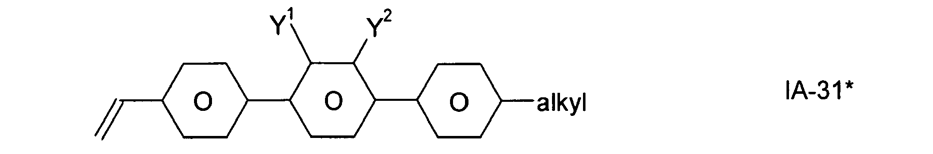 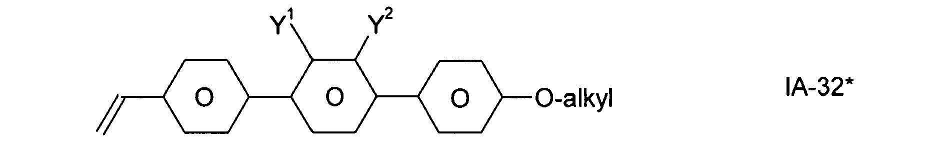 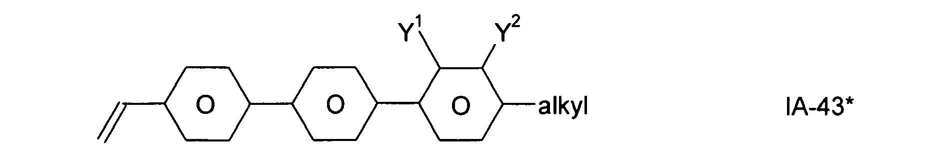 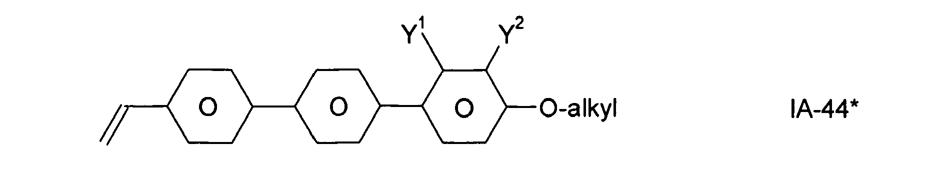 in which Y¹ and Y² have the meanings indicated in Claim 1, and alkyl denotes a straight-chain alkyl radical having 1-6 C atoms.

6. Liquid-crystalline medium according to one or more of Claims 1 to 5, **characterised in that** the medium comprises one or more compounds of the formulae

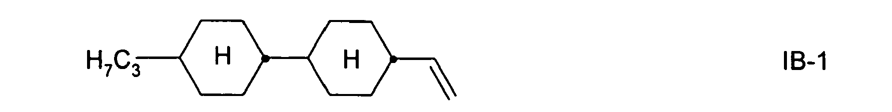

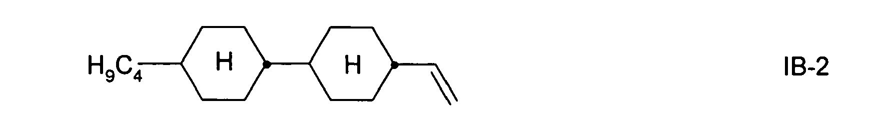

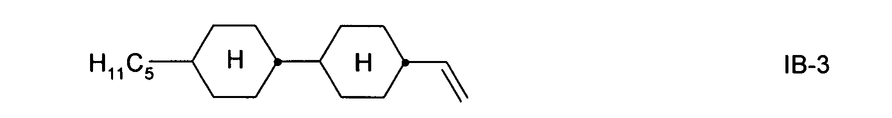

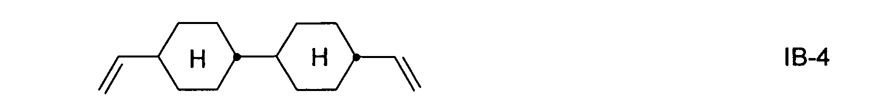

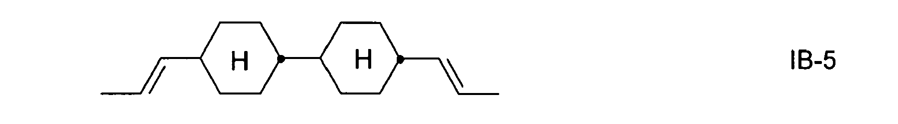

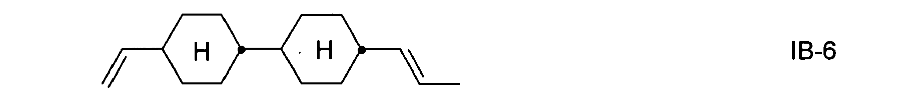

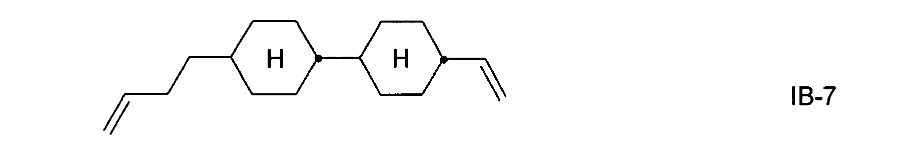

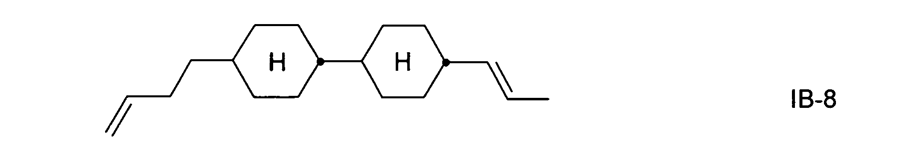

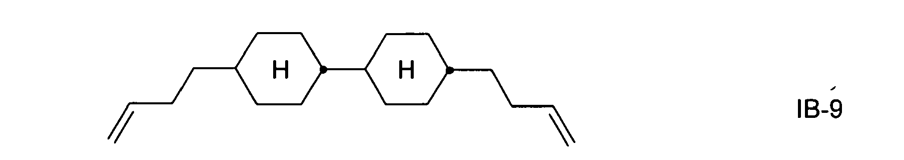

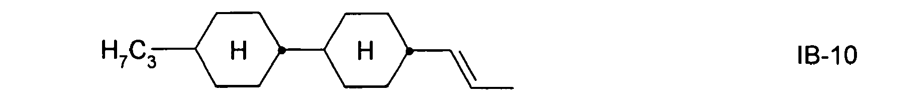

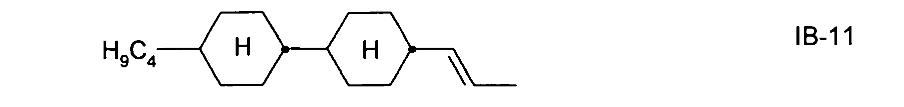

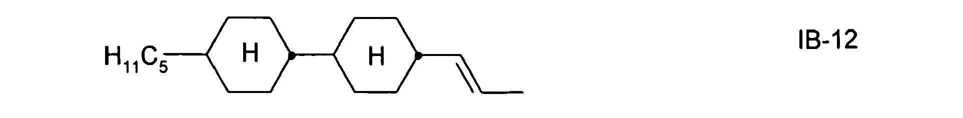

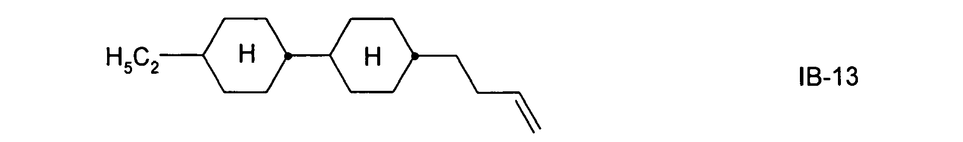

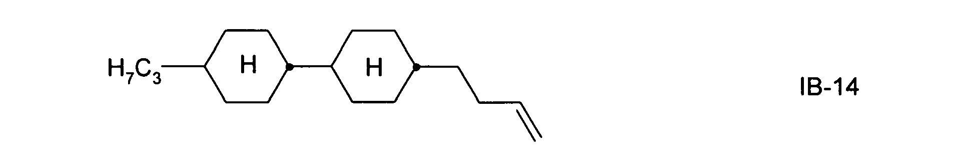

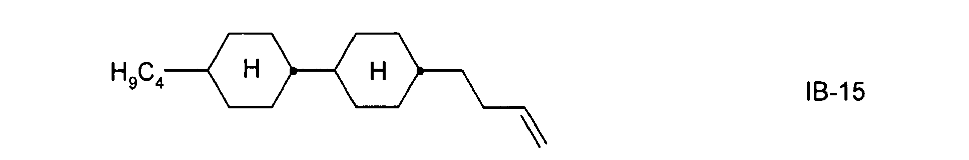

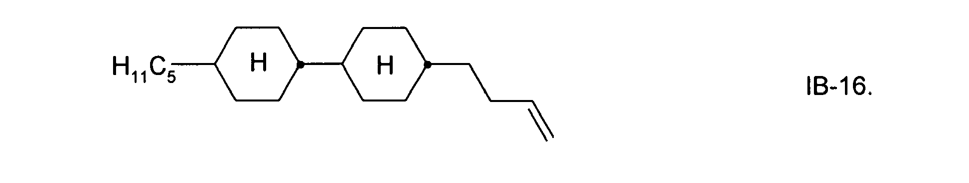

7. Liquid-crystalline medium according to one or more of Claims 1 to 6, **characterised in that** the medium comprises one or more compounds of the formulae IC-1 to IC-16, 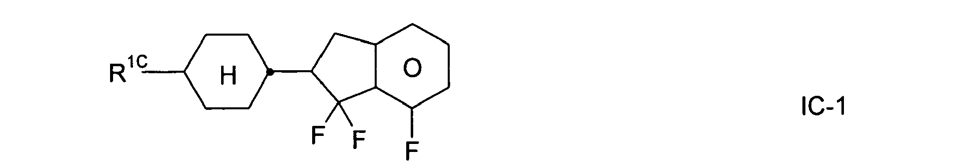 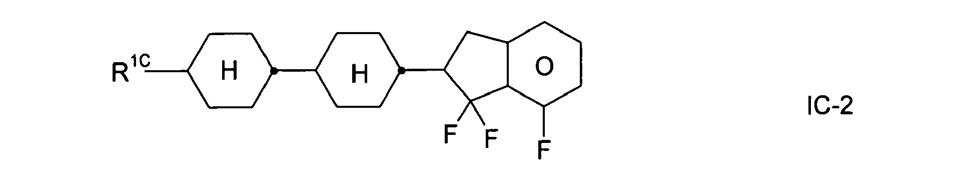 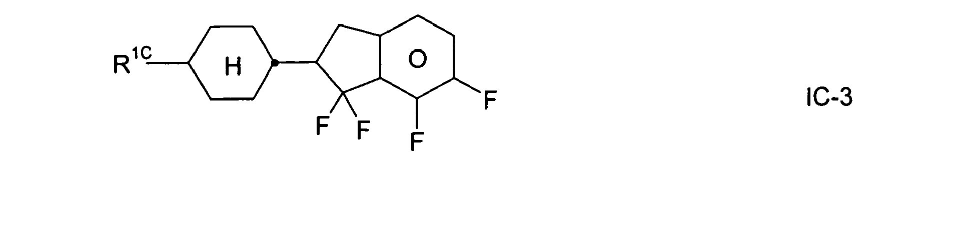 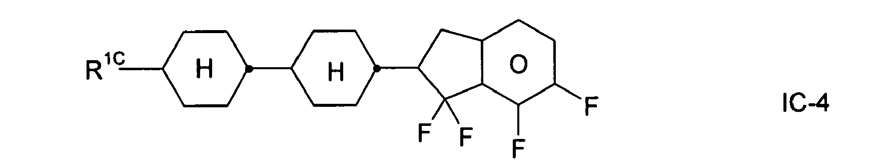 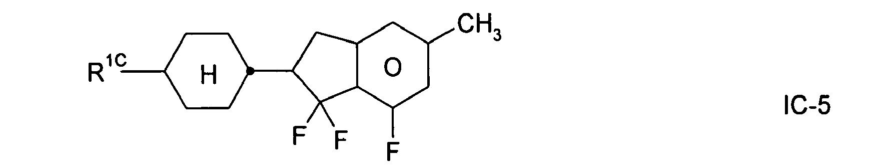 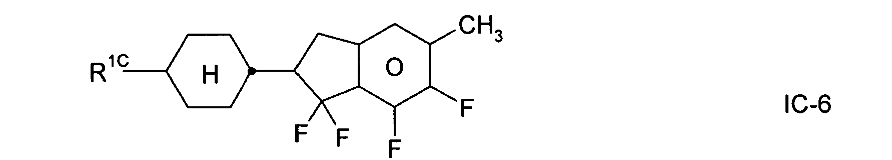 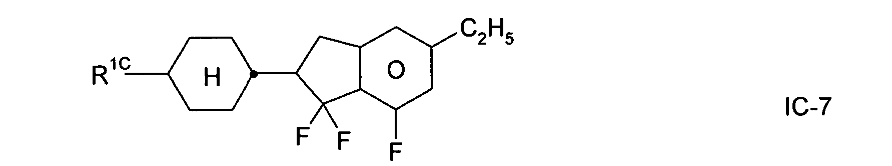 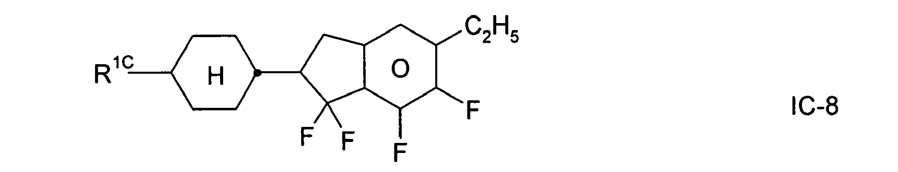 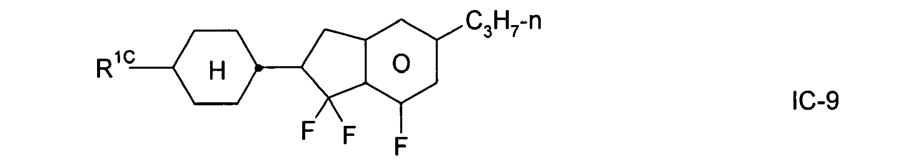 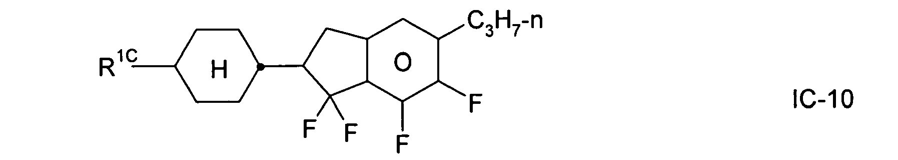 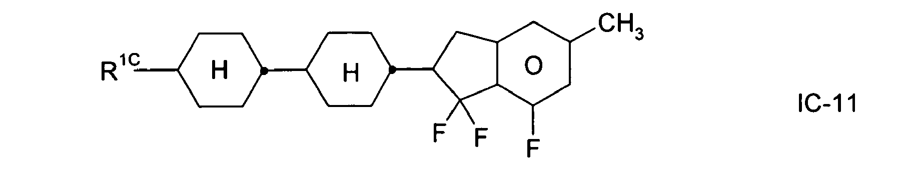 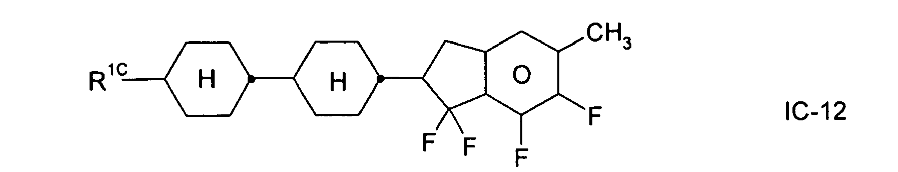 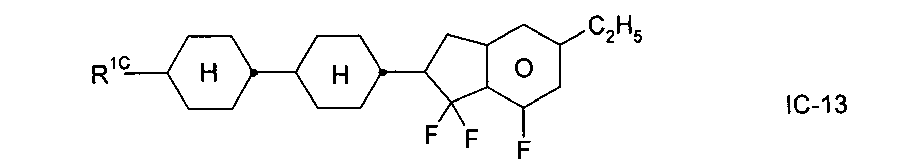 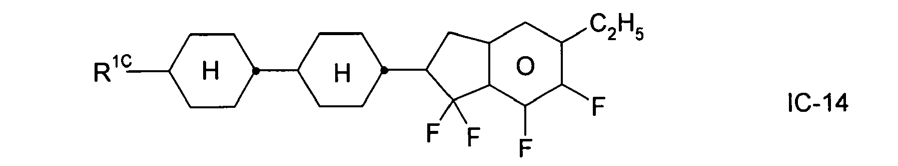 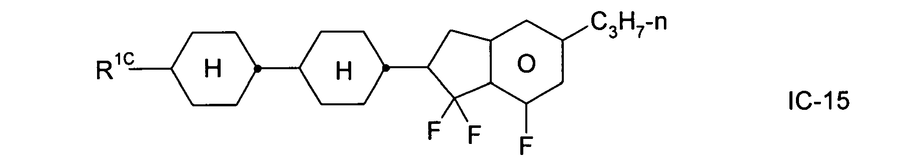 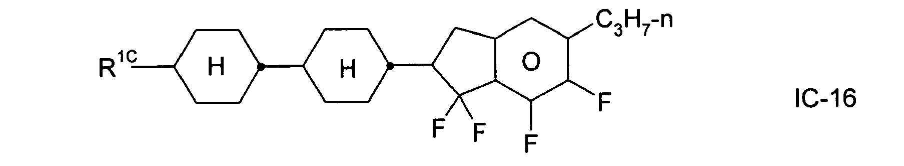 in which R^{1C} has the meanings indicated in Claim 1.

8. Liquid-crystalline medium according to one or more of Claims 1 to 7, **characterised in that** the medium comprises one or more compounds of the formulae ID-1 to ID-6, 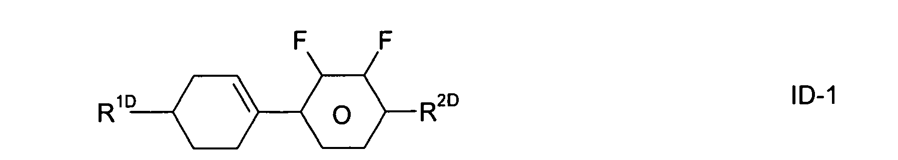 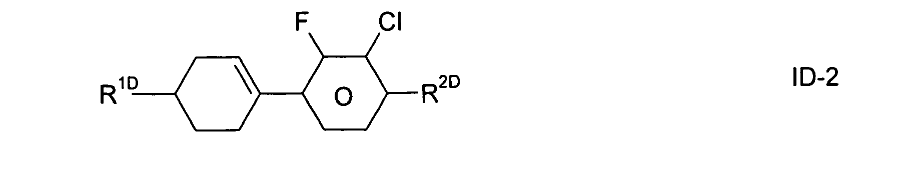 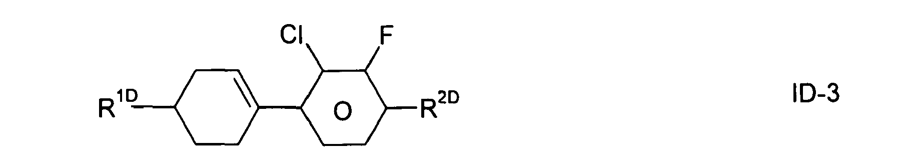 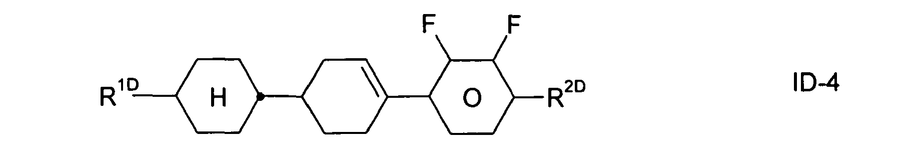 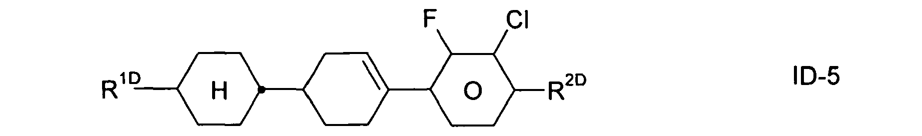 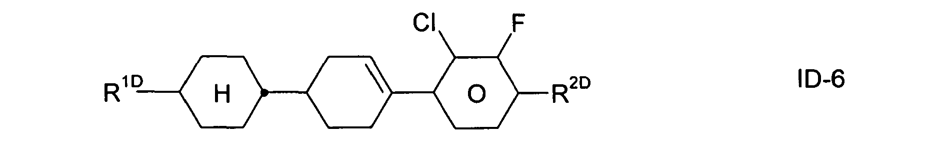 in which R^{1D} and R^{2D} have the meanings indicated in Claim 1.

9. Liquid-crystalline medium according to one or more of Claims 1 to 8, **characterised in that** it comprises one or more compounds of the formulae IIA and/or IIB, 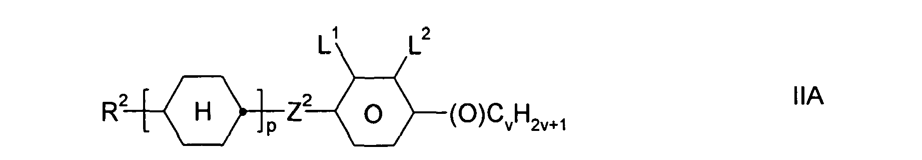 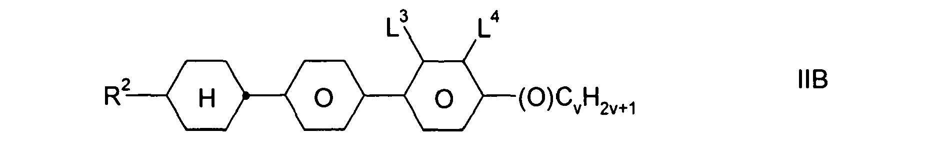 in which
R² denotes H, an alkyl radical having up to 15 C atoms which is unsubstituted, monosubstituted by CN or CF₃ or at least monosubstituted by halogen, where, in addi- tion, one or more CH₂ groups in these radicals may be replaced by -O-, -S-, 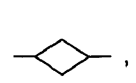 -C≡C-, -CF₂O-, -OCF₂-, -OC-O- or -O-CO- in such a way that O atoms are not linked directly to one another,
L¹⁻⁴ each, independently of one another, denote F or Cl,
Z² denotes a single bond, -CH₂CH₂-, -CH=CH-, -CF₂O-, -OCF₂-, -CH₂O-, -OCH₂-, -COO-, -OCO-, -C₂F₄-, -CF=CF-,
p denotes 1 or 2, and
v denotes 1 to 6.

10. Liquid-crystalline medium according to one or more of Claims 1 to 9, **characterised in that** it comprises at least one compound of the formulae O-1 to O-13, 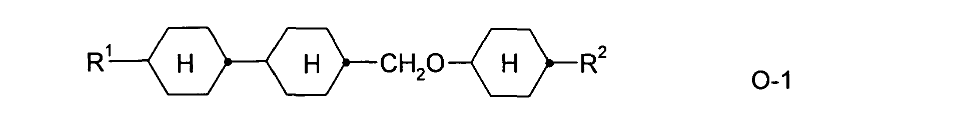 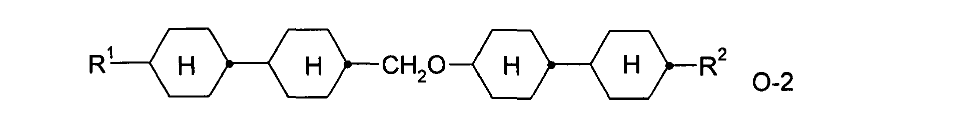 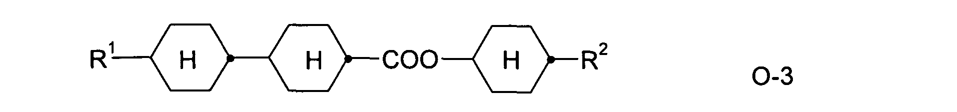 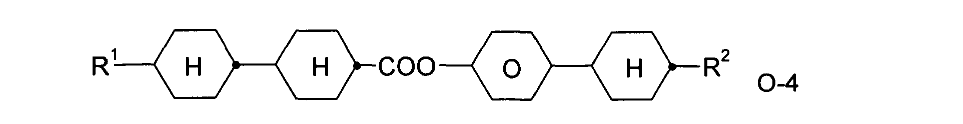 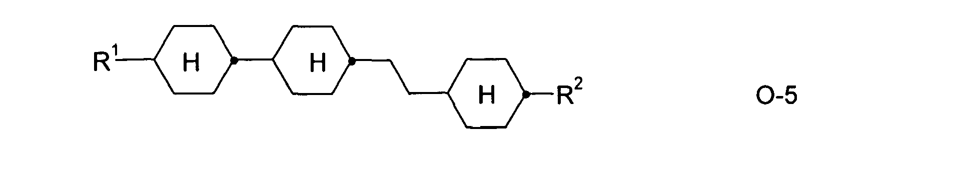 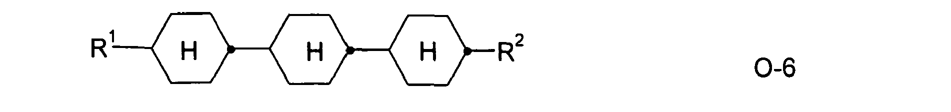 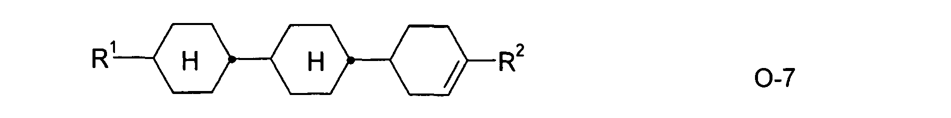 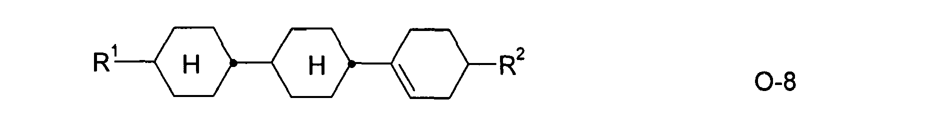 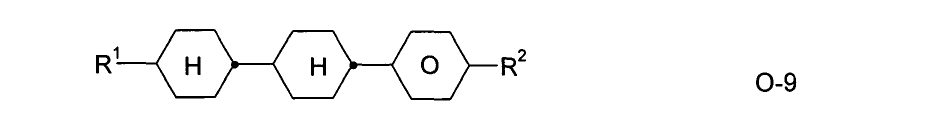 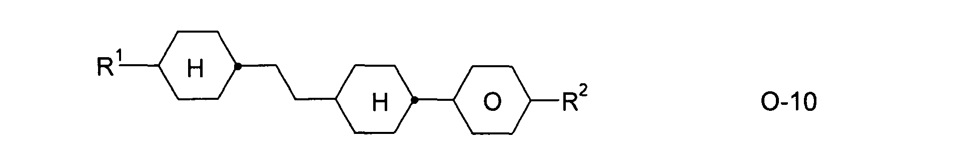 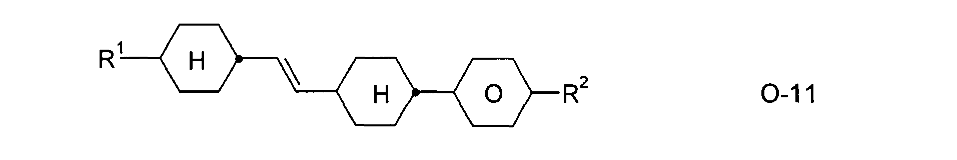 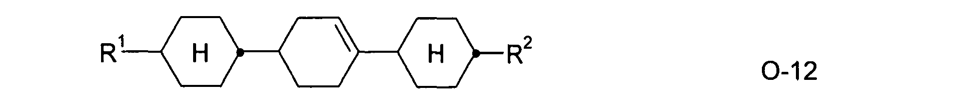 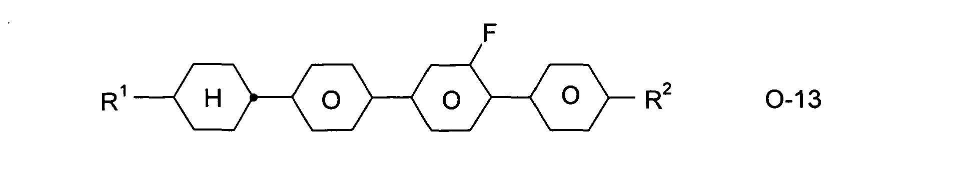 in which R¹ and R² have the meanings indicated for R^{2A} in Claim 1.

11. Process for the preparation of a liquid-crystalline medium according to one or more of Claims 1 to 10, **characterised in that** at least one or more compounds of the formula IA are mixed with at least one or more compounds selected from the group of the compounds of the formulae IB, IC and ID, and further liquid-crystalline compounds and/or additives are optionally added.

12. Electro-optical display having active-matrix addressing based on the ECB, PALC, FFS or the IPS effect, **characterised in that** it contains, as dielectric, a liquid-crystalline medium according to one or more of Claims 1 to 10.

## Revendications

1. Milieu cristallin liquide, **caractérisé en ce qu'**il comprend au moins un
composé de la formule IA, 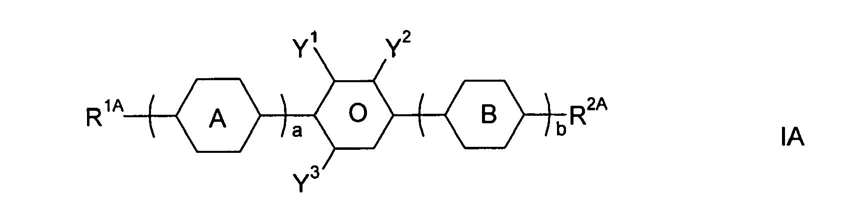 où la proportion de composés de la formule IA dans le mélange pris dans sa globalité est ≥ 15% en poids,
et au moins un composé choisi parmi le groupe des composés des formules IB, IC et ID, 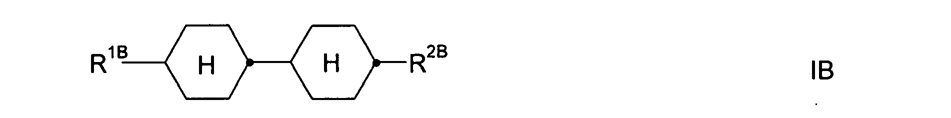 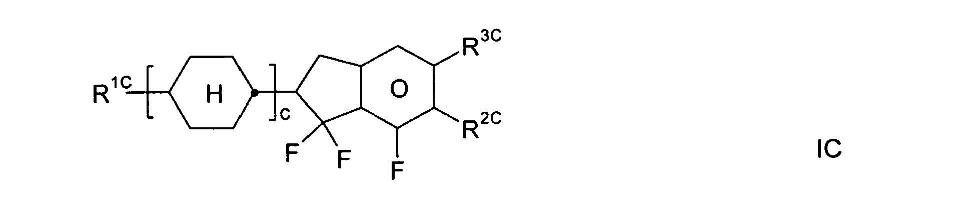 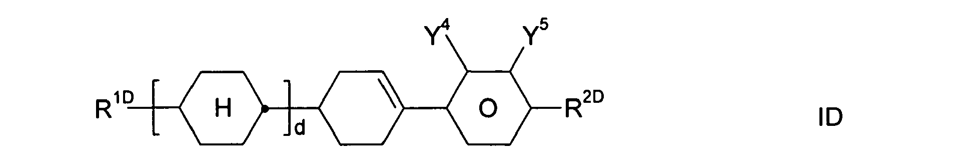 dans lesquelles
R^{1A} représente CH₃CH=CH, C₂H₅CH=CH, C₃H₇CH=CH, CH₂=CHC₂H₄, CH₃CH=CHC₂H₄, CH₂=CHCH₂, CH₃CH=CHCH₂ ou C₂H₅CH=CHCH₂,
R^{1B} représente un radical alkényle non substitué compor- tant jusqu'à 6 atomes de C, où, en outre, un ou plu- sieurs groupes CH₂ dans ces radicaux peut/peuvent être remplacé(s) par -O-, -S-, 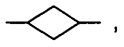 -C≡C-, -CF₂O-, -OCF₂-, -OC-O- ou -O-CO- de telle sorte que des atomes de O ne soient pas liés directement les uns aux autres,
R^{2A}, R^{2B}, R^{1C}, R^{1D} et R^{2D} représentent, chacun indépendamment des autres, un radical alkyle ou alkényle comportant jusqu'à 6 atomes de C, lequel est non substitué, monosubsti- tué par CN ou CF₃ ou au moins monosubstitué par halogène, où, en outre, un ou plusieurs groupes CH₂ dans ces radicaux peut/peuvent être remplacé(s) par -O-, -S-, 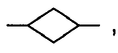 -C≡C-, -CF₂O-, -OCF₂-, -OC-O- ou -O-CO- de telle sorte que des atomes de O ne soient pas liés directement les uns aux autres, 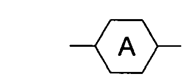 et 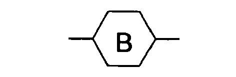 représentent, chacun indépendamment de l'autre, 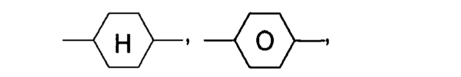 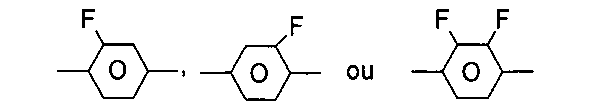
Y¹, Y², Y⁴ et Y⁵ représentent, chacun indépendamment des autres, F, Cl, CF₃, CH₂F, OCF₃, OCH₂F, OCHF₂ ou CN,
Y³ représente H ou CH₃,
R^{2C} représente H ou F,
R^{3C} représente H, CH₃, C₂H₅ ou n-C₃H₇,
a et b représentent, chacun indépendamment de l'autre, 0, 1 ou 2, où a+b est ≥ 1,
c représente 1 ou 2, et
d représente 0 ou 1.

2. Milieu cristallin liquide selon la revendication 1, **caractérisé en ce que**, dans les composés de la formule IA,
Y¹ et Y² représentent tous deux fluor et Y³ = H Y¹=F, Y²=Cl et Y³=H
ou
Y¹=Cl, Y²= F et Y³=H.

3. Milieu cristallin liquide selon la revendication 1 ou 2, **caractérisé en ce qu'**il comprend additionnellement un ou plusieurs composés de la formule III, 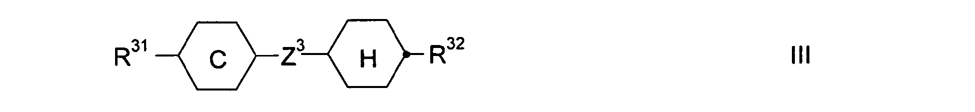 dans laquelle
R³¹ et R³² représentent, chacun indépendamment l'un de l'autre, un radical alkyle, alcoxyalkyle ou alcoxy en chaîne droite comportant jusqu'à 12 atomes de C, et 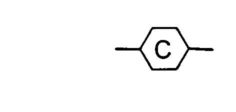 représente 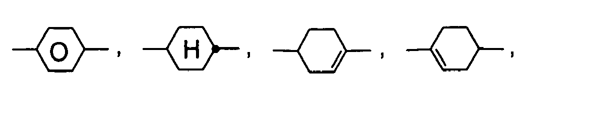 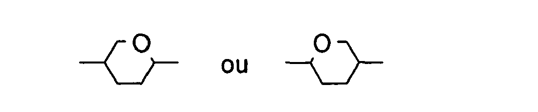
Z³ représente une liaison simple, -CH₂CH₂-, -CH=CH-, -CF₂O-, -OCF₂-, -CH₂O-, -OCH₂-, -COO-, -OCO-, -C₂F₄-, -CF=CF-.

4. Milieu cristallin liquide selon une ou plusieurs des revendications 1 à 3, **caractérisé en ce que** le milieu comprend au moins un composé des formules 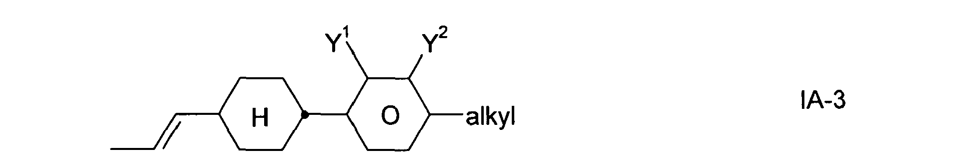 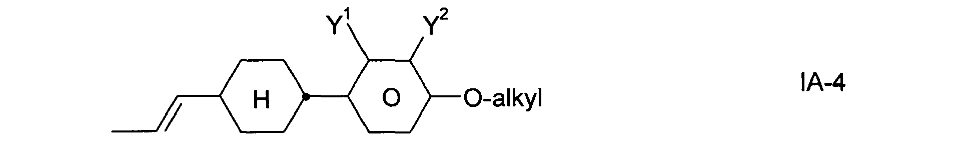 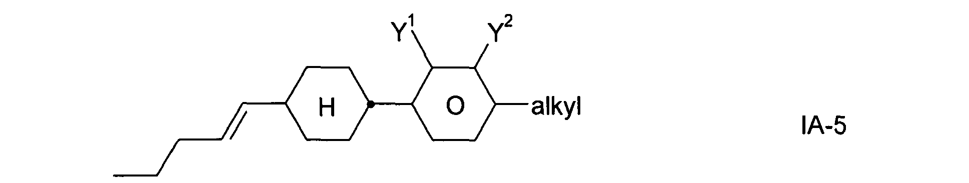 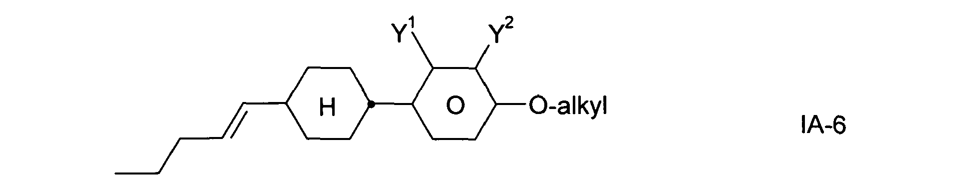 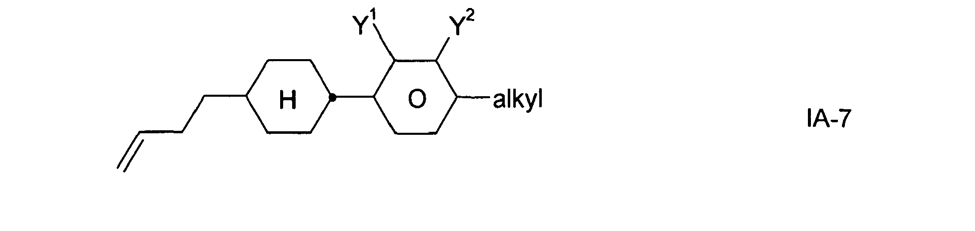 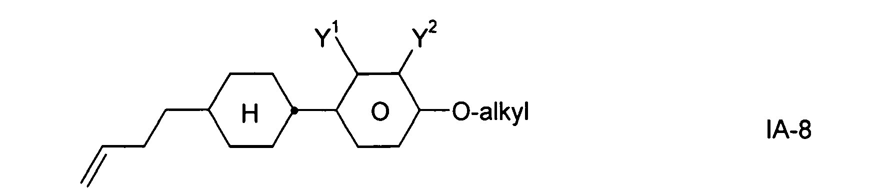 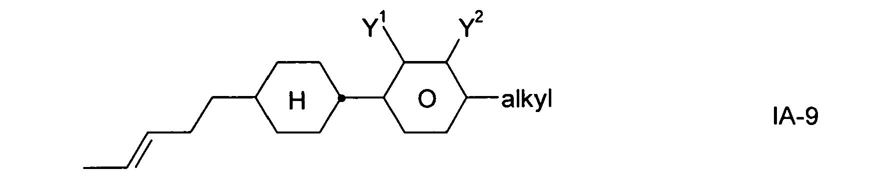 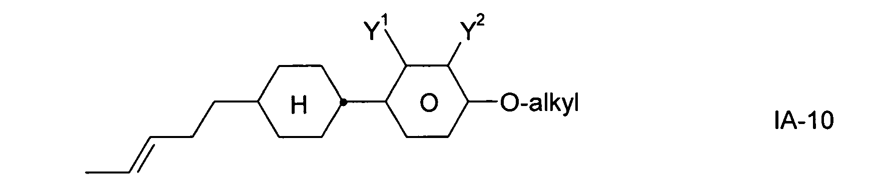 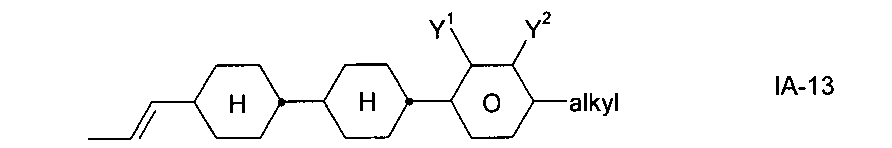 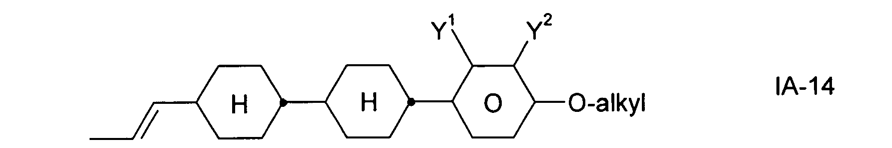 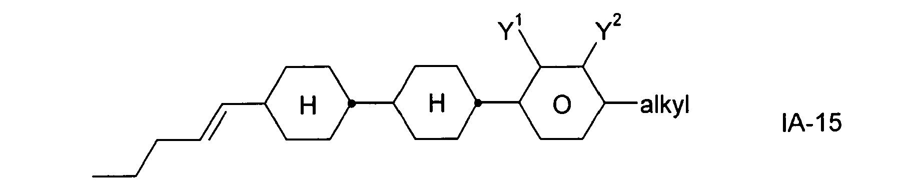 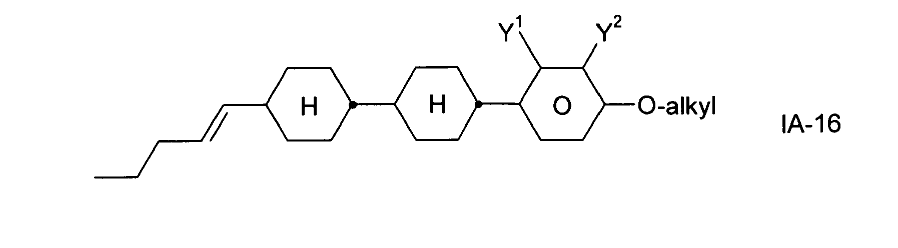 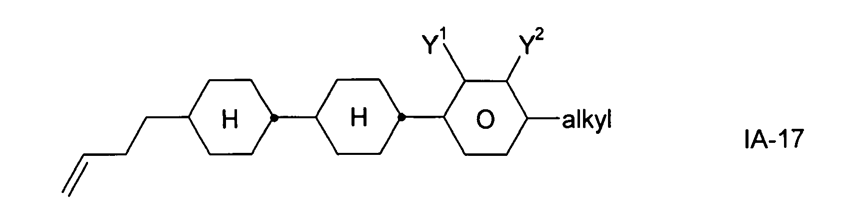 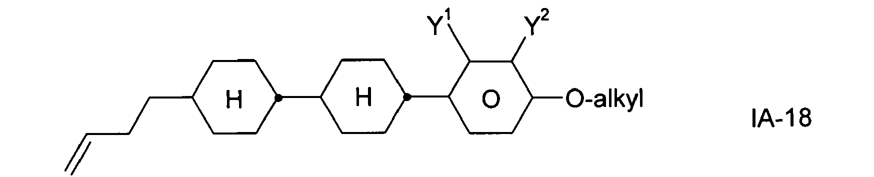 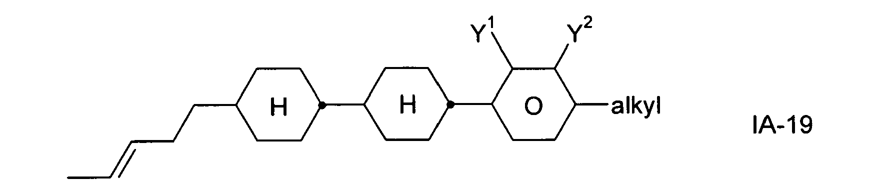 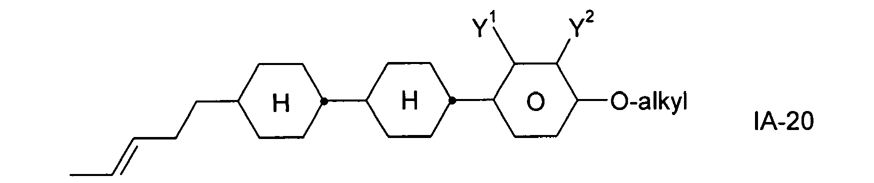 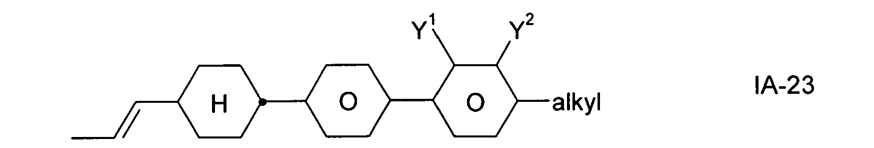 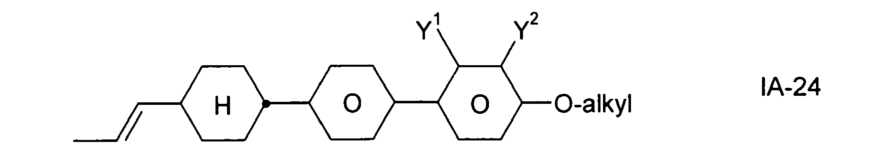 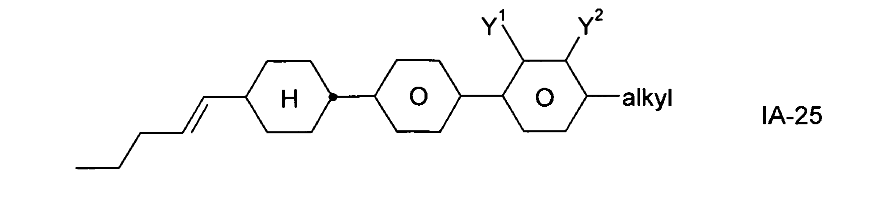 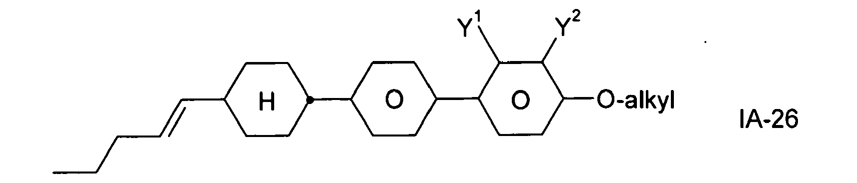 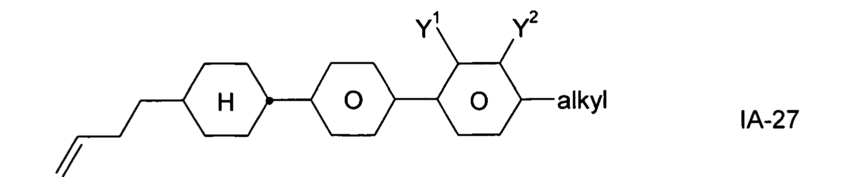 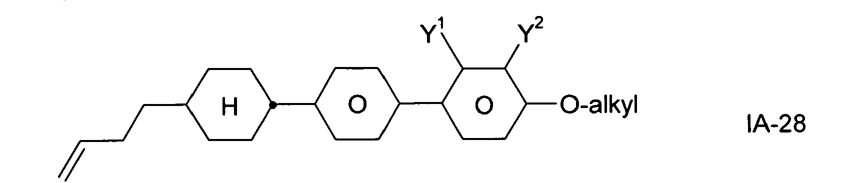 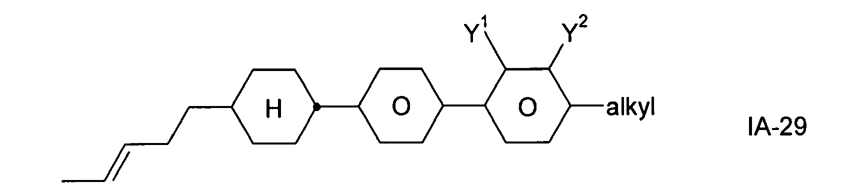 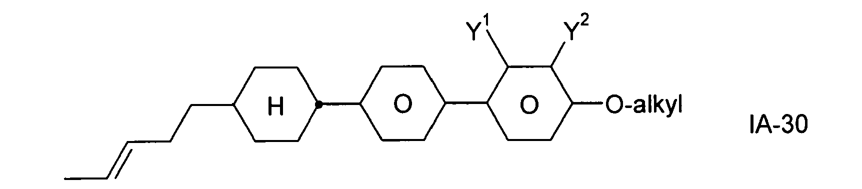 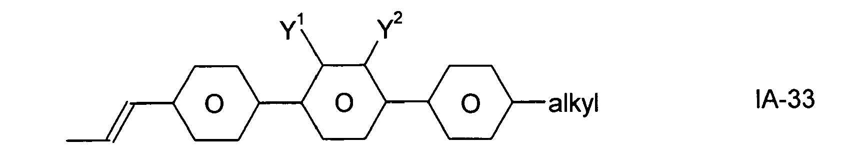 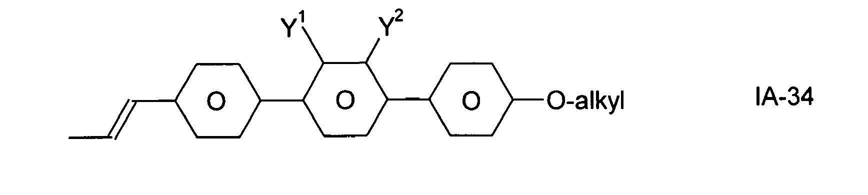 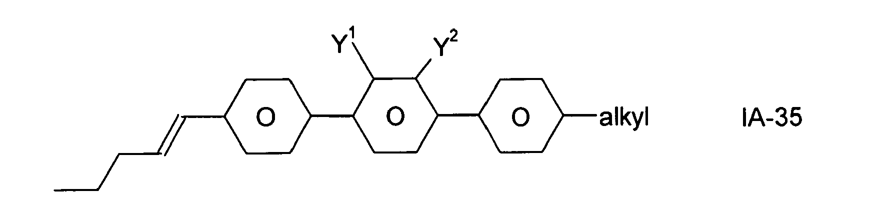 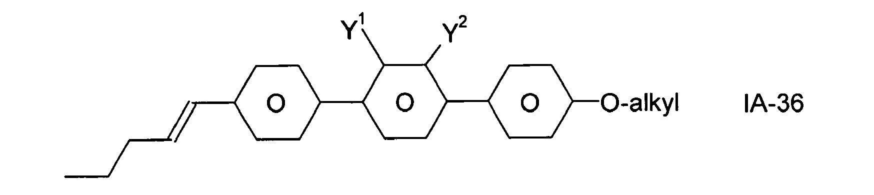 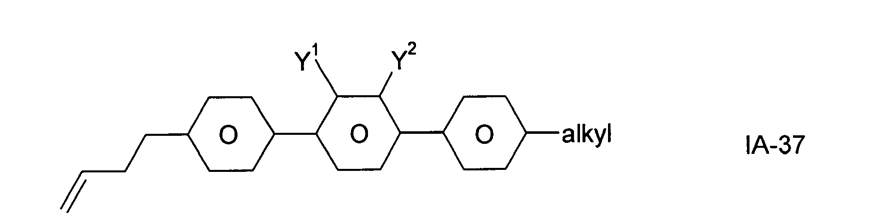 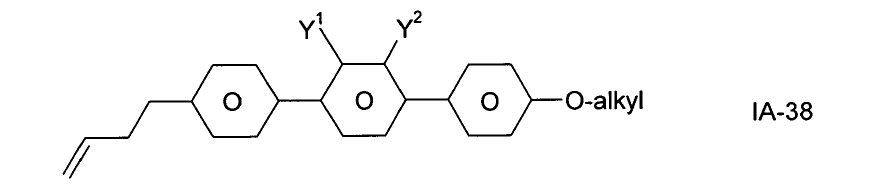 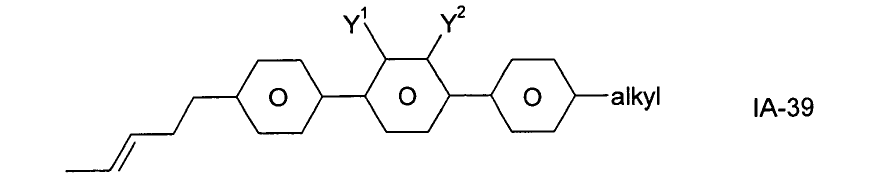 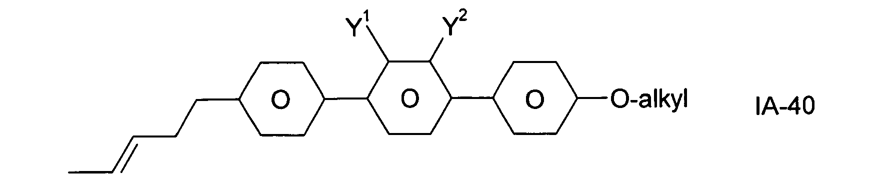 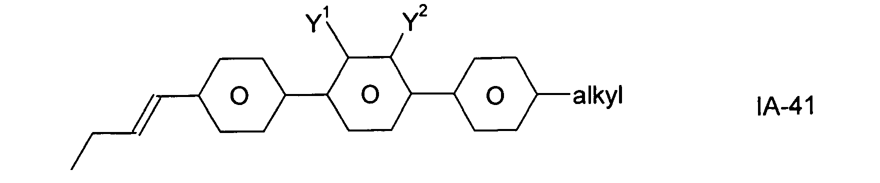 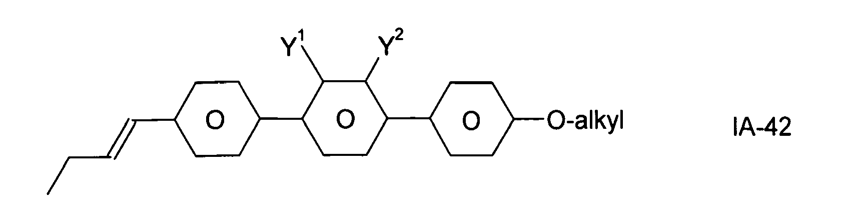 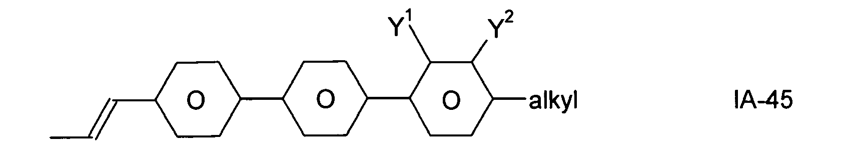 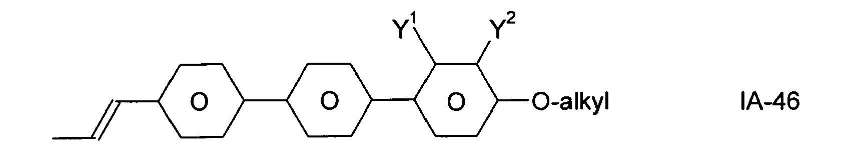 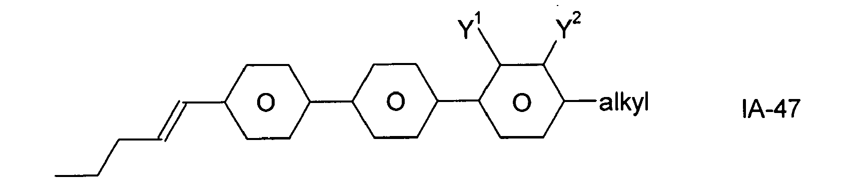 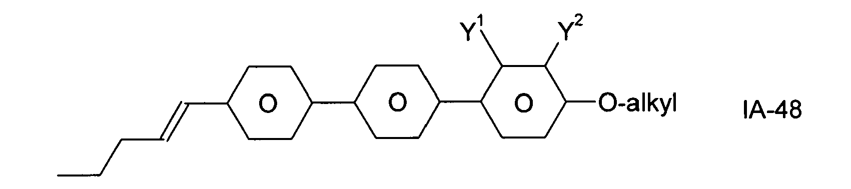 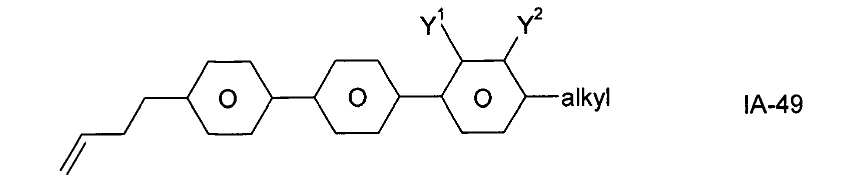 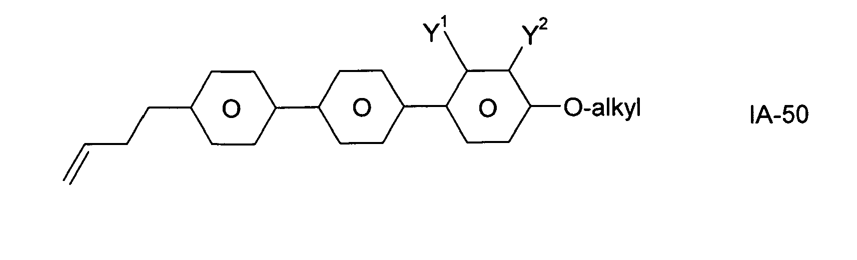 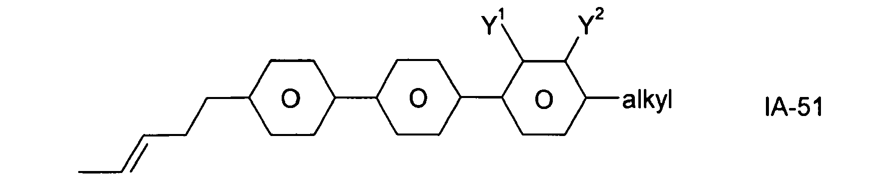 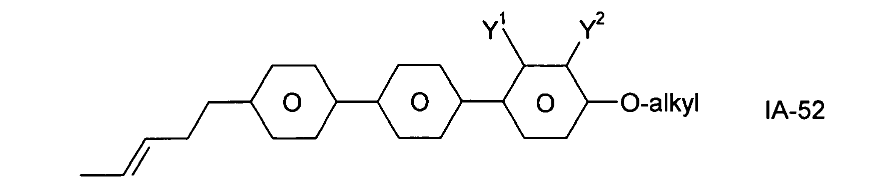 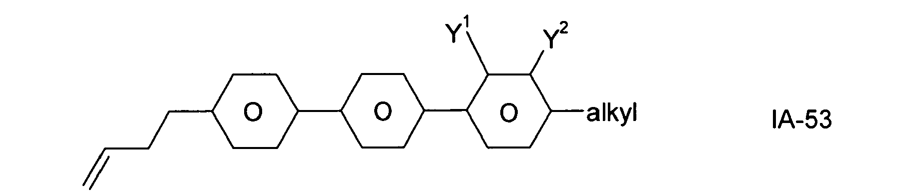 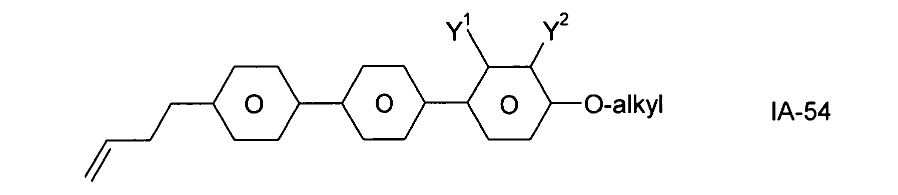 dans lesquelles Y¹ et Y² présentent les significations indiquées selon la revendication 1, et alkyle représente un radical alkyle en chaîne droite comportant 1-6 atomes de C.

5. Milieu cristallin liquide selon une ou plusieurs des revendications 1 à 4, **caractérisé en ce que** le milieu comprend additionnellement un ou plusieurs composés des formules 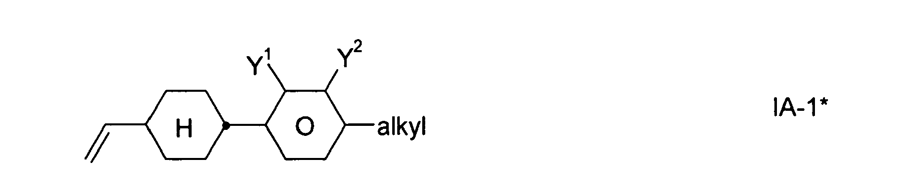 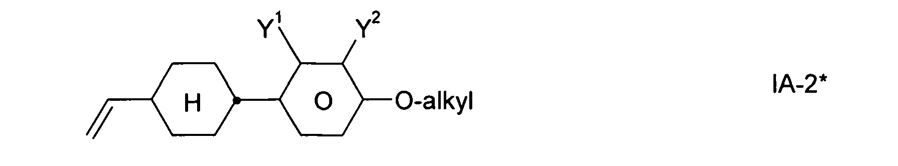 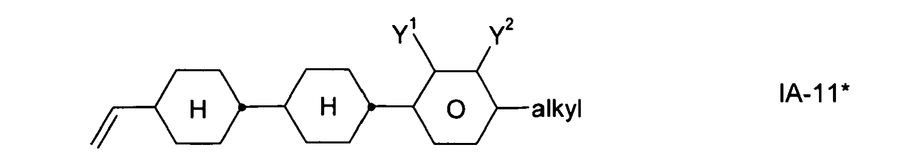 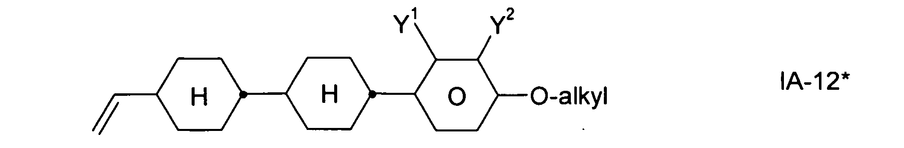 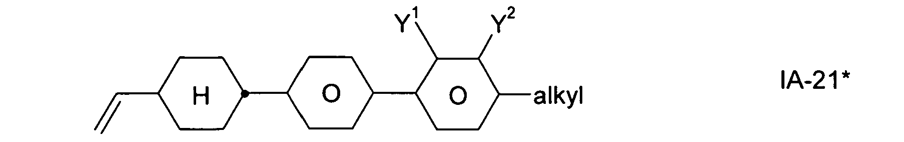 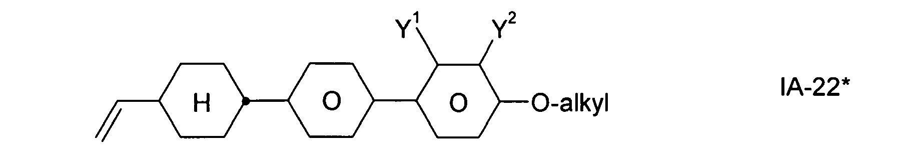 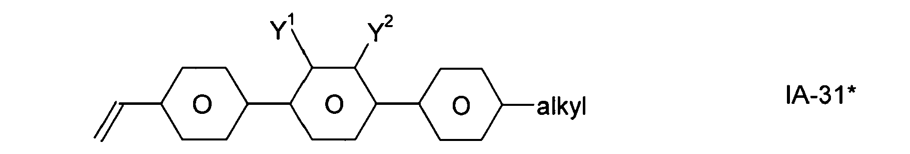 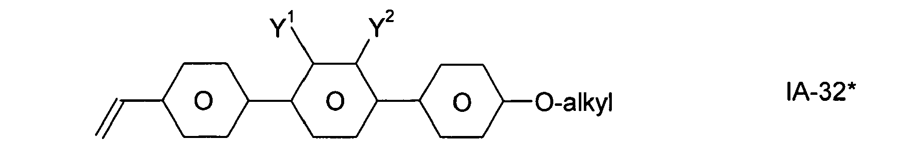 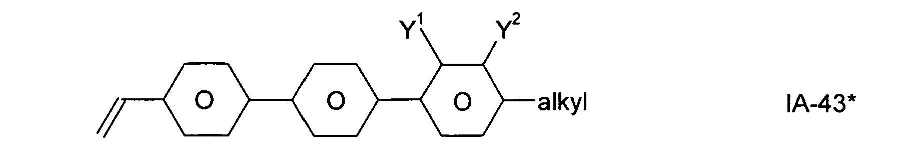 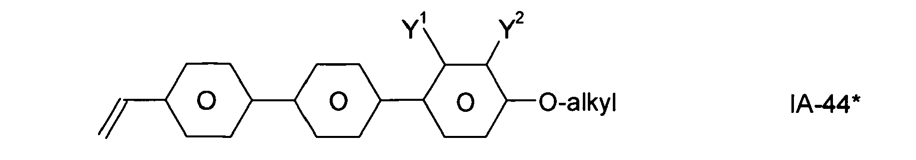 dans lesquelles Y¹ et Y² présentent les significations indiquées selon la revendication 1, et alkyle représente un radical alkyle en chaîne droite 1-6 atomes de C.

6. Milieu cristallin liquide selon une plusieurs des revendications 1 à 5, **caractérisé en ce que** le milieu comprend un ou plusieurs composés des formules

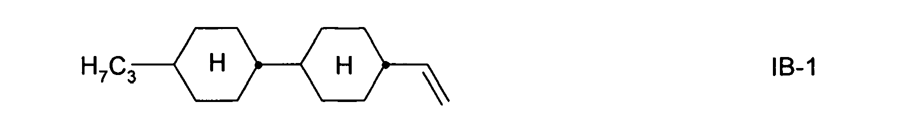

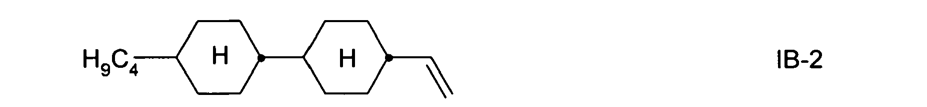

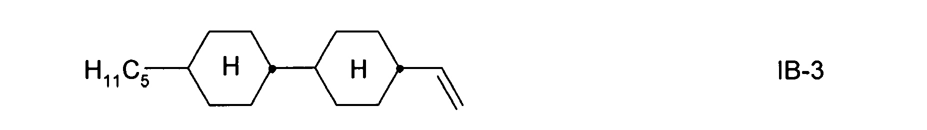

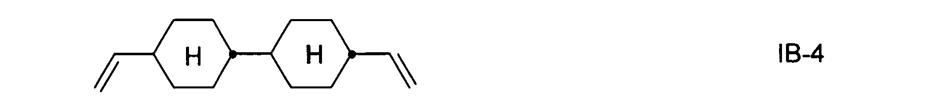

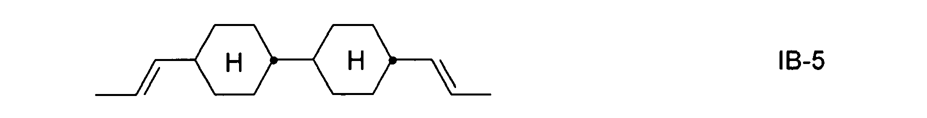

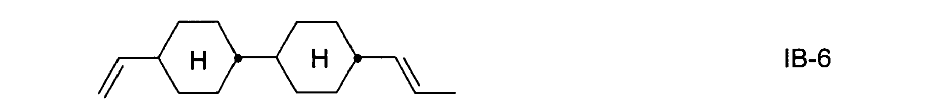

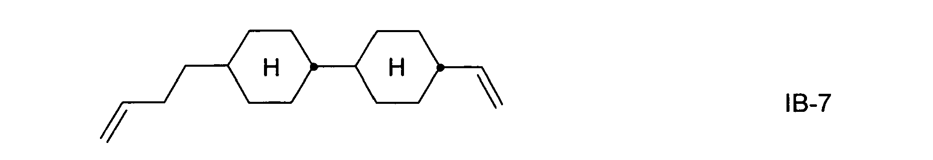

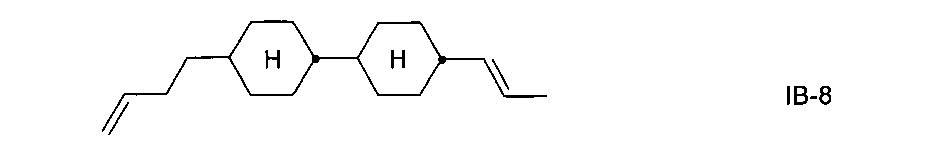

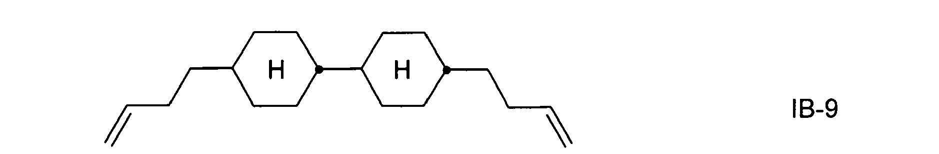

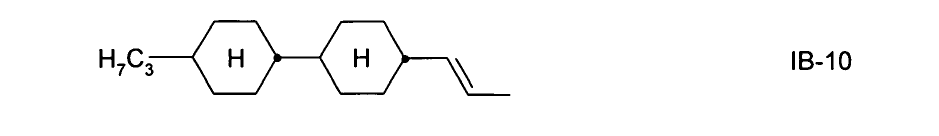

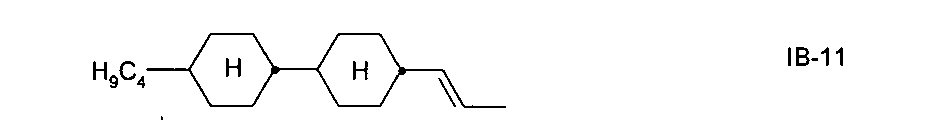

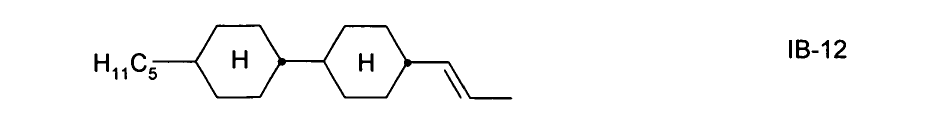

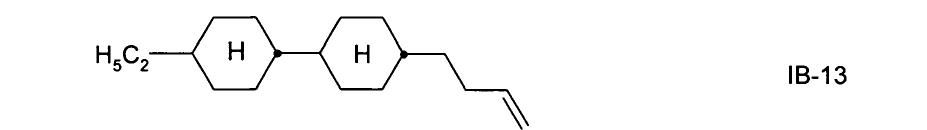

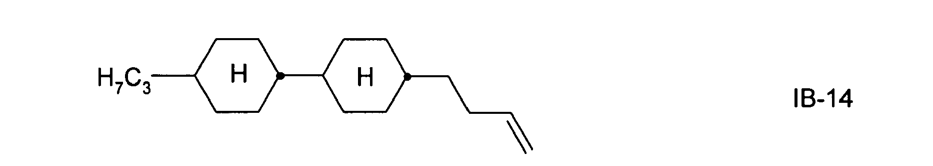

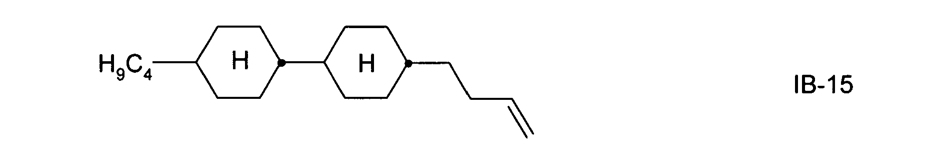

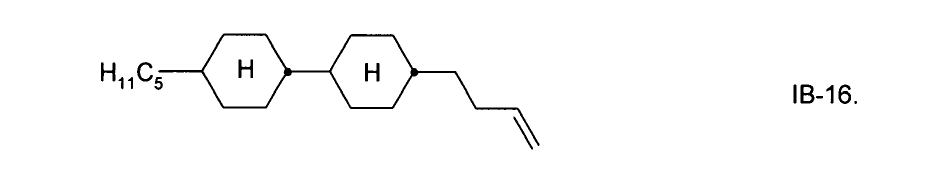

7. Milieu cristallin liquide selon une ou plusieurs des revendications 1 à 6, **caractérisé en ce que** le milieu comprend additionnellement un ou plusieurs composés des formules IC-1 à IC-16, 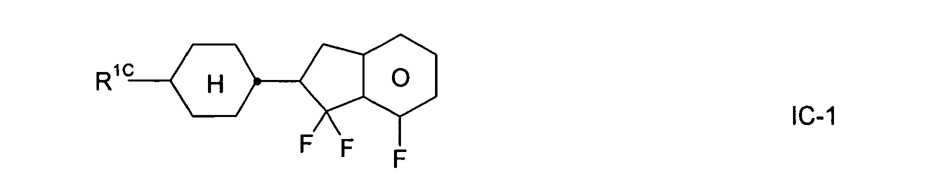 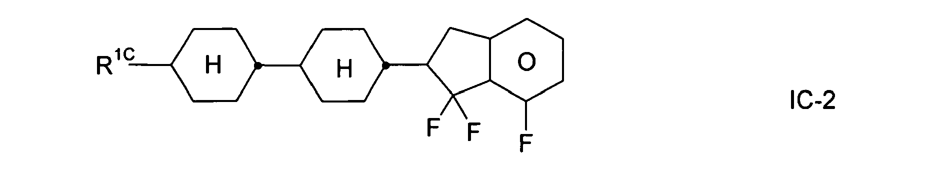 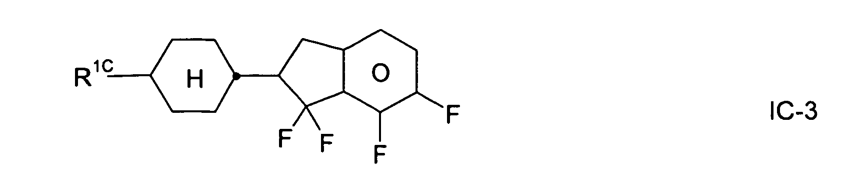 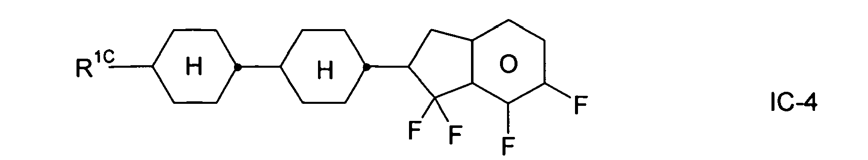 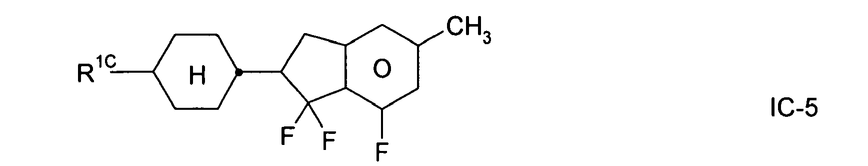 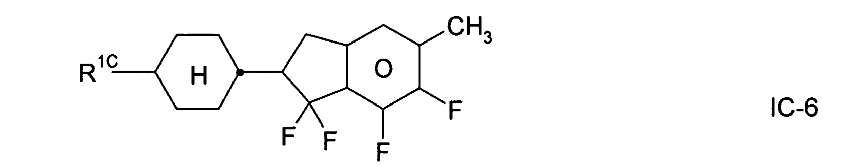 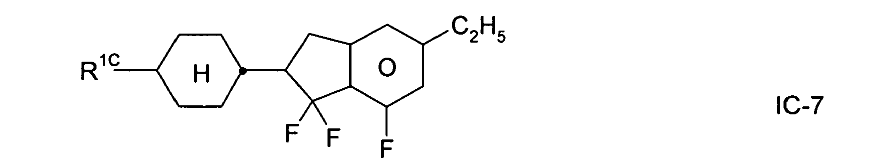 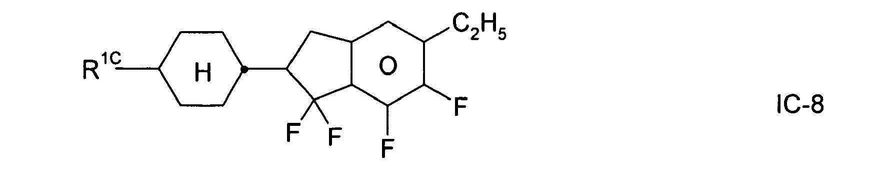 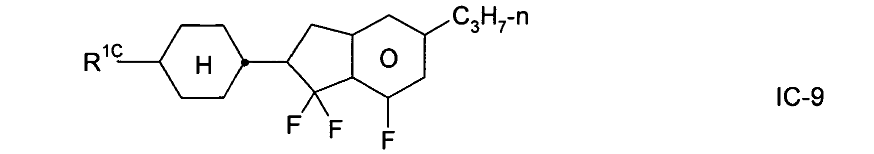 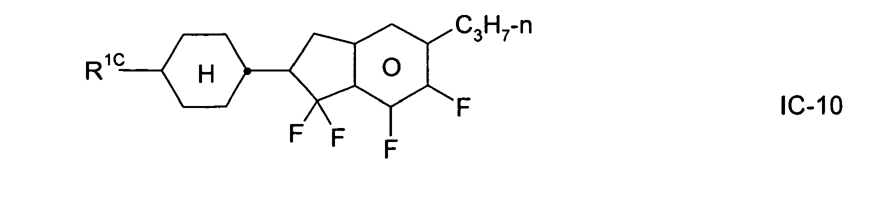 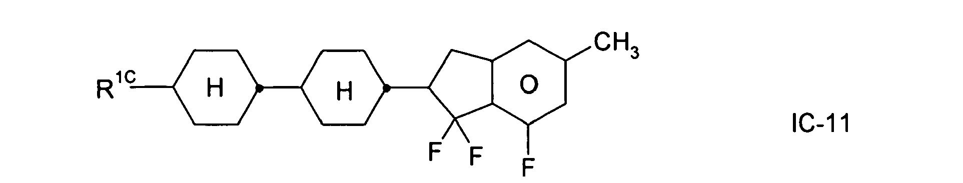 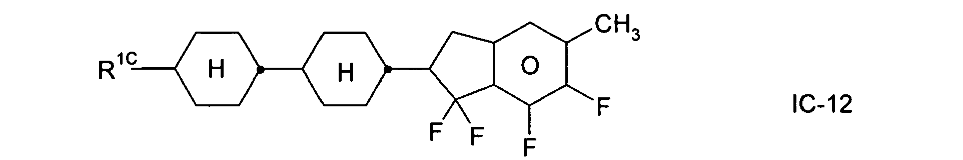 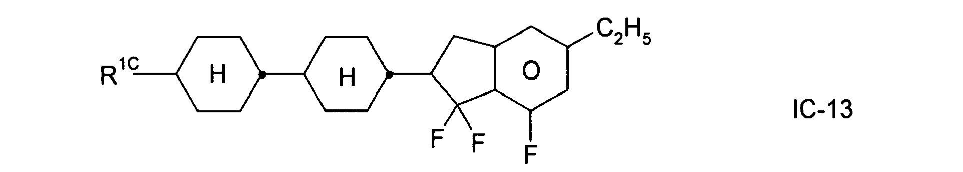 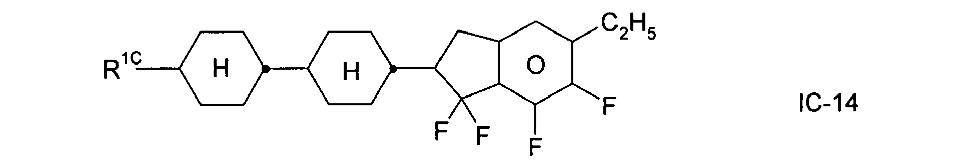 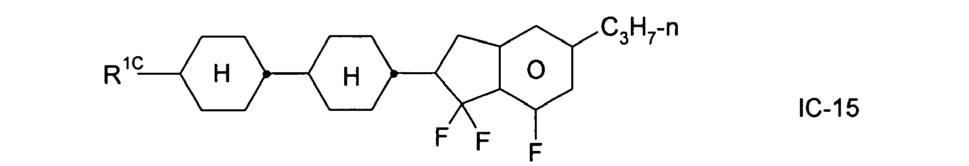 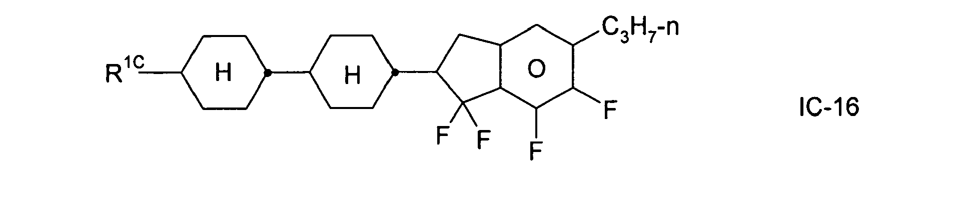 dans lesquelles R^{1C} présente les significations indiquées selon la revendication 1.

8. Milieu cristallin liquide selon une ou plusieurs des revendications 1 à 7, **caractérisé en ce que** le milieu comprend additionnellement un ou plusieurs composés des formules ID-1 à ID-6, 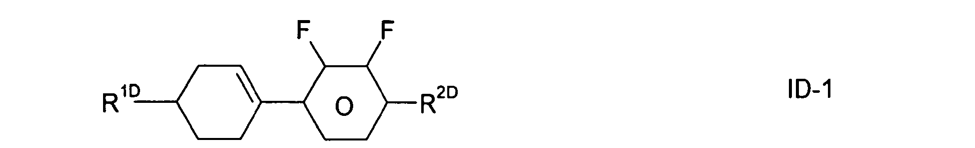 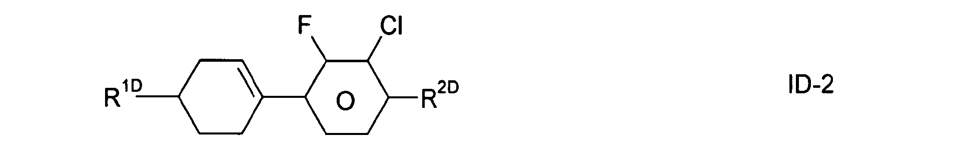 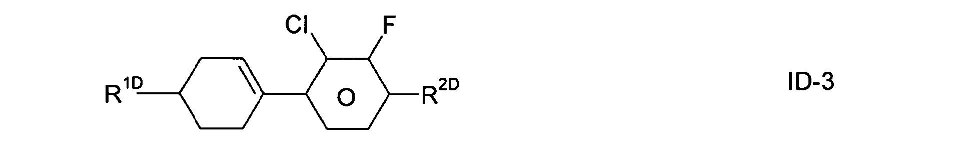 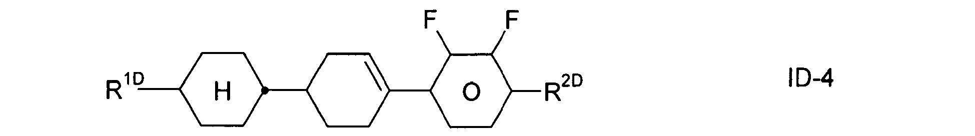 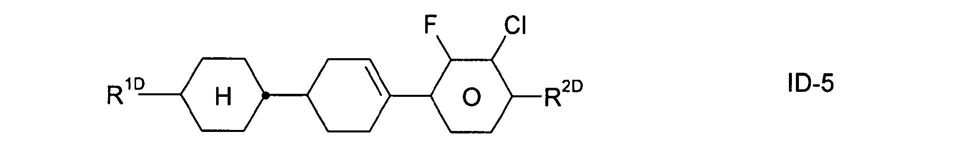 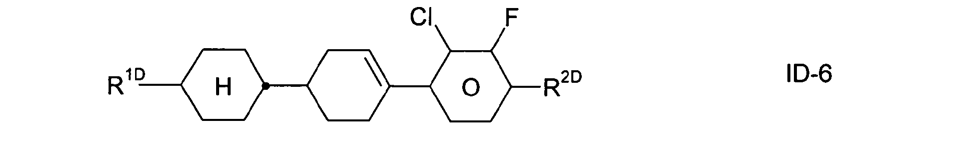 dans lesquelles R^{1D} et R^{2D} présentent les significations indiquées selon la revendication 1.

9. Milieu cristallin liquide selon une ou plusieurs des revendications 1 à 8, **caractérisé en ce qu'**il comprend un ou plusieurs composés des formules IIA et/ou IIB, 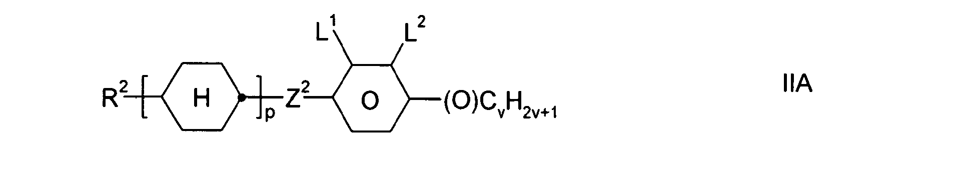 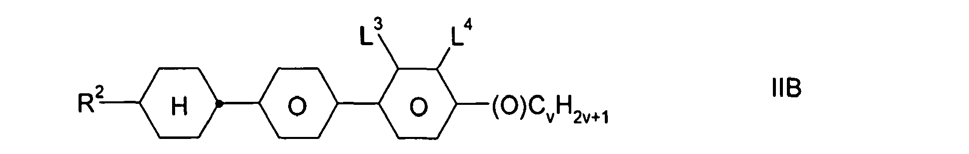 dans lesquelles
R² représente H, un radical alkyle comportant jusqu'à 15 atomes de C, lequel est non substitué, monosubstitué par CN ou CF₃ ou au moins monosubstitué par halo- gène, où, en outre, un ou plusieurs groupes CH₂ dans ces radicaux peut/peuvent être remplacé(s) par -O-, -S-, 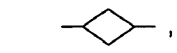 -C≡C-, -CF₂O-, -OCF₂-, -OC-O- ou -O-CO- de telle sorte que des atomes de O ne soient pas liés directement les uns aux autres,
L¹⁻⁴ représentent, chacun indépendamment des autres, F ou Cl,
Z² représente une liaison simple, -CH₂CH₂-, -CH=CH-, -CF₂O-, -OCF₂-, -CH₂O-, -OCH₂-, -COO-, -OCO-, -C₂F₄-, -CF=CF-,
p représente 1 ou 2, et
v représente 1 à 6.

10. Milieu cristallin liquide selon une ou plusieurs des revendications 1 à 9, **caractérisé en ce qu'**il comprend au moins un composé des formules O-1 à O-13, 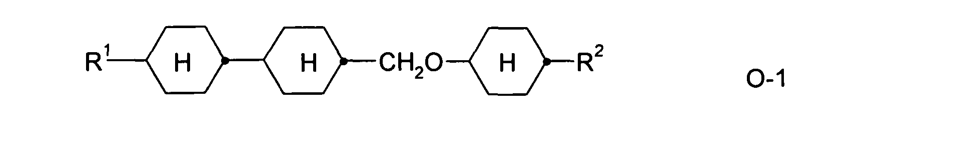 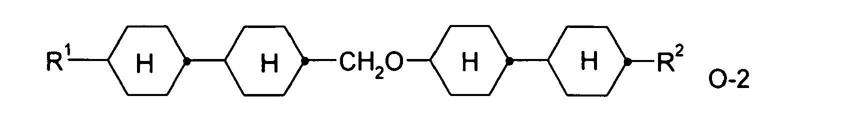 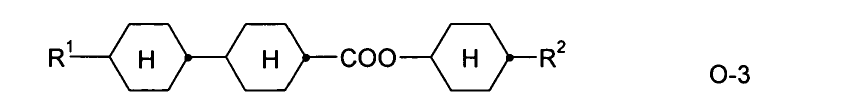 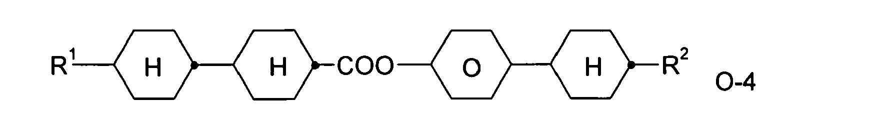 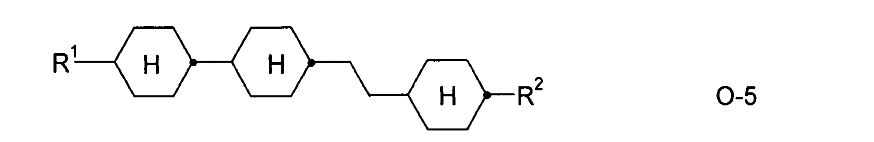 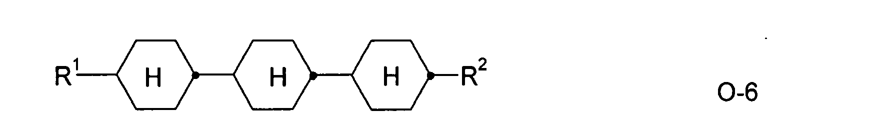 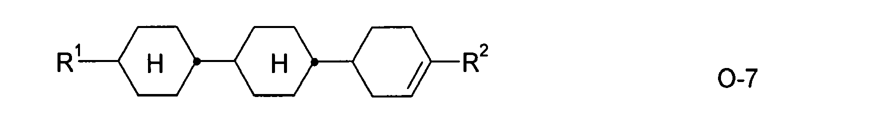 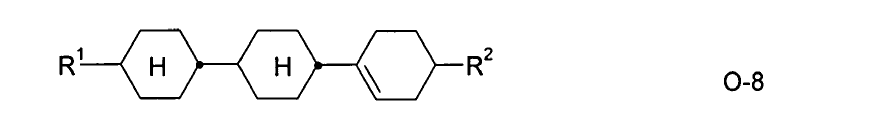 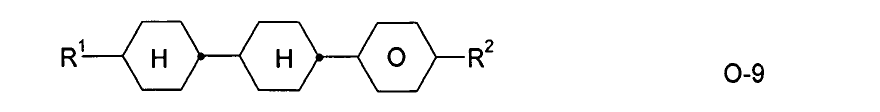 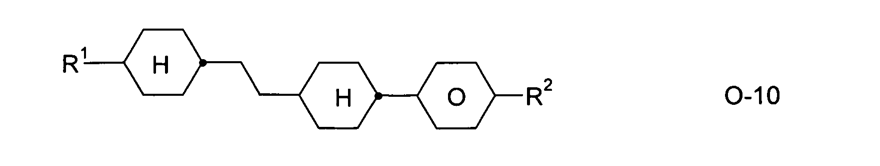 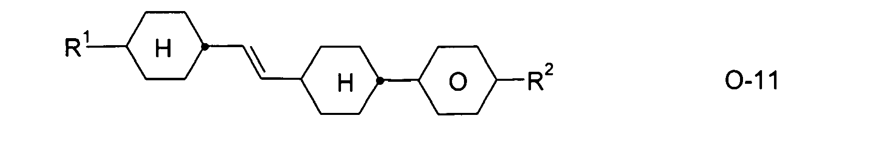 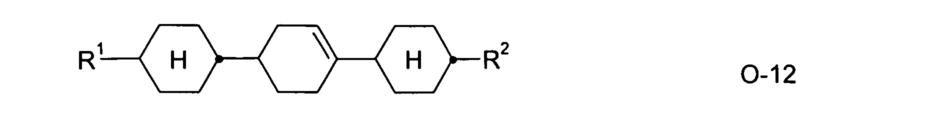 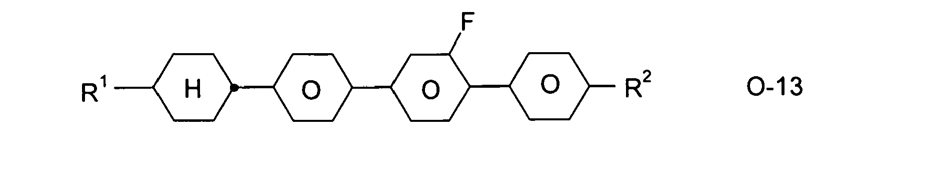 dans lesquelles R¹ et R² présentent les significations indiquées pour R^{2A} selon la revendication 1.

11. Procédé pour la préparation d'un milieu cristallin liquide selon une ou plusieurs des revendications 1 à 10, **caractérisé en ce qu'**au moins un ou plusieurs composés de la formule IA est/sont mélangé(s) avec au moins un ou plusieurs composés choisi(s) parmi le groupe des composés des formules IB, IC et ID, et d'autres composés cristallins liquides et/ou additifs sont en option ajoutés.

12. Affichage électro-optique comportant un adressage par matrice active basé sur ECB, PALC, FFS ou l'effet IPS, **caractérisé en ce qu'**il contient, en tant que diélectrique, un milieu cristallin liquide selon une ou plusieurs des revendications 1 à 10.
